(19) Europäisches Patentamt
European Patent Office
Office européen des brevets

(11) **EP 3 244 987 B1**

(12) **EUROPEAN PATENT SPECIFICATION**

(45) Date of publication and mention
of the grant of the patent:
**22.06.2022 Bulletin 2022/25**

(21) Application number: **15702329.2**

(22) Date of filing: **15.01.2015**

(51) International Patent Classification (IPC):
***B01D 53/14*** (2006.01)

(52) Cooperative Patent Classification (CPC):
**B01D 53/1487; B01D 53/1493;** B01D 2252/30;
B01D 2256/16; B01D 2256/20; B01D 2256/24;
B01D 2256/245; B01D 2257/304; B01D 2257/504;
B01D 2257/7022; B01D 2258/05

(86) International application number:
**PCT/US2015/011558**

(87) International publication number:
**WO 2016/114780 (21.07.2016 Gazette 2016/29)**

(54) **SEPARATIONS WITH IONIC LIQUID SOLVENTS**

TRENNUNGEN MIT IONISCHEN FLÜSSIGEN LÖSUNGSMITTELN

SÉPARATIONS À L'AIDE DE SOLVANTS LIQUIDES IONIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2017 Bulletin 2017/47**

(73) Proprietors:
• **Chevron Phillips Chemical Company LP**
**The Woodlands, Texas 77380 (US)**
• **Chevron U.S.A. Inc.**
**San Ramon, California 94583 (US)**

(72) Inventors:
• **JI, Lei**
**Kingwood, Texas 77345 (US)**
• **CHANG, Ai-fu**
**Humble, Texas 77396 (US)**
• **DRIVER, Michael Sean**
**Oakland, California 94619 (US)**
• **TIMKEN, Hye-Kyung Cho**
**Albany, California 94700 (US)**

(74) Representative: **Haseltine Lake Kempner LLP**
**Redcliff Quay**
**120 Redcliff Street**
**Bristol BS1 6HU (GB)**

(56) References cited:
EP-A1- 2 016 991          WO-A1-2015/013076
US-A1- 2002 063 240      US-A1- 2002 189 444
US-A1- 2008 112 866

**Description**

FIELD

The disclosure relates to the separation of one or more gaseous components from a process stream using an ionic liquid solvent.

BACKGROUND

There are many process streams in commercial processing facilities, including facilities in the chemical, petrochemical, polymerization, oil, and gas industries, which contain two or more fluid components. Examples of process streams containing two or more fluid components include: polymerization process streams, ethane cracker process streams, natural gas process streams, syngas process streams, biomass gasification process streams, Fischer-Tropsch process streams, alkane dehydrogenation process streams, and alcohol dehydration process streams. Sometimes it is desirable to separate the fluid components of a process stream so as to "upgrade" the process stream and/or to recover a fluid component of value.

Separation techniques include conventional distillation, absorption using ionic liquid membranes, and absorption using aqueous solutions of metal salts. Distillation requires a large number of stages and/or high reflux ratios when fluid components have close boiling points and can be cost-prohibitive. Ionic liquid membranes are limited by membrane diffusion rates and can have poor flux or require significant capital expenditure for commercial applications. The water in an aqueous solution of metal salts has a significant vapor pressure which makes recovery of the separated component from the aqueous solution inefficient (e.g., water is typically carried with the component after the component is separated from the aqueous solution, requiring de-watering).

There is an ongoing need for improved separation techniques for process streams in commercial processing facilities.

US 2002/0063240 A1 describes separation of olefins from paraffins using ionic liquid solutions.

US 2002/0189444 A1 describes purification of gas with liquid ionic compounds.

US 2008/0112866 A1 describes functionalized ionic liquids and methods of use thereof.

EP 2 016 991 A1 describes processes for separation of gases using ionic liquids.

SUMMARY

The present invention provides a method as set out in claim 1.

Desribed herein is a method comprising providing a process stream comprising a gaseous component; capturing at least a portion of the gaseous component from the process stream by an ionic liquid solvent; and recovering at least a portion of a captured gaseous component from the ionic liquid solvent. Optionally, at least a portion of a second gaseous component from the process stream is captured by the ionic liquid solvent, and the method further comprises recovering at least a portion of the second gaseous component from the ionic liquid solvent. Optionally, at least a portion of a second gaseous component from the process stream is uncaptured by the ionic liquid solvent, and the method further comprises recovering at least a portion of the uncaptured second gaseous component from a membrane unit.

Also described herein is a system comprising a process stream comprising a gaseous component; a separator comprising an ionic liquid solvent, wherein the separator receives the process stream, wherein the ionic liquid solvent captures at least a portion of the gaseous component; a captured stream exiting the separator and comprising the captured gaseous component captured in the ionic liquid solvent; and a regenerator to receive the captured stream, wherein the regenerator regenerates the ionic liquid solvent and emits the recovered gaseous component. Optionally, the ionic liquid solvent further captures at least a portion of a second gaseous component from the process stream, the captured stream further comprises the captured second gaseous component, and the regenerator emits the recovered second gaseous component. Optionally, the ionic liquid solvent does not capture at least a portion of a second gaseous component from the process stream, and the system further comprises an uncaptured stream exiting the separator and comprising the uncaptured second gaseous component. The system may further comprise a membrane unit to recover the second gaseous component.

The foregoing has outlined rather broadly the features and technical advantages of the disclosed inventive subject matter in order that the following detailed description may be better understood. The various characteristics described above, as well as other features, will be readily apparent to those skilled in the art upon reading the following detailed description of the preferred embodiments, and by referring to the accompanying drawings.

DESCRIPTION OF THE DRAWINGS

For a detailed description of the preferred embodiments of the disclosed processes and systems, reference will now be made to the accompanying drawings in which:

Figure 1 illustrates a process flow diagram of a system as described herein; and
Figure 2 illustrates a process flow diagram of a system as described herein.
Figure 3 is a graph showing the ionic liquid solvent anion/cation combinations which have total solubility and total selectivity values greater than those values of [emim][Tf$_2$N]-Ag.

DETAILED DESCRIPTION

Described herein are systems and methods related to the separation of one or more gaseous components from a process stream using an ionic liquid solvent, resulting in recovery of the gaseous component, for example, to improve process efficiency (e.g., to avoid recycle of the gaseous component) or for use of the gaseous component (e.g., to avoid wasteful flaring of a valuable gaseous component).

The claimed method comprises providing a polymerization process stream comprising an olefin and an alkane, wherein the olefin is propylene and the alkane is propane.

The embodiments disclosed herein are discussed in the context of a process stream comprising a gaseous component which includes i) an olefin and/or an alkane, or ii) an acid gas (e.g., CO$_2$ and/or H$_2$S). The polymerization process stream provided in the claimed method comprses an olefin and an alkane, wherein the olefin is propylene and the alkane is propane.

"Gaseous component" may refer to an olefin, an alkane, an acid gas, one or more components of a natural gas process stream, one or more components of a syngas process stream, hydrogen, nitrogen, oxygen, water, carbon monoxide, oxygenates (e.g., alcohols), or combinations thereof.

"Olefin" may refer to a C$_2$-C$_{50}$ hydrocarbon having a carbon-carbon double bond. Suitable olefins may include other functional groups, such as hydroxy groups, carboxylic acid groups, heteroatoms, and the like, provided that such groups do not react with the ionic liquid solvent. Embodiments disclosed herein are described using ethylene as the olefin.

"Alkane" may refer to C$_2$-C$_{50}$ hydrocarbons which are saturated. Embodiments disclosed herein are described using ethane and/or isobutane.

"Acid gas" may refer to CO$_2$, H$_2$S, RSH, CS$_2$, COS, and SO$_2$, or combinations thereof. Embodiments disclosed herein are described using CO$_2$ and H$_2$S.

Various abbreviations are used herein. The following is a list for chemical groups used to identify components of the ionic liquid solvents disclosed herein:

m - methyl; e - ethyl; pr - propyl; b - butyl; pn - pentyl; hx - hexyl; hp - heptyl; o - octyl; n - nonyl; d - decyl; hexad - hexadecyl; OH - hydroxyl; OHe - ethanol; ph - phenyl; meO - methoxy; etO - ethyoxy; DMA - dimethylacetyl; im - imidazolium; py - pyridinium; pyr - pyrrolidinium; N - ammonium; P - phosphonium; choline - N,N,N-trimethylethanolammonium; BF$_4$ - tetrafluoroborate; Tf$_2$N - bis(trifluoromethylsulphonylimide) or bis(trifluoromethanesulphonylimide); CH$_3$CO$_2$ - acetate; CH$_3$SO$_3$ - methanesulfonate; PF$_6$ - hexafluorophosphate; TFA - trifluoroacetate; TfO - trifluoromethanesulfonate; NO$_3$ - nitrate; CH$_3$SO$_4$ - methylsulfate; DCA - dicyanamide; SCN - thiocyanate; SO$_3$ - sulfonate.

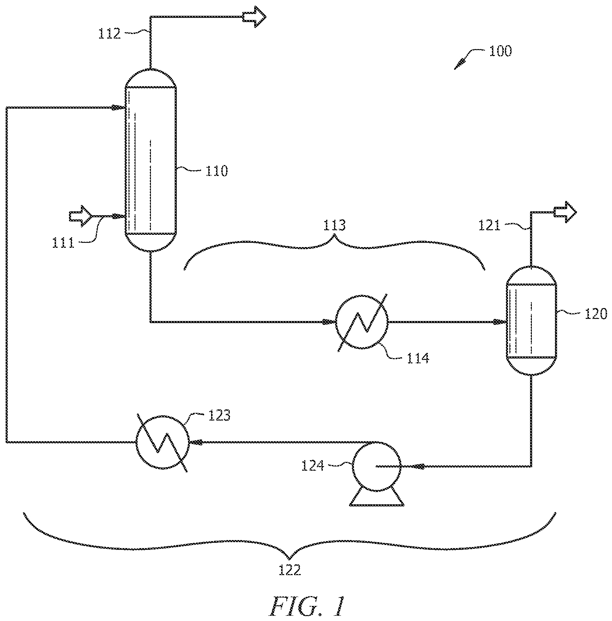

Figure 1 shows a process flow diagram of an embodiment of the disclosed system 100. The system 100 may comprise a separator 110 and a regenerator 120. A process stream 111 comprising a gaseous component (optionally, a second gaseous component) may feed to the separator 110, which receives the process stream 111. The separator 110 may comprise an ionic liquid solvent, and the ionic liquid solvent may capture at least a portion of the gaseous component (optionally, at least a portion of the second gaseous component). A captured stream 113 comprising the gaseous component (optionally, the second gaseous component) captured by the ionic liquid solvent may exit from the separator 110 and flow to the regenerator 120, and the regenerator 120 may receive the captured stream 113. A portion of the process stream 111 which is not captured by the ionic liquid solvent in the separator 110 may exit the separator 110 and flow through uncaptured stream 112 for further processing, use, sale, flare, etc. The regenerator 120 may regenerate the ionic liquid solvent and emit the recovered gaseous component (optionally, recovered second gaseous component). The recovered gaseous component (optionally, recovered second gaseous component) may flow via stream 121 from the regenerator 120 for further processing, use, sale, etc. The regenerated ionic liquid solvent may flow from the regenerator 120 to the separator 110 through solvent stream 122. The ionic liquid solvent may generally circulate through a solvent circulation system comprising the separator 110, captured stream 113, the regenerator 120, and the solvent stream 122. The captured stream 113 may comprise a heater 114 capable of heating the captured stream 113 as the captured gaseous component (optionally, captured second gaseous component) flows to the regenerator 120. The solvent stream 122 may comprise a cooler 123 capable of cooling the solvent stream as the regenerated ionic liquid solvent flows to the separator 110, and a pump 124 for providing a motive force for flowing the regenerated ionic liquid solvent. The system 100 may further comprise one or more compressors, pumps, heat exchangers, valves, control devices, safety devices, or similar apparatuses, not shown in Figure 1. Such apparatuses may be included in system 100 according to techniques recognized by one skilled in the art with the aid of this disclosure.

The polymerization process stream provided in the claimed method comprses an olefin and an alkane, wherein the olefin is propylene and the alkane is propane. Described herein are embodiments in which the gaseous component of the process stream 111 may comprise ethylene, isobutane, or an acid gas (e.g., $CO_2$ and/or $H_2S$). In additional embodiments, the second gaseous component of the process stream 111 may comprise ethylene, isobutane or an acid gas (e.g., $CO_2$ and/or $H_2S$). As described above, the process stream 111 may comprise a second gaseous component, and the ionic liquid solvent may capture at least a portion of the second gaseous component. In embodiments, the capture of at least a portion of the second gaseous component is in addition to the capture of at least a portion of the gaseous component. In an embodiment, the gaseous component comprises ethylene and the second gaseous component comprises isobutane. In an alternative embodiment, the gaseous component comprises carbon dioxide, and the second gaseous component comprises hydrogen sulfide.

In an embodiment, the ionic liquid solvent may capture at least a portion of the gaseous component; additionally or alternatively, the ionic liquid solvent may capture at least a portion of the second gaseous component; additionally or alternatively, the ionic liquid solvent may not capture at least a portion of the second gaseous component.

In embodiments, the ionic liquid solvent may capture the gaseous component and/or the second gaseous component via various mechanisms of capture. In an embodiment, at least a portion of the gaseous component is captured by the ionic liquid solvent via absorption, dissolution, adsorption, complexation, or combinations thereof. In an additional embodiment, at least a portion of the second gaseous component is captured by the ionic liquid solvent via absorption, dissolution, adsorption, complexation, or combinations thereof. In embodiments, the mechanism of capture of the gaseous component is the same as the mechanism of capture for the second gaseous component. For example, the gaseous component and the second gaseous component may both be captured via absorption, adsorption, dissolution, or complexation. In an alternative embodiment, the mechanism of capture of the gaseous component is different than the mechanism capture for the second gaseous component. For example, the gaseous component may be captured via absorption and the second gaseous component may be captured via adsorption or dissolution. In another example, the gaseous component may be captured via absorption with complexation and the second gaseous component may be captured via absorption without complexation.

In embodiments, the process stream 111 may further comprise other fluid components such as other gaseous components. Other gaseous components of the process streams 111 may include hydrogen, nitrogen, ethane, natural gas, syngas, or combinations thereof.

In embodiments, the concentration of the gaseous component and/or the second gaseous component in the process stream 111 may comprise greater than about 10%, 20%, 30%, 40%, 50%, 60%, 70%, 80%, 90%, or greater by weight of the process stream 111.

In embodiments, the separator 110 may comprise a vessel configured to flow the ionic liquid solvent therethrough so as to selectively capture (e.g., absorb, adsorb, dissolve, complex, or combinations thereof) at least a portion of the gaseous component (optionally, a second gaseous component) from the process stream 111 comprising the gaseous component (optionally, the second gaseous component) and one or more other fluid (e.g., gaseous) components.

In an embodiment, the separator 110 may be configured to dissipate a gas (e.g., gaseous component, optionally second gaseous component, of process stream 111) within the ionic liquid solvent, for example, by bubbling the gas through the liquid. In an embodiment, the separator 110 may include a solvent circulation system configured to circulate the ionic liquid solvent through the separator 110. Non-limiting examples of suitable separator configurations include an absorption tower; a pressure-swing absorber (PSA); a sparger tank; an agitation reactor; a vessel coupled with one or more compressors, one or more pumps 124, and one or more heat exchangers (e.g., heater 114, cooler 123); or combinations thereof. An example of a suitable separator is illustrated in Gas Processors Association, Engineering Data Book 10th ed., at Figure 19-16.

In an additional and/or alternative embodiment, the separator 110 may comprise a packed bed or column configured to maintain smaller bubble sizes (e.g., of the gas being dissipated within the ionic liquid solvent), for example, so as to maintain a relatively large surface area of contact between the gas and the ionic liquid solvent, for example, so as to maintain an efficiency of mass transfer and/or capture of the gas into the liquid. In an embodiment, the packing material of the packed bed or column may comprise a polymeric material, metallic material, or combinations thereof. In an embodiment, the separator 110 may have multiple packed beds or columns. In an embodiment, one or more sections of the separator 110 may have a packing material. In embodiments, the packing material may have a random packing or may have a structured packing.

In embodiments, the separator 110 may comprise two or more sections. For example, a first section may operate at a first set of conditions (e.g., temperature, pressure, flow rate, mass flow ratio), and a second section may operate at a second set of conditions (e.g., temperature, pressure, flow rate, mass flow ratio).

In embodiments, the separator 110 may function at times to capture, and at other times to uncapture, the gaseous component (optionally, second gaseous component). That is, the separator 110 may also function as a regenerator. In such embodiments, the temperature and pressure at which the separator 110 operates may depend upon the function. For example, the temperature and pressure of the separator 110 when operating to capture the gaseous component (optionally, second gaseous component) may be those disclosed herein for capturing the gaseous component (optionally, the second gaseous component). The temperature and pressure of the separator 110 when operating to liberate the gaseous component (optionally, the second gaseous component) may be those disclosed herein for the regenerator 120. In such embodiments, the separator 110 may additionally or alternatively be configured to evacuate one or more gases (e.g., a previously captured and then liberated gas, such as olefin, acid gas, alkane) and/or to facilitate the release of the captured gas via a pressure differential.

In embodiments, the separator 110 may be configured to provide or maintain a suitable partial pressure of a gaseous component of the process stream 111. Such a suitable partial pressure may be about 14.8 psia (102 kPa) to about 57.7 psia (398 kPa); alternatively, about 19.7 psia (136 kPa) to about 47.7 psia (329 kPa); alternatively, about 19.7 psia (136 kPa) to about 29.7 psia (205 kPa). In an embodiment, the separator 110 may be configured to provide or maintain an ethylene partial pressure from about 0 psia (0 kPa) to about 100 psia (689 kPa).

In an embodiment, the separator 110 may be configured for batch and/or continuous operation.

In embodiments, the system 100 may comprise two or more separators (e.g., separator 110 and one or more other separators). For example, the system 100 may comprise two separators, each of which may be configured according to one of the embodiments disclosed herein. Embodiments having two or more separators may be configured for pressure swing absorption (PSA) of the gaseous component (optionally, the second gaseous component). For example, by employing two or more separators, the system 100 may be configured to allow for continuous operation by absorbing the gaseous component (optionally, the second gaseous component) into a "first batch" in the first separator while a "second batch" is prepared for absorption in a second separator. As such, by cycling between two or more suitable separators, a system may operate continuously. An example of a system having two or more separators is disclosed in U.S. Patent Application Publication No. 2012/0232232, published on September 13, 2012, entitled "Ethylene Recovery By Absorption,".

In embodiments, the separator 110 may be configured to have a liquid-to-gas mass flow ratio from about 1 to about 350; alternatively, from about 1 to about 200; alternatively, from about 10 to about 200; alternatively, from about 10 to about 100. In embodiments, the liquid-to-gas mass flow ratio of the separator 110 may comprise a value such that at least a portion of the gaseous component is captured by the ionic liquid solvent. In additional or alternative embodiments, the liquid-to-gas mass flow ratio of the separator 110 may comprise a value such that at least a portion of the gaseous component and at least a portion of a second gaseous component are captured by the ionic liquid solvent. Generally, a mass flow ratio which captures at least a portion of the gaseous component and at least a portion of the second gaseous component is greater than a mass flow ratio which captures only at least a portion of the gaseous component. In embodiments, a mass flow ratio which captures at least a portion of the gaseous component and at least a portion of the second gaseous component is substantially greater (e.g., about 2 times, about 3 times, about 4 times, about 5 times, about 6 times, about 7 times, about 8 times, about 9 times, about 10 times, about 11 times, about 12 times, about 13 times, about 14 times, about 15 times, or more) than a mass flow ratio which captures only at least a portion of the gaseous component. In an embodiment, the "liquid" of the liquid-to-gas mass flow ratio may comprise the ionic liquid solvent; alternatively, the "liquid" of the liquid-to-gas mass flow ratio may comprise the ionic liquid solvent and any combination of other liquids flowing in and/or through the separator 110; alternatively, the "liquid" of the liquid-to-gas mass flow ratio may comprise the ionic liquid solvent and any combination of other liquids flowing in and/or through the solvent circulation system. In an embodiment, the "gas" of the liquid-to-gas mass flow ratio may comprise the gaseous component of the process stream 111; alternatively, the "gas" of the liquid-to-gas mass flow ratio may comprise the gaseous component and the second gaseous component of the process stream 111; alternatively, the "gas" of the liquid-to-gas mass flow ratio may comprise the any combination of gases flowing in and/or through the process stream 111 and/or the separator 110 (e.g., from the process stream 111, from all streams flowing into the separator 110, or from a combination of streams flowing into the separator 110).

In embodiments where the separator 110 comprises two or more sections, the two or more sections may operate at the same or different liquid-to-gas mass flow ratio. For example, a first section of the separator 110 may operate at a first liquid-to-gas mass flow ratio and a second section may operate at a second liquid-to-gas mass flow ratio, wherein the first liquid-to-gas mass flow ratio is different than the second liquid-to-gas mass flow ratio.

In an embodiment, the separator 110 may be capable of selectively inducing thermal and/or pressure fluctuations, variations, or cycles. For example, the separator 110 may cycle between temperatures and pressures for capturing the gaseous component (optionally, second gaseous component) and for uncapturing the gaseous component (optionally, second gaseous component).

In embodiments, a temperature or temperatures at which the separator 110 operates may depend upon the function of the separator 110 at a given time. For example, the separator 110 may be configured to provide or maintain a first temperature (e.g., one or more of those disclosed for operation of the separator 110) for the purpose of capturing the gaseous component (optionally, second gaseous component), and the separator 110 may be configured to provide or maintain a second temperature (e.g., one or more of those disclosed for operation of the regenerator 120) for the purpose of regenerating the ionic liquid solvent, recovering the recovered gaseous component (optionally, second recovered gaseous component), or both.

In embodiments where the separator 110 operates to capture the gaseous component (optionally, second gaseous component), the separator 110 may operate at a temperature from about 5°C to about 50 °C; alternatively, from about 20 °C to about 40 °C. In embodiments wherein the separator 110 operates to uncapture (i.e., liberate) the gaseous component (optionally, the second gaseous component), the separator 110 may operate at a temperature from about 60 °C to about 450 °C, at a temperature greater than the temperature of the separator 110 when functioning in the capturing mode, or both.

In embodiments, a pressure or pressures at which the separator 110 operates may depend upon the function of the separator 110 at a given time. For example, the separator 110 may be configured to provide or maintain a first pressure (e.g., one or more of those disclosed for operation of the separator 110) for the purpose of capturing the gaseous component (optionally, second gaseous component), and the separator 110 may be configured to provide or maintain a second pressure (e.g., one or more of those disclosed for operation of the regenerator 120) for the purpose of regenerating the ionic liquid solvent, recovering the recovered gaseous component (optionally, second recovered gaseous component), emitting the recovered gaseous component (optionally, second recovered gaseous component), or combinations thereof.

In embodiments wherein the separator 110 operates to capture the gaseous component (optionally, the second gaseous component), the separator 110 may operate at a pressure from about 100 psia (689 kPa) to about 250 psia (1.7 MPa). In embodiments wherein the separator 110 operates to uncapture (i.e., liberate) the gaseous component (optionally, the second gaseous component), the separator 110 may operate at a pressure greater than or equal to about 14.7 psia (101 kPa), at a pressure less (e.g., 20 psi (140 kPa) less) than the pressure at which the separator 110 operates when capturing the gaseous component (optionally, second gaseous component), or both.

In embodiments, the ionic liquid solvent may generally comprise a cation, an anion, a Ag(I) salt, a Cu(I) salt, or combinations thereof. In an embodiment, the ionic liquid solvent may be capable of reversibly complexing, may be capable of absorbing, may be capable of adsorbing, may be capable of dissolving, or combinations thereof, at least a portion of the gaseous component of the process stream 111. In additional or alternative embodiments, the ionic liquid solvent may be capable of reversibly complexing, may be capable of absorbing, may be capable of adsorbing, may be capable of dissolving, or combinations thereof, at least a portion of the second gaseous component of the process stream 111.

In an embodiment, the ionic liquid solvent may comprise a liquid phase at 14.7 psia (101 kPa) and 25 °C. In an embodiment, the ionic liquid solvent may be referred to as a room temperature ionic liquid ("RTIL"). Ionic liquid solvents disclosed herein may comprise a negligible vapor pressure at operating conditions of the disclosed systems, resulting in negligible loss of the ionic liquid solvent during operation. Moreover, use of the ionic liquid solvents disclosed herein reduces VOC emissions.

In embodiments, the ionic liquid solvent may comprise a cation and an anion.

In embodiments, the cation may comprise a butylethylimidazolium cation [beim], a butylmethylimidazolium cation [bmim], a diethylimidazolium cation [eeim], dimethylimidazolium cation [mmim], an ethyl-2,4-dimethylimidazolium cation [e-2,4-mmim], an ethyldimethylimidazolium cation [emmim], an ethylmethylimidazolium [emim] cation, an ethylpropylimidazolium cation [epim], an ethoxyethylmethylimidazolium cation [etO-emim], an ethoxydimethylimidazolium cation [etO-mmim], a heptylmethylimidazolium cation [hpmim], a hexaethylimidazolium cation [hxeim], a hexamethylimidazolium cation [hxmim], a hexadimethylimidazolium cation [hxmmim], a methoxyethylmethylimidazolium cation [meO-emim], a methoxypropylmethylimidazolium cation [meO-prmim], a methylimidazolium cation [mim], dimethylimidazolium cation [mmim], a methylpropylimidazolium cation [mpim], a hydroxylethylmethylimidazolium cation [OH-emim], a hydroxyloctylmethylimidazolium cation [OH-omim], a hydroxylpropylmethylimidazolium cation [OH-prmim], an octylmethylimidazolium cation [omim], an octyldimethylimidazolium cation [ommim], a phenylethylmethylimidazolium cation [ph-emim], a phenylmethylimidazolium cation [ph-mim], a phenyldimethylimidazolium cation [ph-mmim], a pentylmethylimidazolium cation [pnmim], a propylmethylimidazolium cation [prmim], a 1-butyl-2-methylpyridinium cation [1-b-2-mpy], 1-butyl-3-methylpyridinium cation [1-b-3-mpy], a butylmethylpyridinium [bmpy] cation, a 1-butyl-4-dimethylacetylpyridinium cation [1-b-4-DMApy], a 1-butyl-4-methylpyridinium cation [1-b-4-mpy], a 1-ethyl-2-methylpyridinium cation [1-e-2-mpy], a 1-ethyl-3-methylpyridinium cation [1-e-3-mpy], a 1-ethyl-4-dimethylacetylpyridinium cation [1-e-4-DMApy], a 1-ethyl-4-methylpyridinium cation [1-e-4-mpy], a 1-hexyl-4dimethylacetylpyridinium cation [1-hx-4-DMApy], a 1-hexyl-4-methylpyridinium cation [1-hx-4-mpy], a 1-propyl-3-methylpyridinium cation [1-pr-3-mpy], a 1-propyl-4-methylpyridinium cation [1-pr-4-mpy], a butylpyridinium cation [bpy], an ethylpyridinium cation [epy], a heptylpyridinium cation [hppy], a hexylpyridinium cation [hxpy], a hydroxypropylpyridinium cation [OH-prpy], an octylpyridinium cation [opy], a pentylpyridinium cation [pnpy], a propylpyridinium cation [prpy], a butylmethylpyrrolidinium cation [bmpyr], a butylpyrrolidinium cation [bpyr], a hexylmethylpyrrolidinium cation [hxmpyr], a hexylpyrrolidinium cation [hxpyr], an octylpyrrolidinium cation [opyr], a propylmethylpyrrolidinium cation [prmpyr], a butylethyldimethylammonium cation [bemm-N], a butyltrimethylammonium cation [bmmm-N], a N,N,N-trimethylethanolammonium cation [choline], an ethylammonium cation [e-N], a tetraethylammonium cation [eeee-N], a butyldimethylethanolammonium cation [OHe-bmm-N], an ethyldimethylethanolammonium cation [OHe-emm-N], or combinations thereof.

In embodiments, the anion may comprise a bis(trifluoromethanesulfonyl)amide [Tf$_2$N] anion, a hexafluorophosphate [PF$_6$] anion, a trifluoromethanesulfonate [TfO or CF$_3$SO$_3$] anion, a tetrafluoroborate [BF$_4$] anion, a methylsulfate [CH$_3$SO$_4$] anion, a methanesulfonate anion [CH$_3$SO$_3$], a trifluoroacetate anion [TFA or CF$_3$CO$_2$], an acetate anion [CH$_3$CO$_2$], or combinations thereof.

Any of the disclosed cations may be used in combination with any of the disclosed anions.

The ionic liquid solvent omprises butylethylimidazolium tetrafluoroborate ([beim] [BF$_4$]), butylethylimidazolium hexafluorophosphate ([beim][[PF$_6$]), butylethylimidazolium trifluoromethanesulfonate ([beim] [TfO]), butylethylimidazolium nitrate ([beim][NO$_3$]), butylmethylimidazolium trifluoroacetate ([bmim][TFA]), diethylimidazolium trifluoroacetate ([eeim][TFA]), diethylimidazolium trifluoromethanesulfonate ([eeim][TfO]), diethylimidazolium nitrate ([eeim][NO$_3$]), dimethylimidazolium nitrate ([mmim][NO$_3$]), ethyl-2,4-dimethylimidazolium trifluoroacetate [e-2,4-mmim][TFA]), ethyl-2,4-dimethylimidazolium trifluoromethanesulfonate ([e-2,4-mmim][TfO]), ethyl-2,4-dimethylimidazolium nitrate ([e-2,4-mmim] [NO$_3$]), ethyldimethylimidazolium tetrafluoroborate ([emmim] [BF$_4$]), ethyldimethylimidazolium trifluoroacetate ([emmim][TFA]), ethyldimethylimidazolium trifluoromethanesulfonate ([emmim][TfO]), ethylmethylimidazolium trifluoroacetate ([emim][TFA]), ethylmethylimidazolium nitrate ([emim][NO$_3$]), ethylpropylimidazolium tetrafluoroborate ([eprim][BF$_4$]), ethylpropylimidazolium hexafluorophosphate ([eprim][PF$_6$]), ethylpropylimidazolium trifluoroacetate ([eprim] [TFA]), ethylpropylimidazolium trifluoromethanesulfonate ([eprim][TfO]), ethylpropylimidazolium nitrate ([eprim][NO$_3$]), ethoxyethylmethylimidazolium tetrafluoroborate ([etO-emim][BF$_4$]), ethoxyethylmethylimidazolium hexafluorophosphate ([etO-emim] [PF$_6$]), ethoxyethylmethylimidazolium trifluoroacetate ([etO-emim] [TFA]), ethoxyethylmethylimidazolium trifluoromethanesulfonate ([etO-emim] [TfO]), ethoxyethylmethylimidazolium nitrate ([etO-emim][NO$_3$]), ethoxydimethylimidazolium methanesulfonate ([etO-mmim][CH$_3$SO$_3$]), ethoxydimethylimidazolium trifluoroacetate ([etO-mmim][TFA]), heptylmethylimidazolium tetrafluoroborate ([hpmim][BF$_4$]), hexylethylimidazolium tetrafluoroborate ([hxeim][BF$_4$]), hexylmethylimidazolium tetrafluoroborate ([hxmim][BF$_4$]), hexylmethylimidazolium hexafluorophosphate ([hxmim][PF$_6$]), hexylmethylimidazolium nitrate ([hxmim][NO$_3$]), hexyldimethylimidazolium tetrafluoroborate ([hxmmim][BF$_4$]), methoxyethylmethylimidazolium tetrafluoroborate ([meO-emim][BF$_4$]), methoxyethylmethylimidazolium hexafluorophosphate ([meO-emim][PF$_6$]), methoxyethylmethylimidazolium trifluoroacetate ([meO-emim] [TFA]), methoxyethylmethylimidazolium trifluoromethanesulfonate ([meO-emim] [TfO]), methoxyethylmethylimidazolium nitrate ([meO-emim][NO$_3$]), methoxypropylmethylimidazolium tetrafluoroborate ([meO-prmim][BF$_4$]), methoxypropylmethylimidazolium hexafluorophosphate ([meO-prmim][PF$_6$]), methoxypropylmethylimidazolium trifluoroacetate ([meO-prmim][TFA]), methoxypropylmethylimidazolium trifluoromethanesulfonate ([meO-prmim] [TfO]), methylpropylimidazolium methanesulfonate ([mprim][CH$_3$SO$_3$]), methylpropylimidazolium trifluoroacetate ([mprim][TFA]), methylpropylimidazolium nitrate ([mprim][NO$_3$]), hydroxylethylmethylimidazolium methanesulfonate ([OH-emim][CH$_3$SO$_3$]), hydroxyloctylmethylimidazolium tetrafluoroborate ([OH-omim][BF$_4$]), hydroxyloctylmethylimidazolium hexafluorophosphate ([OH-omim][PF$_6$]), hydroxyloctylmethylimidazolium nitrate ([OH-omim][NO$_3$]), hydroxylpropylmethylimidazolium methanesulfonate ([OH-prmim][CH$_3$SO$_3$]), octylmethylimidazolium tetrafluoroborate ([omim][BF$_4$]), phenylethylmethylimidazolium methanesulfonate ([ph-emim][CH$_3$SO$_3$]), phenylethylmethylimidazolium hexafluorophosphate ([ph-emim][PF$_6$]), phenylethylmethylimidazolium trifluoroacetate ([ph-emim] [TFA]), phenylethylmethylimidazolium trifluoromethanesulfonate ([ph-emim][TfO]), phenylethylmethylimidazolium nitrate ([ph-emim][NO$_3$]), phenylmethylimidazolium methanesulfonate ([ph-mim][CH$_3$SO$_3$]), phenylmethylimidazolium trifluoroacetate ([ph-mim][TFA]), phenylmethylimidazolium trifluoromethanesulfonate ([ph-mim][TfO]), phenylmethylimidazolium nitrate ([ph-mim][NO$_3$]), phenyldimethylimidazolium methanesulfonate ([ph-mmim][CH$_3$SO$_3$]), phenyldimethylimidazolium hexafluorophosphate ([ph-mmim][PF$_6$]), phenyldimethylimidazolium trifluoroacetate ([ph-mmim][TFA]), phenyldimethylimidazolium trifluoromethanesulfonate ([ph-mmim][TfO]), phenyldimethylimidazolium nitrate ([ph-mmim][NO$_3$]), pentylmethylimidazolium tetrafluoroborate ([pnmim][BF$_4$]), pentylmethylimidazolium hexafluorophosphate ([pnmim][PF$_6$]), pentylmethylimidazolium trifluoroacetate ([pnmim][TFA]), pentylmethylimidazolium trifluoromethanesulfonate ([pnmim][TfO]), pentylmethylimidazolium nitrate ([pnmim][NO$_3$]), propylmethylimidazolium trifluoroacetate ([prmim] [TFA]), propylmethylimidazolium trifluoromethansulfonate ([prmim][TfO]), propylmethylimidazolium nitrate ([prmim][NO$_3$]), 1-butyl-2-methylpyridinium tetrafluoroborate ([1-b-2-mpy][BF$_4$]), 1-butyl-2-methylpyridinium hexafluorophosphate ([1-b-2-mpy][PF$_6$]), 1-butyl-2-methylpyridinium trifluoromethanesulfonate ([1-b-2-mpy][TfO]), 1-butyl-3-methylpyridinium tetrafluoroborate ([1-b-3-mpy][BF$_4$]), 1-butyl-3-methylpyridinium hexafluorophosphate ([1-b-3-mpy][PF$_6$]), 1-butyl-4-methylpyridinium tetrafluoroborate ([1-b-4-mpy][BF$_4$]), 1-butyl-4-methylpyridinium hexafluorophosphate ([1-b-4-mpy][PF$_6$]), 1-ethyl-2-methylpyridinium tetrafluoroborate ([1-e-2-mpy][BF$_4$]), 1-ethyl-2-methylpyridinium trifluoroacetate ([1-e-2-mpy][TFA]), 1-ethyl-2-methylpyridinium trifluoromethanesulfonate ([1-e-2-mpy][TfO]), 1-ethyl-3-methylpyridinium tetrafluoroborate ([1-e-3-mpy][BF$_4$]), 1-ethyl-3-methylpyridinium trifluoroacetate ([1-e-3-mpy][TFA]), 1-ethyl-3-methylpyridinium trifluoromethanesulfonate ([1-e-3-mpy][TfO]), 1-ethyl-4-dimethylacetylpyridinium tetrafluoroborate ([1-e-4-DMApy][BF$_4$]), 1-ethyl-4-dimethylacetylpyridinium hexafluorophosphate ([1-e-4-DMApy][PF$_6$]), 1-ethyl-4-methylpyridinium tetrafluoroborate ([1-e-4-mpy][BF$_4$]), 1-ethyl-4-methylpyridinium trifluoroacetate ([1-e-4-mpy][TFA]), 1-ethyl-4-methylpyridinium trifluoromethanesulfonate ([1-e-4-mpy][TfO]), 1-ethyl-4-methylpyridinium nitrate ([1-e-4-mpy][NO$_3$]), 1-hexyl-4-methylpyridinium tetrafluoroborate ([1-hx-4-mpy][BF$_4$]), 1-propyl-3-methylpyridinium tetrafluoroborate ([1-pr-3-mpy][BF$_4$]), 1-propyl-3-methylpyridinium hexafluorophosphate ([1-pr-3-mpy][PF$_6$]), 1-propyl-3-methylpyridinium trifluoroacetate ([1-pr-3-mpy][TFA]), 1-propyl-3-methylpyridinium trifluoromethanesulfonate ([1-pr-3-mpy][TfO]), 1-propyl-4-methylpyridinium tetrafluoroborate ([1-pr-4-mpy][BF$_4$]), 1-propyl-4-methylpyridinium hexafluorophosphate ([1-pr-3-mpy][PF$_6$]), 1-propyl-4-methylpyridinium trifluoroacetate ([1-pr-4-mpy][TFA]), 1-propyl-4-methylpyridinium trifluoromethanesulfonate ([1-pr-4-mpy][TfO]), 1-propyl-4-methylpyridinium nitrate ([1-pr-4-mpy][NO$_3$]), butylpyridinium hexafluorophosphate ([bpy][PF$_6$]), butylpyridinium trifluoroacetate ([bpy][TFA]), butylpyridinium trifluoromethanesulfonate ([bpy][TfO]), butylpyridinium nitrate ([bpy][NO$_3$]), ethylpyridinium nitrate ([epy][NO$_3$]), heptylpyridinium tetrafluoroborate ([hppy] [BF$_4$]), heptylpyridinium hexafluorophosphate ([hppy] [PF$_6$]), heptylpyridinium nitrate ([hppy][NO$_3$]), hexylpyridinium tetrafluoroborate ([hxpy][BF$_4$]), hexylpyridinium hexalfuorophosphate ([hxpy][PF$_6$]), hexylpyridinium trifluoromethansulfonate ([hxpy][TfO]), hexylpyridinium nitrate ([hxpy][NO$_3$]), hydroxypropylpyridinium methanesulfonate ([OH-prpy][CH$_3$SO$_3$]), octylpyridinium tetrafluoroborate ([opy][BF$_4$]), pentylpyridinium tetrafluoroborate ([pnpy][BF$_4$]), pentylpyridinium hexafluorophosphate ([pnpy][PF$_6$]), pentylpyridinium trifluoroacetate ([pnpy][TFA]). pentylpyridinium trifluoromethanesulfonate ([pnpy][TfO]), pentylpyridinium nitrate ([pnpy][NO$_3$]), propylpyridinium trifluoroacetate ([prpy][TFA]), propylpyridinium trifluoromethanesulfonate ([prpy][TfO]), propylpyridinium nitrate ([prpy][NO$_3$]), butylmethylpyrrolidinium tetrafluoroborate ([bmpyr][BF$_4$]), butylmethylpyrrolidinium hexafluorophosphate ([bmpyr][PF$_6$]), butylmethylpyrrolidinium trifluoromethanesulfonate ([bmpyr][TfO]), butylpyrrolidinium acetate ([bpyr][CH$_3$CO$_2$]), hexylmethylpyrrolidinium tetrafluoroborate ([hxmpyr][BF$_4$]), hexylmethylpyrrolidinium hexafluorophosphate ([hxmpyr][PF$_6$]), hexylpyrrolidinium acetate ([hxpyr][CH$_3$CO$_2$]), hexylpyrrolidinium trifluoroacetate ([hxpyr][TFA]), octylpyrrolidinium tetrafluoroborate ([opyr][BF$_4$]), octylpyrrolidinium methanesulfonate ([opyr][CH$_3$SO$_3$]), octylpyrrolidinium hexafluorophosphate ([opyr][PF$_6$]), octylpyrrolidinium nitrate ([opyr][NO$_3$]), propylmethylpyrrolidinium tetrafluoroborate ([prmpyr][BF$_4$]), propylmethylpyrrolidinium hexafluorophosphate ([prmpyr][PF$_6$]), propylmethylpyrrolidinium trifluoroacetate ([prmpyr] [TFA]), propylmethylpyrrolidinium trifluoromethanesulfonate ([prmpyr] [TfO]), butylethyldimethylammonium tetrafluoroborate ([bemm-N][BF$_4$]), butylethyldimethylammonium hexafluorophosphate ([bemm-N][PF$_6$]), butylethyldimethylammonium trifluoroacetate ([bemm-N][TFA]), butylethyldimethylammonium trifluoromethanesulfonate ([bemm-N][TfO]), butyltrimethylammonium trifluoroacetate ([bmmm-N][TFA]), butyltrimethylammonium trifluoromethanesulfonate ([bmmm-N][TfO]), butyltrimethylammonium nitrate ([bmmm-N][NO$_3$]), N,N,N-trimethylethanolammonium methanesulfonate ([choline][CH$_3$SO$_3$]), N,N,N-trimethylethanolammonium nitrate ([choline][NO$_3$]), ethylammonium hexafluorophosphate ([eN][PF$_6$]), tetraethylammonium tetrafluoroborate ([eeee-N][BF$_4$]), tetraethylammonium hexafluorophosphate ([eeee-N][PF$_6$]), tetraethylammonium trifluoromethanesulfonate ([eeee-N][TfO]), butyldimethylethanolammonium trifluoroacetate ([OHe-bmm-N][TFA]), butyldimethylethanolammonium trifluoromethanesulfonate ([OHe-bmm-N] [TfO]), butyldimethylethanolammonium nitrate ([OHe-bmm-N][NO$_3$]), ethyldimethylethanolammonium nitrate ([OHe-emm-N][NO$_3$]), or combinations thereof.

The ionic liquid solvent has a total solubility of propylene greater than the total solubility of the propylene in [emim][Tf$_2$N]-Ag, andthe ionic liquid solvent has a total selectivity to olefin (e.g., propylene) over alkane (e.g., propane) greater than the total selectivity of [emim][Tf$_2$N]-Ag to olefin over alkane.

In an embodiment, butylmethylimidazolium tetrafluoroborate may comprise 1-butyl-3-methylimidazolium tetrafluoroborate.

In additional embodiments, the ionic liquid solvent may further comprise a Ag(I) salt, a Cu(I) salt, or combinations thereof.

In embodiments, the Ag(I) salt may be dissolved, dispersed, suspended, or combinations thereof in the ionic liquid solvent. When dissolved, dispersed, suspended, or combinations thereof, the Ag(I) salt may form a Ag(I) cation in the ionic liquid solvent. The Ag(I) salt may comprise silver(I) bis(trifluoromethanesulfonyl)amide ([Ag(I)][Tf$_2$N]), silver(I) trifluoromethanesulfonate ([Ag(I)][TfO]), silver(I) nitrate ([Ag(I)][NO$_3$]), silver(I) tetrafluoroborate ([Ag(I)][BF$_4$]), silver (I) acetate ([Ag(1)][CH$_3$CO$_2$]), silver(I) methanesulfonate ([Ag(I)][CH$_3$SO$_3$]), silver(I) hexafluorophosphate ([Ag(I)][PF$_6$]), silver(I) trifluoroacetate ([Ag(I)][TFA]), silver(I) dicyanamide ([Ag(I)][DCA]), silver(I) thiocyanate ([Ag(I)][SCN]), silver(I) sulfonate ([Ag(I)][SO$_3$]), silver(I) methylsulfate ([Ag(I)][CH$_3$SO$_4$]), or combinations thereof. In embodiments, a concentration of silver (e.g., Ag(I)) in the ionic liquid solvent is from 0.1 N to about 5 N; alternatively, from about 0.45N to about 1.8 N. The disclosed embodiments also include ionic liquid solvents which have no silver salt and comprise one or more of the ionic liquids disclosed herein.

In embodiments, the anion of the Ag(I) salt (e.g., [Tf$_2$N], [TfO], [NO$_3$], [BF$_4$], [CH$_3$CO$_2$], [CH$_3$SO$_3$], [PF$_6$], [TFA], [DCA], [SCN], [SO$_3$], [CH$_3$SO$_4$], or combinations thereof) matches (e.g., has the same anion structure as) the anion (e.g., [Tf$_2$N], [TfO], [NO$_3$], [BF$_4$], [CH$_3$CO$_2$], [CH$_3$SO$_3$], [PF$_6$], [TFA], [DCA], [SCN], [SO$_3$], [CH$_3$SO$_4$], or combinations thereof) of the ionic liquid solvent. Not intending to be bound by theory, it is believed that matching anions can produce a homogenous ionic liquid mixture and improve the stability of the Ag(I) salt, e.g., stabilizes the silver ions in the Ag(I) from reduction to the metallic state. Examples of matching anions include a solution of silver(I) bis(trifluoromethanesulfonyl)amide ([Ag(I)][Tf₂N]) in ethylmethylimidazolium bis(trifluoromethanesulfonyl)amide ([emim][Tf₂N]), a solution of silver(I) ([Ag(I)][TfO]) in butylpyridinium bis(trifluoromethanesulfonyl)amide ([bpy][TfO]), a solution of silver(I) ([Ag(I)][TfO]) in butylmethylimidazolium bis(trifluoromethanesulfonyl)amide ([bmin][TfO]), a solution of silver(I) nitrate ([Ag(I)][NO₃]) in propylpyridinium nitrate ([ppy][NO₃]), a solution of silver(I) tetrafluoroborate ([Ag(I)][BF₄]) in butylpyridinium tetrafluoroborate ([bpy][BF₄]), a solution of silver(I) tetrafluoroborate ([Ag(I)][BF₄]) in butylmethylimidazolium tetrafluoroborate ([bmim][BF₄]), a solution of silver(I) acetate ([Ag(I)][CH₃CO₂]) in butylmethylpyridinium acetate ([bmpy][CH₃CO₂]), a solution of silver(I) acetate ([Ag(I)][CH₃CO₂]) in butylmethylimidazolium acetate ([bmim][CH₃CO₂]), and so on.

In embodiments, the Cu(I) salt may be dissolved, dispersed, suspended, or combinations thereof in the ionic liquid solvent. When dissolved, dispersed, suspended, or combinations thereof, the Cu(I) salt may form a Cu(I) cation in the ionic liquid solvent. The Cu(I) salt may comprise copper(I) chloride ([Cu(I)][Cl]), copper(I) bromide ([Cu(I)][Br]), cuprous trifluoroacetate ([Cu(I)][TFA]), copper(I) nitrate ([Cu(I)][NO₃]), copper(I) trifluoromethanesulfonate ([Cu(I)][TfO]), copper(I) tetrafluoroborate ([Cu(I)][BF₄]), copper(I) acetate ([Cu(I)][CH₃CO₂]), copper(I) methanesulfonate ([Cu(I)][CH₃SO₃]), copper(I) hexafluorophosphate ([Cu(I)][PF₆]), copper(I) bis(trifluoromethanesulfonyl)amide ([Cu(I)][TFA]), copper(I) dicyanamide ([Cu(I)][DCA]), copper(I) thiocyanate ([Cu(I)][SCN]), copper(I) sulfonate ([Cu(I)][SO₃]), copper(I) methylsulfate ([Cu(I)][CH₃SO₄]), or combinations thereof. In embodiments, a concentration of copper (e.g., Cu(I)) in the ionic liquid solvent is from 0.1 N to about 5 N; alternatively, from about 0.45N to about 1.8 N. The disclosed embodiments also include ionic liquid solvents which have no copper salt and comprise one or more of the ionic liquids disclosed herein.

In embodiments, the anion of the Cu(I) salt (e.g., [Tf₂N], [TfO], [NO₃], [BF₄], [CH₃CO₂], [CH₃SO₃], [PF₆], [TFA], [DCA], [SCN], [SO₃], [CH₃SO₄], or combinations thereof) matches (e.g., has the same anion structure as) the anion (e.g., [Tf₂N], [TfO], [NO₃], [BF₄], [CH₃CO₂], [CH₃SO₃], [PF₆], [TFA], [DCA], [SCN], [SO₃], [CH₃SO₄], or combinations thereof) of the ionic liquid solvent. Not intending to be bound by theory, it is believed that matching anions can produce a homogenous ionic liquid mixture and improve the stability of the Cu(I) salt, e.g., stabilizes the copper ions in the Cu(I) salt from reduction to the metallic state. Examples of matching anions include a solution of copper(I) bis(trifluoromethanesulfonyl)amide ([Cu(I)][Tf₂N]) in ethylmethylimidazolium bis(trifluoromethanesulfonyl)amide ([emim][Tf₂N]), a solution of copper(I) ([Cu(I)][TfO]) in butylpyridinium bis(trifluoromethanesulfonyl)amide ([bpy][TfO]), a solution of copper(I) ([Cu(I)][TfO]) in butylmethylimidazolium bis(trifluoromethanesulfonyl)amide ([bmin][TfO]), a solution of copper(I) nitrate ([Cu(I)][NO₃]) in propylpyridinium nitrate ([ppy][NO₃]), a solution of copper(I) tetrafluoroborate ([Cu(I)][BF₄]) in butylpyridinium tetrafluoroborate ([bpy][BF₄]), a solution of copper(I) tetrafluoroborate ([Cu(I)][BF₄]) in butylmethylimidazolium tetrafluoroborate ([bmim][BF₄]), a solution of copper(I) acetate ([Cu(I)][CH₃CO₂]) in butylmethylpyridinium acetate ([bmpy][CH₃CO₂]), a solution of copper(I) acetate ([Cu(I)][CH₃CO₂]) in butylmethylimidazolium acetate ([bmim][CH₃CO₂]), and so on.

Not intending to be bound by theory, embodiments of the ionic liquid solvent disclosed herein may interact with the double carbon bonds of a gaseous component (e.g., an olefin). In an embodiment, capture of at least a portion of the gaseous component (optionally, at least a portion of the second gaseous component) may comprise reversibly complexing, binding, linking, bonding, interacting, dissolving or combinations thereof the gaseous component (optionally, second gaseous component) with the ionic liquid solvent, for example, via the formation of a complex, a link, a bond, an attraction, an interaction, a solution or combinations thereof. For example, an olefin (e.g., ethylene) may complex with a Ag(I) cation and/or a Cu(I) cation of an ionic liquid solvent to form a captured olefin (e.g., ethylene) complex.

In embodiments, the ionic liquid solvents disclosed herein may be selective to the gaseous component (optionally, the second gaseous component) over one or more fluid components in the process stream 111. For example, the ionic liquid solvents disclosed herein may be selective to olefin over alkane (e.g., to propylene over propane), may be selective to one alkane over another alkane (e.g., to isobutane over ethane), may be selective to $CO_2$ over natural gas, may be selective to $CO_2$ over syngas, may be selective to $H_2S$ over natural gas, or combinations thereof.

In embodiments, the total solubility of the gaseous component in the ionic liquid solvent is about 0.01 to about 100 mol/L; alternatively, about 0.01 to about 10 mol/L;; alternatively, about .1 to about 10 mol/L; alternatively, about 1 to about 5 mol/L. As used herein, the total solubility of a component refers to the sum of the chemical solubility of that component and the physical solubility of that component in an ionic liquid solvent. For example, the total solubility of propylene is shown by the following equation:

$$[C_3 =]_t = [C_3 =]_p + [C_3 =]_c$$

where $[C_3=]_t$ is the total solubility of propylene in units of mol/L, $[C_3=]_p$ is the physical solubility of propylene in mol/L, and $[C_3=]_c$ is the chemical solubility of propylene in units of mol/L. In embodiments, the total solubility, obtained similarly as described above for propylene, of the second gaseous component in the ionic liquid solvent is about 0.01 to about 10 mol/L; alternatively, about 0.01 to about 5 mol/L; alternatively, about 0.1 to about 5 mol/L; alternatively, about 1 to about 5 mol/L.

In embodiments, the total selectivity of the ionic liquid solvent to the gaseous component over one or more fluid components (e.g., a second gaseous component or other fluid component) in the process stream 111 may be from about 8 to greater than about 300; alternatively, greater than from about 8 to about 300; alternatively, from about 8 to about 300; alternatively, from about 10 to about 200; alternatively, from about 15 to about 100; alternatively, from about 20 to about 60; based on the ratio of total solubility of the gaseous component in the ionic liquid solvent in mol/L to the total solubility of the one or more fluid components of the process stream 111 in the ionic liquid solvent in mol/L. In embodiments, the total selectivity of the ionic liquid solvent to the second gaseous component over one or more fluid components (e.g., a third gaseous component or other fluid component) in the process stream 111 may be from about 8 to greater than about 300; alternatively, greater than from about 8 to about 300; alternatively, from about 8 to about 300; alternatively, from about 10 to about 200; alternatively, from about 15 to about 100; alternatively, from about 20 to about 60; based on the ratio of total solubility of the second gaseous component in the ionic liquid solvent in mol/L to the total solubility of the one or more fluid components of the process stream 111 in the ionic liquid solvent in mol/L. For example, the total selectivity of propylene to propane, ethylene to ethane, isobutane to ethane, $CO_2$ to natural gas or syngas, $H_2S$ to natural gas, or combinations thereof may be from about 8 to greater than about 300; alternatively, from about 8 to about 300; alternatively, from about 10 to about 200; alternatively, from about 15 to about 100; alternatively, from about 20 to about 60.

In embodiments, the total solubility of the gaseous component in the ionic liquid solvent is about 0.01 to about 100 mol/L; the total solubility of the second gaseous component in the ionic liquid solvent is about 0.01 to about 10 mol/L; and the total selectivity of the ionic liquid solvent to the gaseous component over the second gaseous component is greater than from about 8 to about 300.

In an embodiment, the ionic liquid solvent may reversibly capture (e.g., absorb, adsorb, dissolve, complex or combinations thereof) and/or induce the capture of the gaseous component (e.g., ethylene, $CO_2$) from the process stream 111 comprising various other fluids (e.g., gases). In an additional or alternative embodiment, the ionic liquid solvent may reversibly capture (e.g., absorb, adsorb, dissolve, complex or combinations thereof) and/or induce the capture of the second gaseous component (e.g., isobutane, $H_2S$) from the process stream 111. In an additional or alternative embodiment, the ionic liquid solvent may reversibly capture (e.g., absorb, adsorb, dissolve, complex or combinations thereof) and/or induce the capture of the second gaseous component (e.g., isobutane, $H_2S$) in addition to the gaseous component (e.g., ethylene, $CO_2$) from the process stream 111.

In embodiments, the flow of the process stream 111 components relative to the ionic liquid solvent in the separator 110 may be concurrent, countercurrent, or staged in sections of the separator 110.

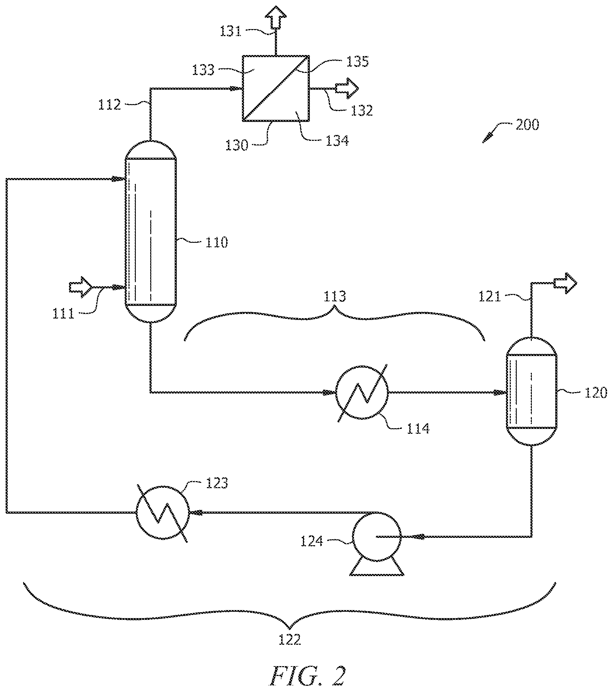

In embodiments, components and/or portions of components of process stream 111 which are not captured by the ionic liquid solvent (e.g., in embodiments where at least a portion of the second gaseous component is not captured, where a third gaseous component is not captured) may flow exit the separator 110 and flow through uncaptured stream 112. In embodiments, the uncaptured stream 112 may comprise hydrogen, nitrogen, ethane, isobutane, or combinations thereof. In alternative embodiments, the uncaptured stream 112 may comprise syngas. In alternative embodiments, the uncaptured stream 112 may comprise natural gas. One or more of the components in the uncaptured stream 112 be further processed according to techniques known in the art, one or more components of the uncaptured stream 112 may be flared, or combinations thereof. In the embodiment of system 200 shown in Figure 2, the uncaptured second gaseous component may be recovered via a membrane unit 130 (discussed in detail below).

In embodiments, at least a portion of the gaseous component (optionally, at least a portion of the second component) may exit from the separator 110 and flow to the regenerator 120 via captured stream 113. Captured stream 113 may comprise the ionic liquid solvent, captured portions of the gaseous component (e.g., ethylene, $CO_2$), captured portions of the second gaseous component (e.g., isobutane, $H_2S$), or combinations thereof.

In embodiments, the regenerator 120 may comprise one or more vessels (e.g., in series, in parallel, or both) configured to regenerate the ionic liquid solvent, to liberate at least a portion of the captured gaseous component, to liberate at least a portion of the captured second gaseous component, or combinations thereof. In an embodiment, regenerator 120 may be heated to liberate the gaseous component (optionally, the second gaseous component) from the ionic liquid solvent so as to regenerate the ionic liquid solvent using one or more heat sources comprising cooling water, low-pressure steam, or combinations thereof.

In an embodiment, regenerator 120 may be configured to operate on the basis of a temperature suitable to liberate (e.g., change a solubility, vaporize, desorb) the captured gaseous component (optionally, second gaseous component) from the ionic liquid solvent in the regenerator 120. In embodiments, the regenerator 120 may operate at a temperature greater than a temperature of the separator 110, a temperature from about 60 °C to about 450 °C, or combinations thereof. In additional or alternative embodiments, the regenerator 120 may operate at a temperature from about 93 °C to about 204 °C; alternatively, from about 93 °C to about 149 °C; alternatively, from about 149 °C to about 204 °C.

In an embodiment, regenerator 120 may be configured such that the components of the captured stream 113 experience a pressure differential when entering the regenerator 120. In such an embodiment, the regenerator 120 may be configured to provide or maintain a suitable pressure suitable to liberate (e.g., change a solubility, vaporize, desorb) the captured gaseous component (optionally, second gaseous component) from the ionic liquid solvent in the regenerator 120. In embodiments, the regenerator 120 may operate at a pressure less than (e.g., about 20 psia (138 kPa) less than) a pressure at which the separator 110 operates, a pressure greater than or equal to about 14.7 psia (101 kPa), or combinations thereof. In additional or alternative embodiment, the regenerator 120 may operate at a pressure greater of about 16 psia (110 kPa) or about 50 psia (345 kPa).

In embodiments, the regenerator 120 may comprise a series of vessel which operate via pressure differential, wherein each of the vessels in the series operates at the same or different pressures. For example, the regenerator 120 may comprise two vessels in series in which the first vessel operates at a pressure disclosed herein for the regenerator 120, and the second vessel operates at a pressure disclosed herein for the regenerator 120 which is lower than the pressure of the first vessel.

In an embodiment, the regenerator 120 may be configured for batch and/or continuous processes. For example, the regenerator 120 may operate in traditional batch or continuous operations. In another example, two or more regenerators may operate in batch mode and alternate in operation such that regeneration of the ionic liquid solvent in the system 100 is continuous.

In the regenerator 120, the captured gaseous component(s) (e.g., gaseous component and, optionally, second gaseous component) of captured stream 113 may separate to form a recovered stream 121 comprising the recovered gaseous component (optionally, recovered second gaseous component) and a solvent stream 122 comprising the regenerated ionic liquid solvent. By "regenerated," it is meant that at least a majority of the captured gaseous component (optionally, second gaseous component) is liberated from the ionic liquid solvent in the regenerator 120. Liberating may include reversing a complex, breaking a bond, reversing an interaction, reversing an attraction, reversing a dissolution, desorbing, or combinations thereof. The recovered gaseous component (optionally, the second recovered gaseous component) may be emitted from the regenerator 120 via recovered stream 121.

The solvent stream 122 may comprise regenerated ionic liquid solvent which flows from the regenerator 120 to the separator 110. The regenerated ionic liquid solvent may be circulated for reuse in the separator 110. The regenerated ionic liquid solvent may be referred to as a "lean solvent."

The recovered stream 121 may comprise the recovered gaseous component (optionally, second gaseous component). The recovered stream 121 may be introduced into or reused in processes such as a polyethylene polymerization process; the recovered stream 121 may be collected for further processing (e.g., cracking, catalytic cracking, pyrolysis, dehydrogenating, deoxygenating, scrubbing, converting, treating, or combinations thereof); the recovered stream 121 may be used for distribution, sale, etc., of the gaseous component (optionally, second gaseous component); the recovered stream 121 may be used as fuel; or combinations thereof.

In embodiments, the recovered stream 121 may comprise substantially (e.g., >90% by weight of the recovered stream 121) the recovered gaseous component (e.g., olefin, acid gas). In additional or alternative embodiments, the recovered stream 121 may comprise substantially (e.g., >90% by weight of the recovered stream 121) the recovered gaseous component (e.g., olefin, acid gas) and the recovered second gaseous component (e.g., alkane, acid gas).

In embodiments, the recovered stream 121 may comprise greater than about 50%, 60%, 70%, 80%, 85%, 90%, 95%, or more, of the gaseous component (e.g., olefin, acid gas) recovered from the process stream 111. In additional or alternative embodiments, the recovered stream 121 may comprise greater than about 50%, 60%, 70%, 80%, 85%, 90%, 95%, or more, of the second gaseous component (e.g., alkane, acid gas) recovered from the process stream 111.

In particular embodiments, the recovered stream 121 may comprise greater than about 85%, 90%, 95%, or more of the olefin (e.g., ethylene) recovered from the process stream 111. In additional or alternative embodiments, the recovered stream 121 may comprise greater than about 80%, 85%, 90%, 95%, or more, of the alkane recovered from the process stream 111. In alternative embodiments, the recovered stream 121 may comprise greater than about 50%, 60%, 70%, 80%, 90%, or more, of the $CO_2$ recovered from the process stream 111. In additional or alternative embodiments, the recovered stream 121 may comprise greater than about 50%, 60%, 70%, 80%, 90%, or more, of the $H_2S$ recovered from the process stream 111.

In embodiments, the purity of the recovered gaseous component (e.g., olefin, acid gas) in the recovered stream 121 may be greater than about 50%, 60%, 70,%, 80%, 90%, 95%, 96%, 97,%, 98%, 99%, or more, by weight of the recovered stream 121. In additional or alternative embodiments, the purity of the recovered second gaseous component (e.g., alkane, acid gas) in the recovered stream 121 may be greater than 50%, 60%, 70,%, 80%, 90%, 95%, 96%, 97,%, 98%, 99%, or more, by weight of the recovered stream 121. In particular embodiments, the recovered stream 121 may comprise substantially (e.g., >90 wt% by weight of the recovered stream 121) olefin (e.g., ethylene); alternatively, the recovered stream 121 may comprise substantially (e.g., >90 wt% by weight of the recovered stream 121) olefin (e.g., ethylene) and alkane (e.g., isobutane); alternatively, the recovered stream 121 may comprise substantially (e.g., >90 wt% by weight of the recovered stream 121) $CO_2$; alternatively, the recovered stream 121 may comprises substantially (e.g., >90 wt% by weight of the recovered stream 121) of $CO_2$ and $H_2S$.

The recovered stream 121 may further comprise other fluid components such as hydrogen, nitrogen, methane, ethane, propylene, propane, heavier hydrocarbons, or combinations thereof. Such components may be present in recovered stream 121 in various amounts due to capture of the fluid component by the ionic liquid solvent; however, the presence of one or more other fluid components in the recovered stream 121 is at levels lower than the gaseous component (optionally, second gaseous component) disclosed herein such that the recovery and purity levels of the gaseous component (optionally, second gaseous component) are met.

Figure 2 shows a process flow diagram of another embodiment of the disclosed system 200. As can be seen, the system 200 of Figure 2 may comprise the same components (e.g., separator 110, regenerator 120, heater 114, cooler 123, pump 124, solvent circulation system, process stream 111, captured stream 113, solvent stream 122, recovered stream 121) as the system 100 of Figure 1. System 200 further comprises a membrane unit 130 and associated streams 131 and 132. Uncaptured gaseous components which are not captured in the separator 110 by the ionic liquid solvent may exit from the separator 110 and flow through uncaptured stream 112 to the membrane unit 130 for further processing.

Generally, the separator 110 may capture a gaseous component of the process stream 111 (as described for Figure 1 above), and uncaptured components of the process stream 111 (uncaptured in the separator 110) may exit from the separator 110 and flow to the membrane unit 130 via uncaptured stream 112 (as described for Figure 1 above). The membrane unit 130 may comprise a membrane 135 which is selective to one or more fluid components (e.g., a second gaseous component) of the process stream 111. Uncaptured stream 112 feeds uncaptured components to the membrane unit 130. Uncaptured stream 112 may comprise various equipment (e.g., compressor, pump, valve, heat exchanger, or combinations thereof) which may can alter the conditions (e.g., temperature, pressure, phase) of the uncaptured stream 112 for flow of uncaptured gaseous components to the membrane unit 130. One or more of the uncaptured components may selectively permeate through the membrane 135 to the permeate side 134 of the membrane 135. The portions of the uncaptured components which do not permeate through the membrane 135 may comprise the retentate of the membrane 135 on the retentate side 133 of the membrane 135. The permeate may flow from the permeate side 134 of the membrane 135 and through permeate stream 132 for further processing, use, flare, disposal, or sale. The retentate may flow from the retentate side 133 of the membrane 135 and through retentate stream 131 for further processing, use, flare, disposal, or sale.

In embodiments, the membrane 135 of the membrane unit 130 is selective to alkanes (e.g., isobutane, ethane), $H_2S$, nitrogen, hydrogen, or combinations thereof. Membrane units having membranes which are selective to one or more of the uncaptured components are known in the art. For example, membrane units suitable for removal of $H_2S$ in system 200 are disclosed in U.S. Patent Nos. 5,556,449; 5,558,698; 5,407,467; 5,401,300; and 6,572,678. Membrane units suitable for removal of hydrogen in system 200 are disclosed in U.S. Patent Nos. 6,555,316 and 5,980,609. Membrane units suitable for removal of alkanes in system 200 are disclosed in U.S. Patent No. 5,980,609. Membrane units suitable for removal of nitrogen in system 200 are disclosed in U.S. Patent No. 7,479,227.

In embodiments, the membrane unit 130 may comprise two or more membrane units which include two or more membranes having the same or different selectivity as one another. For example, an alkane-selective membrane may be used to recover an uncaptured alkane in combination with a nitrogen-selective membrane. In another example, multiple membrane units may be used which are selective to $H_2S$ to achieve low levels of $H_2S$.

Operation of the system 200 shown in Figure 2 may include, but is not limited to, two operational embodiments. First, at least a portion of a gaseous component of the process stream 111 may be captured by the ionic liquid solvent in the separator 110 while at least a portion of a second gaseous component of the process stream 111 is not captured, exits from the separator 110, and flows to the membrane unit 130 via uncaptured stream 112. The uncaptured portion of the second gaseous component is then recovered from the membrane unit 130, and at least a portion of the captured gaseous component is recovered either from the separator 110 (e.g., in embodiments where the separator provides a dual function as a regenerator) or from the regenerator 120 of Figure 2. Second, at least a portion of a gaseous component and at least a portion of a second gaseous component of the process stream 111 may be captured by the ionic liquid solvent in the separator 110 while at least a portion of a third gaseous component of the process stream 111 is not captured, exits from the separator 110, and flows to the membrane unit 130 via uncaptured stream 112. The uncaptured portion of the third gaseous component is then recovered from the membrane unit 130, and the captured portion of the gaseous component and captured portion of the second gaseous component are recovered either from the separator 110 (e.g., in embodiments where the separator 110 provides a dual function as a regenerator) or from the regenerator 120 shown in Figure 2.

In system 200, the process stream 111, captured stream 113, uncaptured stream 112, solvent stream 122, and recovered stream 121 may comprise embodiments of the process stream 111, captured stream 113, uncaptured stream 112, solvent stream 122, and recovered stream 121 described for the system 100 of Figure 1. Likewise, the separator 110 and regenerator 120 of system 200 may comprise embodiments of the separator 110 and regenerator 120 of system 100 described for Figure 1.

In system 200, depending upon the selectivity of the membrane 135, retentate stream 131 or permeate stream 132 may comprise the recovered second gaseous component or the recovered third gaseous component. The retentate stream 131 or permeate stream 132 may be introduced into or reused in processes such as a polyethylene polymerization process; retentate stream 131 and/or permeate stream 132 may be collected for further processing (e.g., cracking, catalytic cracking, pyrolysis, dehydrogenating, deoxygenating, scrubbing, converting, treating, or combinations thereof); retentate stream 131 or permeate stream 132 may be used for distribution, sale, etc., of the second gaseous component (optionally, third gaseous component); the retentate stream 131 or permeate stream 132 may be used as fuel; or combinations thereof.

In embodiments, the retentate stream 131 or permeate stream 132 may comprise substantially (e.g., >90% by weight of the retentate stream 131 or permeate stream 132) the recovered second gaseous component (e.g., alkane, acid gas). In additional or alternative embodiments, the retentate stream 131 or permeate stream 132 may comprise substantially (e.g., >90% by weight of the retentate stream 131 or permeate stream 132) the recovered third gaseous component (e.g., alkane, nitrogen, hydrogen, acid gas).

In embodiments, the retentate stream 131 or permeate stream 132 may comprise greater than about 50%, 60%, 70%, 80%, 85%, 90%, 95%, or more, of the second gaseous component (e.g., alkane, acid gas) recovered from the process stream 111. In additional or alternative embodiments, the retentate stream 131 or permeate stream 132 may comprise greater than about 50%, 60%, 70%, 80%, 85%, 90%, 95%, or more, of the third gaseous component (e.g., alkane, acid gas, hydrogen, nitrogen, natural gas, syngas) recovered from the process stream 111.

In particular embodiments, the retentate stream 131 or permeate stream 132 may comprise greater than about 80%, 85%, 90%, 95%, or more, of the alkane recovered from the process stream 111. In alternative embodiments, the retentate stream 131 or permeate stream 132 may comprise greater than about 50%, 60%, 70%, 80%, 90%, or more, of the natural gas or syngas recovered from the process stream 111. In additional or alternative embodiments, the retentate stream 131 or permeate stream 132 may comprise greater than about 50%, 60%, 70%, 80%, 90%, or more, of the $H_2S$ recovered from the process stream 111.

In embodiments, the purity of the recovered second gaseous component (e.g., alkane, acid gas) in the retentate stream 131 or permeate stream 132 may be greater than about 50%, 60%, 70,%, 80%, 90%, 95%, 96%, 97,%, 98%, 99%, or more, by weight of the retentate stream 131 or permeate stream 132. In additional or alternative embodiments, the purity of the recovered third gaseous component (e.g., alkane, acid gas, hydrogen, nitrogen, natural gas, syngas) in the retentate stream 131 or permeate stream 132 may be greater than 50%, 60%, 70,%, 80%, 90%, 95%, 96%, 97,%, 98%, 99%, or more, by weight of the retentate stream 131 or permeate stream 132. In particular embodiments, the retentate stream 131 or permeate stream 132 may comprise substantially (e.g., >90 wt% by weight of the retentate stream 131 or permeate stream 132) alkane (e.g., isobutane, ethane, propane); alternatively, the retentate stream 131 or permeate stream 132 may comprise substantially (e.g., >90 wt% by weight of the retentate stream 131 or permeate stream 132) natural gas or syngas; alternatively, the retentate stream 131 or permeate stream 132 may comprise substantially (e.g., >90 wt% by weight of the retentate stream 131 or permeate stream 132) of $CO_2$ and/or $H_2S$.

In embodiments of the system 200, the gaseous component may comprise an olefin (e.g., ethylene) or an acid gas ($CO_2$ or $H_2S$); the second gaseous component may comprise an alkane (e.g., isobutane) or an acid gas ($CO_2$ or $H_2S$); the third gaseous component may comprise an alkane (e.g., ethane), natural gas, syngas, hydrogen, or nitrogen.

The disclosed embodiments include methods for recovering at least a portion of a gaseous component (e.g., the gaseous component, second gaseous component, third gaseous component, or combinations thereof, as described above).

In an embodiment, a method comprises providing a process stream comprising a gaseous component, capturing at least a portion of the gaseous component from the process stream by the ionic liquid solvent, and recovering at least a portion of a captured gaseous component from the ionic liquid solvent. In additional embodiments, the process stream comprises a second gaseous component and at least a portion of the second gaseous component from the process stream is captured by the ionic liquid solvent, and the method further comprises recovering at least a portion of the second gaseous component from the ionic liquid solvent.

In embodiments of the method, the ionic liquid solvent may comprise a cation, an anion, a Ag(I) salt, a Cu(I) salt, or combinations thereof.

In embodiments of the method, the cation may comprise any of the cations described hereinabove in combination with any of the anions described herein.

In embodiments of the method, the Ag(I) salt may comprise any of the silver salts described herein. In embodiments of the method, the concentration of silver in the ionic liquid solvent may comprise any of the concentrations described herein. In embodiments of the method, the Cu(I) salt may any of the copper salts described herein. In embodiments of the method, a concentration of copper (e.g., Cu(I)) in the ionic liquid solvent may comprise any of the concentrations described herein.

In embodiments of the method, the step of capturing may be performed at a liquid-to-gas mass flow ratio from about 1 to about 350; alternatively, from about 1 to about 200; alternatively, from about 10 to about 200; alternatively, from about 10 to about 100. In additional or alternative embodiments, the step of capturing may be performed at a liquid-to-gas mass flow ratio such that at least a portion of a second gaseous component is captured by the ionic liquid solvent in addition to the capture of the gaseous component. In such embodiments, the liquid-to-gas mass flow ratio may comprise greater than about 10; alternatively, greater than about 15. In additional or alternative embodiments, the step of capturing may be performed at a liquid-to-gas mass flow ratio such that at least a portion of the second gaseous component is not captured by the ionic liquid solvent. In such embodiments, the liquid-to-gas mass flow ratio may comprise less than about 200.

In embodiments, the method may further comprise flowing the ionic liquid solvent at a mass flow rate from about 1,000 pounds per hour to about 300,000 pounds per hour. In additional or alternative embodiments, the method may further comprise flowing the ionic liquid solvent at a flow rate which captures at least a portion of the gaseous component, wherein the gaseous component comprises an acid gas.

In embodiments, the gaseous component and/or are the second gaseous component are captured by absorption, adsorption, dissolution, complexation, or combinations thereof.

In embodiments, the method may further comprise flowing an uncaptured portion of the second gaseous component to a membrane unit, and recovering at least a portion of the uncaptured portion of the second gaseous component from the membrane unit. In additional embodiments, the method may comprise flowing an uncaptured portion of a third gaseous component to the membrane unit, and recovering at least a portion of the uncaptured portion of the third gaseous component from the membrane unit.

In embodiments of the method, the step of capturing may be performed at a temperature from about 5 °C to about 50 °C; alternatively, about 20 °C to about 40 °C. In embodiments of the method, the step of capturing may be performed at a pressure from about 100 psia (689 kPa) to about 250 psia (1.7 MPa).

In embodiments of the method, recovering at least a portion of the captured gaseous component, the captured second gaseous component, or combinations thereof, may be performed at a temperature greater than a temperature at which the gaseous component, the second gaseous component, or combinations thereof, is captured; additionally or alternatively, from about 60 °C to about 450 °C.

In embodiments of the method, recovering at least a portion of the captured gaseous component, the captured second gaseous component, or combinations thereof, may be performed at a pressure less than a pressure at which the gaseous component, the second gaseous component, or combinations thereof, is captured; at a pressure greater than about 14.7 psia (101 kPa); at a pressure which is about 20 psia (138 kPa) less than the pressure at which the gaseous component, the second gaseous component, or combinations thereof, is captured; or combinations thereof.

In embodiments of the method, recovering at least a portion of the captured gaseous component, of the captured second gaseous component, or combinations thereof, may comprise liberating at least a portion of the captured gaseous component, of the captured second gaseous component, or combinations thereof, from the ionic liquid solvent, and recovering the liberated gaseous component, the liberated second gaseous component, or combinations thereof. Liberating the captured gaseous component and/or the captured second gaseous component from the ionic liquid solvent may generally comprise any suitable means of reversing the various links, bonds, attractions, interactions, complexes, or combinations thereof by which the captured gaseous component (optionally, captured second gaseous component) is bound, linked, bonded or combinations thereof to the ionic liquid solvent. Nonlimiting examples of a suitable means by which to liberate the captured gaseous component (optionally, captured second gaseous component) include altering a solubility of a captured gaseous component(optionally, captured second gaseous component), altering absorption kinetics or the absorption equilibrium of the ionic liquid solvent, heating the ionic liquid solvent comprising a captured gaseous component (optionally, captured second gaseous component), depressurizing the ionic liquid solvent comprising a captured gaseous component (optionally, captured second gaseous component), altering the partial pressure of the captured gaseous component (optionally, captured second gaseous component), or combinations thereof. In an embodiment, liberating the captured gaseous component (optionally, captured second gaseous component) may comprise depressurizing the ionic liquid solvent comprising the captured gaseous component (optionally, captured second gaseous component) to a suitable partial pressure. In an additional embodiment, liberating the captured gaseous component (optionally, captured second gaseous component) may comprise heating the ionic liquid solvent comprising the captured gaseous component (optionally, captured second gaseous component) within a separator or regenerator to a suitable temperature. Such a suitable temperature may be at a temperature greater than a temperature at which the gaseous component, the second gaseous component, or combinations thereof, is captured; alternatively or additionally, at a temperature from about 60 °C to about 450 °C, to encourage release of the captured component from the ionic liquid solvent.

In embodiments of the method, the gaseous component may comprise an olefin or an acid gas, and the second gaseous component may comprise an alkane or an acid gas. The olefin may comprise ethylene, the alkane may comprise isobutane, and the acid gas may comprise $CO_2$ or $H_2S$.

EXAMPLES

The disclosure having been generally described, the following examples are given as particular embodiments of the disclosure and to demonstrate the practice and advantages thereof. It is understood that these examples are given by way of illustration and is not intended to limit the specification or the claims in any manner.

A commercial process simulator was employed to generate models in accordance with the systems and/or methods disclosed herein. The models employed a system as shown in the figures. In the models, a process stream 111 feeds to the separator 110. As is seen below, using an ionic liquid solvent as disclosed herein for the capture of gaseous components provides for high selectivity of the gaseous component to other components in the process stream 111.

Reference EXAMPLE 1

Reference Example 1 utilizes the system 100 of Figure 1. Process stream 111 of Figure 1 is fed to the bottom of the separator 110. The composition and conditions for the process stream 111 of Example 1 are given in Table 1 below:

**Table 1**

| Composition | Mass flow (lb/hr) | Molar flow (kmol/hr) | Molar fraction | Partial pressure (psia) |
|---|---|---|---|---|
| Hydrogen | 31.06 (68.41 kg/hr) | 7.1 | 0.29 | 59.3 (409 kPa) |
| Nitrogen | 136.53 (301.00 kg/hr) | 2.2 | 0.09 | 18.6 (128 kPa) |
| Ethane | 169.14 (372.89 kg/hr) | 2.6 | 0.11 | 21.5 (148 kPa) |
| Ethylene | 728.54 (1606.16 kg/hr) | 11.8 | 0.49 | 99.4 (685 kPa) |
| I-Butane | 62.04 (136.77 kg/hr) | 0.5 | 0.02 | 4.1 (28 kPa) |
| Total | 1127.31 (2485.29 kg/hr) | 24.2 | 1.00 | 203.0 (1.4 MPa) |

Solvent stream 122 comprising the ionic liquid solvent is fed to the top of the separator 110. The pressure of the separator 110 is about 186 psia (1.3 MPa), and the temperature is about 30°C. The ionic liquid solvent is a solution of silver(I) bis(trifluoromethanesulfonyl)amide ([Ag(I)][Tf$_2$N]) in ethylmethylimidazolium bis(trifluoromethanesulfonyl)amide ([emim][Tf$_2$N]), designated as [emim][Tf$_2$N]-Ag, and the concentration of Ag(I) in the ionic liquid solvent is about 1.8 N.

In the separator 110, gaseous hydrogen, nitrogen, ethane, ethylene and isobutane rise through the ionic liquid solvent, and ethylene is captured (via absorption and complexing as described herein) into the [emim][Tf$_2$N]-Ag while isobutane is physisorbed. The ethylene which is complexed with the [emim][Tf$_2$N]-Ag and isobutane which is physisorbed in [emim][Tf$_2$N] exits from the separator 110 and flows to a regenerator 120 via captured stream 113. Ethylene liberates (e.g., desorbs) and the isobutane liberates from the [emim][Tf$_2$N]-Ag in the regenerator 120, where the pressure is about 16 psia (110 kPa) and temperature is about 93 °C, so as to regenerate the [emim][Tf$_2$N]-Ag and provide a recovered stream 121 comprising ethylene and isobutane. The regenerated [emim][Tf$_2$N]-Ag is recycled back to the separator 110 via solvent stream 122.

For a solvent stream 122 flow rate of 225,400 lb/hr (102200 kg/hr), and a mass flow ratio of liquid to gas of about 200, ethylene recovery in recovered stream 121 is about 96.5% by weight of ethylene in the process stream 111 or by moles of ethylene in the process stream 111, isobutane recovery is about 88% by weight of isobutane in the process stream 111 or by moles of isobutane in the process stream 111, and the purity of the recovered ethylene and isobutane is about 90% by moles of ethylene and isobutane in the recovered stream 121.

Reference Example 1 demonstrates an ionic liquid solvent as disclosed herein can selectively capture two gaseous components of the process stream 111, i.e., in the case of Reference Example 1, ethylene and isobutane. Moreover, the recovery of the two gaseous components is about 96.5% for ethylene and about 88% for isobutane; and the purity of the two gaseous components is about 90%. The capture of two gaseous components may avoid the need for separation of the second gaseous component (i.e., isobutane) from the process stream 111 in other equipment (i.e., in a membrane unit or other separating device). Such cases may reduce capital cost for process stream component separations and/or provide recovery of two gaseous components which may complement one another in subsequent use or sale, separations, processing, or combinations thereof.

Reference EXAMPLE 2

Reference Example 2 utilizes the system 100 of Figure 1. Process stream 111 of Figure 1 comprising gaseous hydrogen, nitrogen, ethane, ethylene and isobutane is fed to the bottom of the separator 110. The composition and conditions for the process stream 111 of Example 2 are given in Table 1 above. The solvent stream 122 comprising the ionic liquid solvent is fed to the top of the separator 110.

The pressure of the separator 110 is about 186 psia (1.3 MPa), and the temperature is about 30 °C. The ionic liquid solvent is [emim][Tf$_2$N]-Ag, and the concentration of Ag(I) in the ionic liquid solvent is about 1.8 N.

In the separator 110, gaseous ethane, ethylene and isobutane rise through the ionic liquid solvent, and ethylene is captured (via absorption and complexing as described herein) into the [emim][Tf$_2$N]-Ag. The ethylene which is complexed with the [emim][Tf$_2$N]-Ag exits from the separator 110 and flows to a regenerator 120 via captured stream 113. Ethylene liberates (e.g., desorbs) from the [emim] [Tf$_2$N]-Ag in the regenerator 120, where the pressure is about 16 psia (110 kPa) and temperature is about 149 °C, so as to regenerate the [emim][Tf$_2$N]-Ag. The regenerated [emim][Tf$_2$N]-Ag is recycled back to the separator 110 via solvent stream 122. Recovered ethylene flows from the regenerator 120 into recovered stream 121.

For a solvent stream 122 flow rate of 16,905 lb/hr (37269 kg/hr), and a mass flow ratio of liquid to gas of about 15, ethylene recovery in recovered stream 121 is about 97%, and the purity of the recovered ethylene is about 98.96%.

Reference Example 2 demonstrates an ionic liquid solvent as disclosed herein can selectively capture one gaseous component of the process stream 111, i.e., in the case of Reference Example 2, ethylene. Moreover, the recovery of the gaseous component is about 97% by weight of ethylene in the process stream 111, and the purity of ethylene is about 98.96% by mole of ethylene in the recovered stream 121. The selective capture of one gaseous component may avoid the need for separation of the gaseous component (i.e., ethylene) from other gaseous components subsequent to the regenerator 120. Such cases may reduce capital cost for process stream component separations and/or provide selective recovery of a gaseous component which may otherwise be difficult, expensive, or inefficient to separate from the process stream 111.

Reference EXAMPLE 3

Example 3 utilizes the system 200 of Figure 2. Process stream 111 of Figure 1 comprising gaseous hydrogen, nitrogen, ethane, ethylene and isobutane is fed to the bottom of the separator 110. The composition and conditions of the process stream 111 for Example 3 are shown in Table 2 below:

**Table 2**

| Composition | Mass flow (lb/hr) | Molar flow (kmol/hr) | Molar fraction | Partial pressure (psia) |
|---|---|---|---|---|
| Hydrogen | 29.7 (65.48 kg/hr) | 6.8 | 0.46 | 88.0 (606 kPa) |
| Nitrogen | 92.7 (204 kg/hr) | 1.5 | 0.10 | 19.6 (135 kPa) |
| Ethane | 66.7 (147 kg/hr) | 1.0 | 0.07 | 13.2 (91 kPa) |
| Ethylene | 251.5 (554.5 kg/hr) | 4.1 | 0.28 | 53.2 (367 kPa) |
| I-Butane | 165.4 (364.6 kg/hr) | 1.3 | 0.09 | 16.9 (117 kPa) |
| Total | 606 (1340 kg/hr) | 14.6 | 1.00 | 191.0 (1.3 MPa) |

Solvent stream 122 comprising the ionic liquid solvent is fed to the top of the separator 110. The pressure of the separator 110 is about 186 psia (1.3 MPa), and the temperature is about 30 °C. The ionic liquid solvent is [emim][Tf$_2$N]-Ag, and the concentration of Ag(I) in the ionic liquid solvent is about 1.8 N.

In the separator 110, gaseous ethane, ethylene and isobutane rise through the ionic liquid solvent, and ethylene is absorbed (via complexing as described herein) into the [emim][Tf$_2$N]-Ag. The ethylene which is complexed with the [emim][Tf$_2$N]-Ag exits the separator 110 and flows to a regenerator 120 via captured stream 113. Ethylene desorbs from the [emim][Tf$_2$N]-Ag in the regenerator 120, where the pressure is 16 psia (110 kPa) and the temperature is about 149 °C, so as to regenerate the [emim][Tf$_2$N]-Ag. The regenerated [emim][Tf$_2$N]-Ag is recycled back to the separator 110 via solvent stream 122.

Isobutane which is not absorbed in the separator 110 flows via stream 112 to a membrane unit 130. Isobutane is recovered as permeate of an isobutane-selective membrane 135 in the membrane unit 130. Isobutane flows from the membrane unit 130 in stream 132. Ethane and any remaining gas are recovered in the retentate of the membrane via stream 131.

For a solvent stream 122 flow rate of about 6,000 lb/hr (13000 kg/hr), and a mass flow ratio of liquid to gas of about 10, ethylene recovery is about 92.6% by weight of ethylene in the process stream 111, the purity of the recovered ethylene is about 98.3% by mole of ethylene in the recovered stream 121, and isobutane recovery is as high as about 98% by weight of isobutane in the process stream 111.

Reference Example 3 demonstrates utilization of a membrane unit 130 to recover the second gaseous component (i.e., isobutane) can provide for a smaller solvent circulation system. When compared with Examples 1 and 2, the mass flow ratio of ionic liquid solvent in Reference Example 3 is about 10, while the mass flow ratio for Reference Example 1 is about 200 and the mass flow ratio of Reference Example 2 is about 15. In cases where circulation capacities to achieve mass flow ratios such as those in Reference Examples 1 and 2 are not available (e.g., such capacity is cost-prohibitive, retrofitting for such a capacity is not possible, a footprint for such a capacity is not available, etc.), Reference Example 3 provides for 92.6% recovery of ethylene in the separator 110 using a mass flow ratio of 10 and up to 98% recovery of isobutane in the membrane unit 130.

EXAMPLE 4

Olefin solubility and olefin/alkane selectivity was evaluated for various embodiments of the disclosed silver-based ionic liquid solvent (AgIL). Propylene was used as the olefin and propane was used as the alkane. To obtain the total solubility of propylene and total selectivity of propylene to propane, the following methodology was used. The order of the following steps is not limited to that disclosed and the steps may be rearranged, combined, or omitted according to knowledge of one skilled in the art with the aid of this disclosure.

First, a stoichiometric ratio between olefin (i.e., propylene) and silver ions of 1:1 was assumed, illustrated by the following Equation (1):

$$C_3{=} + Ag^+ \ \text{----} \ C_3{=}Ag^+ \tag{1}$$

Second, the equilibrium constant $K_{eq}$, for the reaction in Equation (1) was defined as:

$$K_{eq} = [C_3{=}Ag^+] / ([C_3{=}]_p [Ag^+]) \tag{2}$$

where each of $[C_3{=}Ag^+]$, $[C_3{=}]_p$, and $[Ag^+]$ are in units of mol/L, thus making $K_{eq}$ in units of L/mol.

Third, Henry's constant for propylene, $H_{C3=}$, was defined as:

$$H_{C3=} \ = \ [C_3{=}]_p / P_{C3=} \tag{3}$$

where $P_{C3=}$ is the partial pressure of propylene in units of Bar, and $[C_3{=}]_p$ is the physical solubility of propylene in units of mol/L, thus making $H_{C3=}$ in units of mol/(L-Bar).

Fourth, the physical solubility of propylene, $[C_3{=}]_p$, the chemical solubility of propylene, $[C_3{=}]_c$, and the free silver-ion concentration, $[Ag^+]$, were defined. The physical solubility of propylene, $[C_3{=}]_p$, in units of mol/L was defined by rearranging Equation (3):

$$[C_3{=}]_p = P_{C3=} * H_{C3=} \tag{4}$$

The chemical solubility of propylene, $[C_3{=}]_c$, in units of mol/L was defined as the concentration of propylene complexed with silver ions:

$$[C_3{=}]_c = [C_3{=}Ag^+] \tag{5}$$

The free silver-ion concentration, $[Ag^+]$, in units of mol/L was defined as the concentration of silver ions remaining after subtracting the total concentration of silver ions, $[Ag^+]_t$, in units of mol/L, from the concentration of silver ions complexed with propylene, $[C_3{=}Ag^+]$, in units of mol/L:

$$[Ag^+] = [Ag^+]_t - [C_3{=}Ag^+] \tag{6}$$

Substituting Equation (2) into Equation (6) yields for the free silver-ion concentration:

$$[Ag^+] = [Ag^+]_t - K_{eq} * [C_3=]_p * [Ag^+] \qquad (7).$$

Fifth, the total propylene solubility, $[C_{3=}]_t$, in units of mol/L was defined as:

$$[C_3=]_t = [C_3=]_p + [C_3=]_c \qquad (8).$$

When substituting the physical solubility and chemical solubility of Equations (4) and (5) into Equation (8), the total solubility becomes:

$$[C_3=]_t = P_{C3=} * H_{C3=} + [C_3=Ag^+] \qquad (9).$$

Solving Equation (6) for $[C_3=Ag^+]$ and substituting such solution into Equation (9), the total solubility becomes:

$$[C_3=]_t = P_{C3=} * H_{C3=} + ([Ag^+]_t - [Ag^+]) \qquad (10).$$

Solving Equation (7) for $([Ag^+]_t - [Ag^+])$ and substituting such solution into Equation (10), the total solubility becomes:

$$[C_3=]_t = P_{C3=} * H_{C3=} + K_{eq} * ([C_3=]_p [Ag^+]) \qquad (11).$$

Again using Equation (4) to substitute for physical solubility, $[C_3=]_p$, the total solubility becomes:

$$[C_3=]_t = (P_{C3=} * H_{C3=}) + (K_{eq} * P_{C3=} * H_{C3=} * [Ag^+]) \qquad (12).$$

Solving Equation (7) for the free silver-ion centration, $[Ag^+]$, and substituting such solution into Equation (12), the total solubility becomes:

$$[C_3=]_t = (P_{C3=} * H_{C3=}) + (K_{eq} * P_{C3=} * H_{C3=}) * ([Ag^+]_t / (1 + K_{eq} * P_{C3=} * H_{C3=})) \qquad (13),$$

which when simplified yields:

$$[C_3=]_t = (P_{C3=} * H_{C3=}) * (1 + (K_{eq} * ([Ag^+]_t / (1 + K_{eq} * P_{C3=} * H_{C3=})) \qquad (14).$$

Sixth, the physical selectivity, $S_p$, of propylene to propane was defined as:

$$S_p = [C_3=]_p / [C_3]_p \qquad (15),$$

where $[C_3=]_p$ is the physical solubility of propylene and $[C_3]_p$ is the physical solubility of propane, both in units of mol/L, thus making the physical selectivity unitless.

Seventh, the total selectivity St, of propylene to propane was defined as, again unitless:

$$S_t = [C_3=]_t / [C_3]_t \qquad (16).$$

The total solubility of propylene, $[C_3=]_t$, is defined above in Equation (14), and the total solubility of propane, $[C_3]_t$, was defined as:

$$[C_3]_t = [C_3]_p + [C_3]_c \hspace{2cm} (17),$$

where the total solubility, $[C_3]_t$, is the sum of the physical solubility of propane, $[C_3]_p$, and the chemical solubility of propane, $[C_3]_c$. Solving Equation (15) for the physical solubility of propane, $[C_3]_p$, and substituting such solution into Equation (17), the total solubility of propane becomes:

$$[C_3]_t = ([C_{3=}]_p / S_p) + [C_3]_c \hspace{2cm} (18).$$

Substituting Equation (14) for total propylene solubility, $[C_{3=}]_t$, and substituting Equation (18) for the total propane solubility, $[C_{3=}]_t$, the total selectivity, St, becomes:

$$S_t = ((P_{C3=} * H_{C3=}) * (1 + (K_{eq} * ([Ag^+]_t / (1 + K_{eq}* P_{C3=} * H_{C3=}))) / ([C_{3=}]_p / S_p ) + [C_3]_c) \hspace{1cm} (19).$$

Substituting Equation (4) into Equation (19) yields:

$$S_t = [(P_{C3=} * H_{C3=}) * (1 + (K_{eq} * ([Ag^+]_t / (1 + K_{eq}* P_{C3=} * H_{C3=}))] / (P_{C3=} * H_{C3=} / S_p + [C_3]_c) \hspace{0.3cm} (20).$$

Equations (14) and (20) were used to calculate the total solubility of propylene and the total selectivity of propylene over propane for the ionic liquid combinations. To simplify calculations, assumptions were made as to the values of some variables in Equations (14) and (20), shown in Table 3 below:

Table 3

| $P_{C3=}$ (Bar) | $K_{eq}$ (L/mol) | $[Ag^+]_t$ (mol/L) | $[C_3]_c$ (mol/L) |
|---|---|---|---|
| 1 | 100 | 1 | 0 |

As can be seen, the partial pressure of propylene, $P_{C3=}$, was assumed to be 1 Bar, the equilibrium constant, Keq, was assumed to be 100 L/mol, the total concentration of silver ions, $[Ag^+]_t$, was assumed to be 1 mol/L, and the chemical solubility of propane, $[C_3]_c$, was assumed to be zero. Values for the Henry's constant for propylene, $H_{C3=}$ and physical selectivity, $S_p$, were derived according to the COSMO-RS methodology set forth in Marcos Fallanza et al., Screening of RTILs for propane/propylene separation using COSMO-RS methodology, 220 CHEM. ENG. J. 284, 284-293 (2013).

The Henry's constant values for propylene, $H_{C3=}$, for various anion and cation combinations of the ionic liquids disclosed herein at a temperature of 298.15 K in units of mol/L-Bar are shown in Table 4 below:

## Table 4 – Henry's Constant for Propylene, $H_{C3=}$ (mol/L-Bar)

| Cation | Anion | | | | | | | |
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
|---|---|---|---|---|---|---|---|---|
| 111-beim | 0.111 | 0.131 | 0.208 | 0.172 | 0.139 | 0.161 | 0.156 | 0.135 |
| 111-bmim | 0.079 | 0.113 | 0.192 | 0.147 | 0.098 | 0.125 | 0.119 | 0.109 |
| 111-bmmim | 0.128 | 0.135 | 0.263 | 0.217 | 0.139 | 0.172 | 0.167 | 0.172 |
| 111-dceim | 0.250 | 0.217 | 0.278 | 0.250 | 0.313 | 0.294 | 0.294 | 0.227 |
| 111-dcmim | 0.208 | 0.200 | 0.250 | 0.217 | 0.278 | 0.250 | 0.263 | 0.200 |
| 111-eeim | 0.076 | 0.098 | 0.217 | 0.167 | 0.077 | 0.116 | 0.104 | 0.122 |
| 111-mmim | 0.036 | 0.060 | 0.250 | 0.167 | 0.022 | 0.059 | 0.046 | 0.128 |
| 111-e24mmim | 0.074 | 0.094 | 0.217 | 0.172 | 0.074 | 0.116 | 0.102 | 0.125 |
| 111-emmim | 0.096 | 0.096 | 0.313 | 0.238 | 0.077 | 0.128 | 0.111 | 0.192 |
| 111-eim | 0.011 | 0.057 | 0.076 | 0.048 | 0.021 | 0.036 | 0.033 | 0.023 |
| 111-emim | 0.050 | 0.079 | 0.208 | 0.156 | 0.045 | 0.083 | 0.072 | 0.109 |
| 111-epim | 0.092 | 0.116 | 0.208 | 0.167 | 0.109 | 0.139 | 0.131 | 0.125 |
| 111-etO-emim | 0.098 | 0.119 | 0.227 | 0.178 | 0.111 | 0.143 | 0.135 | 0.139 |
| 111-etO-mmim | 0.046 | 0.086 | 0.151 | 0.111 | 0.057 | 0.085 | 0.078 | 0.074 |
| 111-hexadmim | 0.357 | 0.263 | 0.334 | 0.313 | 0.455 | 0.385 | 0.385 | 0.313 |
| 111-hpmim | 0.139 | 0.156 | 0.208 | 0.172 | 0.185 | 0.192 | 0.192 | 0.147 |
| 111-hxeim | 0.151 | 0.161 | 0.217 | 0.192 | 0.200 | 0.200 | 0.200 | 0.161 |
| 111-hxmim | 0.116 | 0.143 | 0.200 | 0.161 | 0.156 | 0.167 | 0.167 | 0.131 |
| 111-hxmmim | 0.167 | 0.161 | 0.263 | 0.227 | 0.200 | 0.217 | 0.217 | 0.185 |
| 111-meO-emim | 0.085 | 0.102 | 0.238 | 0.192 | 0.083 | 0.125 | 0.111 | 0.143 |
| 111-meO-prmim | 0.104 | 0.119 | 0.238 | 0.192 | 0.111 | 0.147 | 0.139 | 0.147 |
| 111-mim | 0.004 | 0.042 | 0.072 | 0.041 | 0.009 | 0.019 | 0.016 | 0.017 |
| 111-mmim | 0.036 | 0.060 | 0.250 | 0.167 | 0.022 | 0.059 | 0.046 | 0.128 |
| 111-mnim | 0.185 | 0.185 | 0.227 | 0.200 | 0.250 | 0.238 | 0.238 | 0.178 |
| 111-mpim | 0.047 | 0.086 | 0.185 | 0.139 | 0.052 | 0.086 | 0.078 | 0.092 |
| 111-octadmim | 0.385 | 0.278 | 0.357 | 0.357 | 0.500 | 0.417 | 0.455 | 0.357 |
| 111-OH-emim | 0.020 | 0.051 | 0.131 | 0.089 | 0.019 | 0.043 | 0.036 | 0.057 |
| 111-OH-omim | 0.111 | 0.125 | 0.178 | 0.151 | 0.143 | 0.156 | 0.151 | 0.122 |
| 111-OH-prmim | 0.032 | 0.059 | 0.147 | 0.104 | 0.030 | 0.058 | 0.050 | 0.070 |
| 111-omim | 0.161 | 0.172 | 0.217 | 0.185 | 0.217 | 0.208 | 0.217 | 0.161 |
| 111-ommim | 0.208 | 0.192 | 0.278 | 0.250 | 0.263 | 0.263 | 0.263 | 0.217 |

| | Anion | | | | | | | |
| --- | --- | --- | --- | --- | --- | --- | --- | --- |
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 111-ph-emim | 0.059 | 0.109 | 0.147 | 0.116 | 0.083 | 0.106 | 0.104 | 0.079 |
| 111-ph-mim | 0.058 | 0.109 | 0.167 | 0.131 | 0.078 | 0.106 | 0.102 | 0.086 |
| 111-ph-mmim | 0.058 | 0.109 | 0.161 | 0.122 | 0.080 | 0.106 | 0.102 | 0.083 |
| 111-pnmim | 0.098 | 0.128 | 0.192 | 0.156 | 0.128 | 0.147 | 0.143 | 0.119 |
| 111-prmim | 0.065 | 0.096 | 0.200 | 0.151 | 0.070 | 0.106 | 0.096 | 0.109 |
| 112-1b2mpy | 0.119 | 0.131 | 0.250 | 0.208 | 0.135 | 0.167 | 0.161 | 0.161 |
| 112-1b3mpy | 0.122 | 0.135 | 0.227 | 0.192 | 0.143 | 0.172 | 0.167 | 0.151 |
| 112-1b4DMApy | 0.185 | 0.167 | 0.294 | 0.263 | 0.217 | 0.238 | 0.238 | 0.217 |
| 112-1b4mpy | 0.122 | 0.135 | 0.227 | 0.192 | 0.143 | 0.167 | 0.161 | 0.151 |
| 112-1e2mpy | 0.085 | 0.096 | 0.278 | 0.217 | 0.072 | 0.122 | 0.106 | 0.167 |
| 112-1e3mpy | 0.083 | 0.100 | 0.238 | 0.192 | 0.078 | 0.122 | 0.109 | 0.143 |
| 112-1e4DMApy | 0.139 | 0.135 | 0.294 | 0.250 | 0.143 | 0.185 | 0.172 | 0.200 |
| 112-1e4mpy | 0.082 | 0.100 | 0.238 | 0.192 | 0.078 | 0.119 | 0.109 | 0.143 |
| 112-1hx4DMApy | 0.238 | 0.200 | 0.313 | 0.278 | 0.278 | 0.278 | 0.294 | 0.250 |
| 112-1hx4mpy | 0.161 | 0.167 | 0.238 | 0.208 | 0.200 | 0.208 | 0.217 | 0.172 |
| 112-1o3mpy | 0.208 | 0.192 | 0.263 | 0.238 | 0.263 | 0.250 | 0.263 | 0.208 |
| 112-1o4mpy | 0.208 | 0.192 | 0.263 | 0.227 | 0.263 | 0.250 | 0.263 | 0.208 |
| 112-1pr3mpy | 0.104 | 0.119 | 0.238 | 0.192 | 0.111 | 0.147 | 0.139 | 0.147 |
| 112-1pr4mpy | 0.100 | 0.119 | 0.227 | 0.185 | 0.109 | 0.143 | 0.135 | 0.143 |
| 112-bpy | 0.072 | 0.111 | 0.178 | 0.139 | 0.092 | 0.119 | 0.113 | 0.100 |
| 112-epy | 0.043 | 0.076 | 0.200 | 0.143 | 0.039 | 0.076 | 0.064 | 0.098 |
| 112-hppy | 0.131 | 0.156 | 0.200 | 0.167 | 0.178 | 0.185 | 0.185 | 0.135 |
| 112-hxpy | 0.111 | 0.139 | 0.185 | 0.151 | 0.151 | 0.161 | 0.161 | 0.122 |
| 112-OH-prpy | 0.037 | 0.070 | 0.151 | 0.109 | 0.039 | 0.069 | 0.061 | 0.072 |
| 112-opy | 0.151 | 0.167 | 0.208 | 0.178 | 0.208 | 0.208 | 0.208 | 0.151 |
| 112-pnpy | 0.091 | 0.125 | 0.178 | 0.143 | 0.119 | 0.139 | 0.135 | 0.109 |
| 112-prpy | 0.058 | 0.094 | 0.185 | 0.135 | 0.066 | 0.098 | 0.089 | 0.094 |
| 113-bmpyr | 0.119 | 0.116 | 0.294 | 0.238 | 0.111 | 0.161 | 0.147 | 0.192 |
| 113-bpyr | 0.034 | 0.089 | 0.089 | 0.065 | 0.062 | 0.074 | 0.073 | 0.042 |
| 113-hxmpyr | 0.151 | 0.147 | 0.263 | 0.227 | 0.167 | 0.200 | 0.192 | 0.192 |
| 113-hxpyr | 0.066 | 0.116 | 0.113 | 0.089 | 0.111 | 0.113 | 0.113 | 0.067 |
| 113-ompyr | 0.192 | 0.172 | 0.278 | 0.238 | 0.227 | 0.238 | 0.238 | 0.208 |
| 113-opyr | 0.104 | 0.143 | 0.139 | 0.116 | 0.161 | 0.156 | 0.156 | 0.098 |
| 113-prmpyr | 0.111 | 0.102 | 0.334 | 0.263 | 0.088 | 0.143 | 0.125 | 0.208 |
| 115-b-N | 0.007 | 0.053 | 0.017 | 0.011 | 0.045 | 0.023 | 0.025 | 0.005 |
| 115-bbb-N | 0.167 | 0.167 | 0.227 | 0.208 | 0.208 | 0.217 | 0.217 | 0.178 |

| | Anion | | | | | | | |
|---|---|---|---|---|---|---|---|---|
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 115-bbbb-N | 0.334 | 0.238 | 0.385 | 0.385 | 0.385 | 0.385 | 0.385 | 0.357 |
| 115-bemm-N | 0.102 | 0.111 | 0.263 | 0.217 | 0.098 | 0.143 | 0.131 | 0.167 |
| 115-bmmm-N | 0.064 | 0.089 | 0.227 | 0.167 | 0.061 | 0.100 | 0.089 | 0.125 |
| 115-choline | 0.015 | 0.034 | 0.200 | 0.119 | 0.006 | 0.023 | 0.017 | 0.109 |
| 115-e-N | 0.001 | 0.035 | 0.005 | 0.003 | 0.125 | 0.007 | 0.009 | 0.000 |
| 115-ee-N | 0.008 | 0.049 | 0.067 | 0.044 | 0.014 | 0.029 | 0.026 | 0.022 |
| 115-eeee-N | 0.151 | 0.111 | 0.385 | 0.334 | 0.113 | 0.178 | 0.151 | 0.278 |
| 115-hphphphp-N | 0.624 | 0.334 | 0.555 | 0.555 | 0.624 | 0.624 | 0.624 | 0.555 |
| 115-hxhxhxhx-N | 0.500 | 0.313 | 0.500 | 0.500 | 0.555 | 0.555 | 0.555 | 0.500 |
| 115-m-N | 10.74 | 0.032 | 0.001 | 0.000 | 2.300 | 0.005 | 0.007 | 0.000 |
| 115-mm-N | 0.000 | 0.029 | 0.021 | 0.010 | 0.038 | 0.005 | 0.005 | 0.002 |
| 115-mmmm-N | 0.053 | 0.041 | 0.555 | 0.313 | 0.008 | 0.042 | 0.026 | 0.417 |
| 115-N | n/a | 0.057 | 0.0001 | 0.0002 | n/a | 0.012 | 0.063 | n/a |
| 115-OHe-bmm-N | 0.059 | 0.092 | 0.178 | 0.135 | 0.067 | 0.100 | 0.092 | 0.098 |
| 115-OHe-mm-N | 0.002 | 0.029 | 0.065 | 0.036 | 0.004 | 0.010 | 0.009 | 0.020 |
| 115-OHe-N | 0.054 | 0.031 | 0.001 | 0.001 | 0.385 | 0.005 | 0.007 | 0.000 |
| 115-OHee-mm-N | 0.041 | 0.062 | 0.227 | 0.156 | 0.028 | 0.065 | 0.052 | 0.119 |
| 115-pnpnpnpn-N | 0.417 | 0.278 | 0.455 | 0.455 | 0.500 | 0.455 | 0.500 | 0.417 |
| 115-prprprpr-N | 0.238 | 0.185 | 0.357 | 0.334 | 0.250 | 0.278 | 0.278 | 0.278 |
| 116-bbbb-P | 0.334 | 0.238 | 0.357 | 0.357 | 0.385 | 0.357 | 0.385 | 0.334 |
| 116-bbbo-P | 0.417 | 0.278 | 0.417 | 0.417 | 0.500 | 0.455 | 0.500 | 0.417 |

The Henry's constant values shown in Table 4 above are in units of mol/L-Bar; whereas, the COSMO-RS methodology set forth in Marcos Fallanza et al., Screening of RTILs for propane/propylene separation using COSMO-RS methodology, 220 CHEM. ENG. J. 284, 284-293 (2013), provides Henry's constant values in units of MPa. Thus, the MPa units for the Henry's constant values were converted to mol/L-Bar for Table 4. To do so, the inverse of values in units of MPa was obtained (i.e., values in units of 1/MPa). Next, a correlation between units of 1/MPa and mol/L-Bar was developed for an assumed ionic liquid solvent molarity of 5M and different partial pressures for propylene (1, 2, 3, and 4 Bar). The following correlation was used:

$$H' = 0.0577 * H^2 + 0.4977 * H \qquad\qquad (21)$$

where H' is Henry's law constant in units of mol/L-Bar and H is Henry's law constant in units of 1/MPa. While certain ionic liquid solvents are disclosed as suitable based on use of Henry's constant values obtained using this correlation, it is within the scope of this disclosure that other ionic liquid solvents may also be suitable using correlations having a different assumption for ionic liquid solvent molarity and a different combination of partial pressures, such as an ionic liquid solvent molarity of 1, 2, 3, 4, 5, 6, 7, 8, 9, or 10 mol/L and partial pressures up to 10 Bar.

The physical selectivity of propylene to propane, S$_p$, values for the various anion/cation combinations were calculated using the Henry's constant values of propylene and propane at a temperature of 298.15 K. The Henry's constant values in units of MPa were derived according to the COSMO-RS methodology set forth in Marcos Fallanza et al., Screening of RTILs for propane/propylene separation using COSMO-RS methodology, 220 CHEM. ENG. J. 284, 284-293 (2013), and are shown in Tables 5 and 6 below:

## Table 5 – Henry's Constant of Propane, $H_{C3}$ (MPa)

| Cation | Anion | | | | | | | |
|---|---|---|---|---|---|---|---|---|
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 111-beim | 14.8 | 5.1 | 5.3 | 7.1 | 13.2 | 8.7 | 9.5 | 10.1 |
| 111-bmim | 22.4 | 6.4 | 6.1 | 8.5 | 20.6 | 11.8 | 13.4 | 13.1 |
| 111-bmmim | 12.9 | 5.1 | 4.3 | 5.6 | 13.2 | 8.2 | 9.1 | 7.8 |
| 111-dceim | 5.5 | 2.7 | 3.8 | 4.5 | 4.4 | 4 | 4.1 | 5.2 |
| 111-dcmim | 6.9 | 3 | 4.4 | 5.4 | 5.3 | 4.8 | 4.9 | 6.4 |
| 111-eeim | 23.7 | 7.6 | 5.2 | 7.3 | 27.8 | 13.2 | 15.9 | 11 |
| 111-mmim | 56.5 | 15.1 | 4.8 | 7.5 | 141 | 32.8 | 46.1 | 10.5 |
| 111-e24mmim | 24.1 | 7.8 | 5.2 | 7.1 | 28.7 | 13.2 | 16 | 11 |
| 111-emmim | 17.9 | 8 | 3.6 | 4.9 | 28.4 | 12.1 | 15.3 | 6.7 |
| 111-eim | 246.1 | 15.3 | 17.7 | 29.5 | 159.1 | 54.2 | 64.4 | 76.8 |
| 111-emim | 38.7 | 10.4 | 5.5 | 8.1 | 56.2 | 20.3 | 25.8 | 12.7 |
| 111-epim | 18.4 | 6 | 5.4 | 7.3 | 18.1 | 10.4 | 11.8 | 10.8 |
| 111-etO-emim | 17.6 | 6.1 | 5.1 | 6.9 | 17.9 | 10.3 | 11.7 | 10.2 |
| 111-etO-mmim | 44.5 | 9.2 | 8.2 | 12 | 42.4 | 19.9 | 23.2 | 20.9 |
| 111-hexadmim | 3.5 | 2 | 3 | 3.4 | 2.8 | 2.9 | 2.8 | 3.6 |
| 111-hpmim | 11.4 | 4.1 | 5.4 | 7 | 9 | 6.9 | 7.3 | 9.3 |
| 111-hxeim | 10 | 3.9 | 4.9 | 6.2 | 8.2 | 6.4 | 6.7 | 8.1 |
| 111-hxmim | 14 | 4.7 | 5.7 | 7.6 | 11.3 | 8.1 | 8.7 | 10.6 |
| 111-hxmmim | 9.3 | 3.9 | 4.3 | 5.4 | 8.2 | 6.2 | 6.5 | 7.1 |
| 111-meO-emim | 20.9 | 7.4 | 4.8 | 6.6 | 25.8 | 12.6 | 15 | 9.7 |

| | Anion | | | | | | | |
|---|---|---|---|---|---|---|---|---|
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 111-meO-prmim | 16.2 | 6.1 | 4.8 | 6.3 | 17.5 | 9.9 | 11.4 | 9.2 |
| 111-mim | 944.2 | 23.1 | 20 | 36.8 | 508.5 | 130 | 156.8 | 106.4 |
| 111-mmim | 56.5 | 15.1 | 4.8 | 7.5 | 141 | 32.8 | 46.1 | 10.5 |
| 111-mnim | 8 | 3.3 | 4.7 | 5.9 | 6.2 | 5.3 | 5.5 | 7.2 |
| 111-mpim | 43.3 | 9.4 | 6.6 | 9.6 | 48.8 | 20.1 | 24.1 | 16.2 |
| 111-octadmim | 3 | 1.8 | 2.7 | 3 | 2.5 | 2.5 | 2.5 | 3.1 |
| 111-OH-emim | 106.8 | 17.4 | 9.5 | 14.7 | 161.9 | 44.5 | 58.2 | 26.2 |
| 111-OH-omim | 13.9 | 5.2 | 6.2 | 8.1 | 11.6 | 8.6 | 9.2 | 10.9 |
| 111-OH-prmim | 61.9 | 14.3 | 8.4 | 12.4 | 85 | 29.9 | 38.1 | 20.8 |
| 111-omim | 9.5 | 3.7 | 5 | 6.4 | 7.4 | 6.1 | 6.3 | 8.2 |
| 111-ommim | 6.9 | 3.2 | 4 | 4.9 | 5.8 | 4.9 | 5 | 6 |
| 111-ph-emim | 34.1 | 7.2 | 8.8 | 12.2 | 27 | 15.6 | 16.9 | 20.4 |
| 111-ph-mim | 35.3 | 7.3 | 7.5 | 10.5 | 30.1 | 15.9 | 17.7 | 18.2 |
| 111-ph-mmim | 35.2 | 7.3 | 8.1 | 11.3 | 28.9 | 16 | 17.5 | 19.4 |
| 111-pnmim | 17.5 | 5.4 | 6 | 8.1 | 14.8 | 9.6 | 10.6 | 11.9 |
| 111-prmim | 28.8 | 8 | 5.9 | 8.3 | 31.8 | 14.9 | 17.8 | 13.3 |
| 112-1b2mpy | 14.1 | 5.3 | 4.6 | 6 | 14 | 8.6 | 9.6 | 8.6 |
| 112-1b3mpy | 13.5 | 5 | 4.8 | 6.3 | 12.8 | 8.3 | 9.1 | 8.9 |
| 112-1b4DMApy | 8.2 | 3.8 | 3.8 | 4.7 | 7.7 | 5.7 | 6 | 6.1 |
| 112-1b4mpy | 13.6 | 5.1 | 4.9 | 6.3 | 12.9 | 8.3 | 9.2 | 8.9 |
| 112-1e2mpy | 21.4 | 8.2 | 4.1 | 5.7 | 31.6 | 13.4 | 16.7 | 8.2 |
| 112-1e3mpy | 21.5 | 7.7 | 4.7 | 6.4 | 28.1 | 12.9 | 15.7 | 9.4 |
| 112-1e4DMApy | 11.9 | 5.2 | 3.8 | 4.9 | 13.3 | 7.9 | 8.9 | 6.7 |
| 112-1e4mpy | 21.9 | 7.7 | 4.7 | 6.5 | 28.4 | 13 | 15.8 | 9.6 |
| 112-1hx4DMApy | 6.2 | 3 | 3.6 | 4.3 | 5.4 | 4.5 | 4.6 | 5.2 |
| 112-1hx4mpy | 9.5 | 3.9 | 4.6 | 5.8 | 8.1 | 6.2 | 6.5 | 7.6 |
| 112-1o3mpy | 6.9 | 3.1 | 4.1 | 5.1 | 5.6 | 4.8 | 5 | 6.2 |
| 112-1o4mpy | 6.9 | 3.1 | 4.2 | 5.1 | 5.6 | 4.9 | 5 | 6.2 |
| 112-1pr3mpy | 16.5 | 6 | 4.8 | 6.4 | 17.6 | 9.9 | 11.4 | 9.3 |
| 112-1pr4mpy | 17.1 | 6.1 | 4.9 | 6.5 | 18.2 | 10.2 | 11.7 | 9.6 |
| 112-bpy | 25.6 | 6.7 | 6.6 | 9.3 | 23 | 12.9 | 14.7 | 14.8 |
| 112-epy | 48.1 | 11.3 | 6 | 9.1 | 70.3 | 23.8 | 30.4 | 14.7 |
| 112-hppy | 12.3 | 4.2 | 5.7 | 7.5 | 9.5 | 7.4 | 7.7 | 10.2 |
| 112-hxpy | 15.4 | 4.8 | 6.1 | 8.2 | 12.1 | 8.7 | 9.3 | 11.7 |
| 112-OH-prpy | 54.2 | 11.7 | 8.1 | 11.9 | 65 | 24.9 | 30.9 | 20.4 |
| 112-opy | 10.1 | 3.8 | 5.3 | 6.9 | 7.7 | 6.4 | 6.6 | 8.9 |

| | Anion | | | | | | | |
|---|---|---|---|---|---|---|---|---|
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 112-pnpy | 19.6 | 5.6 | 6.4 | 8.8 | 16.2 | 10.5 | 11.5 | 13.3 |
| 112-prpy | 33.8 | 8.4 | 6.5 | 9.4 | 35.8 | 16.6 | 19.7 | 15.4 |
| 113-bmpyr | 12.9 | 5.7 | 3.7 | 4.9 | 15.8 | 8.7 | 10 | 6.6 |
| 113-bpyr | 59.5 | 8.1 | 13.3 | 20.2 | 35.6 | 20.4 | 22.4 | 37.7 |
| 113-hxmpyr | 9.8 | 4.2 | 4 | 5.1 | 9.5 | 6.6 | 7.1 | 6.7 |
| 113-hxpyr | 26.5 | 5.7 | 10 | 14.1 | 16.7 | 12 | 12.7 | 21.3 |
| 113-ompyr | 7.4 | 3.4 | 3.9 | 4.8 | 6.5 | 5.1 | 5.3 | 5.9 |
| 113-opyr | 14.9 | 4.4 | 7.7 | 10.3 | 10 | 8.1 | 8.4 | 13.5 |
| 113-prmpyr | 14 | 7 | 3.3 | 4.4 | 21.5 | 10 | 12.3 | 5.8 |
| 115-b-N | 401.4 | 13.6 | 73.8 | 130.3 | 50.9 | 65.1 | 63.1 | 418.4 |
| 115-bbb-N | 8.1 | 3.4 | 4.4 | 5.5 | 6.8 | 5.4 | 5.6 | 6.7 |
| 115-bbbb-N | 3.6 | 2.2 | 2.6 | 2.9 | 3.2 | 2.9 | 2.9 | 3.2 |
| 115-bemm-N | 15.7 | 6.3 | 4.1 | 5.5 | 19 | 10 | 11.7 | 7.6 |
| 115-bmmm-N | 26.9 | 8.3 | 4.9 | 7 | 34.6 | 15.2 | 18.4 | 10.5 |
| 115-choline | 125.1 | 27.7 | 5.8 | 10 | 652.4 | 87.5 | 133.2 | 11.2 |
| 115-e-N | 4985.6 | 23.1 | 292.8 | 634 | 16.2 | 281.3 | 239 | 12686.9 |
| 115-ee-N | 305.2 | 16.5 | 17.5 | 29.1 | 217.9 | 62.5 | 75 | 72 |
| 115-eeee-N | 9.9 | 6.2 | 2.7 | 3.4 | 16 | 7.8 | 9.7 | 4.3 |
| 115-hphphphp-N | 1.7 | 1.3 | 1.7 | 1.7 | 1.5 | 1.6 | 1.5 | 1.7 |
| 115-hxhxhxhx-N | 2.1 | 1.5 | 1.9 | 2 | 1.8 | 1.9 | 1.8 | 2.1 |
| 115-m-N | 0.2 | 25.6 | 1941.8 | 5384.2 | 0.8 | 492.3 | 322.2 | 2447083 |
| 115-mm-N | 102263 | 32.3 | 72 | 158 | 71.6 | 600.8 | 545.7 | 835.4 |
| 115-mmmm-N | 29.6 | 23.4 | 2 | 3.5 | 411.2 | 45.3 | 84.1 | 2.5 |
| 115-N | n/a | 10.9 | 14792.6 | 15091.9 | n/a | 95.7 | 16.4 | n/a |
| 115-OHe-bmm-N | 28.1 | 7.6 | 6.2 | 8.8 | 28.8 | 14.3 | 16.7 | 13.7 |
| 115-OHe-mm-N | 1412.8 | 32.5 | 20.2 | 37.2 | 1111.7 | 242.3 | 288.7 | 76.8 |
| 115-OHe-N | 36 | 26.1 | 1402.6 | 3202.8 | 3.7 | 387.1 | 263.5 | 79958.4 |
| 115-OHee-mm-N | 42.1 | 12.9 | 4.9 | 7.3 | 86.2 | 24.9 | 33.8 | 10.4 |
| 115-pnpnpnpn-N | 2.6 | 1.7 | 2.2 | 2.4 | 2.3 | 2.3 | 2.2 | 2.5 |
| 115-prprprpr-N | 5.6 | 3.1 | 2.9 | 3.4 | 5.6 | 4.2 | 4.5 | 4.1 |
| 116-bbbb-P | 3.7 | 2.1 | 2.7 | 3 | 3.2 | 3 | 2.9 | 3.4 |
| 116-bbbo-P | 2.7 | 1.7 | 2.3 | 2.5 | 2.3 | 2.3 | 2.2 | 2.6 |

**Table 6 – Henry's Constant of Propylene, $H_{C3=}$ (MPa)**

| Cation | Anion | | | | | | | |
| --- | --- | --- | --- | --- | --- | --- | --- | --- |
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 111-beim | 4.6 | 3.9 | 2.5 | 3 | 3.7 | 3.2 | 3.3 | 3.8 |
| 111-bmim | 6.4 | 4.5 | 2.7 | 3.5 | 5.2 | 4.1 | 4.3 | 4.7 |
| 111-bmmim | 4 | 3.8 | 2 | 2.4 | 3.7 | 3 | 3.1 | 3 |
| 111-dceim | 2.1 | 2.4 | 1.9 | 2.1 | 1.7 | 1.8 | 1.8 | 2.3 |
| 111-dcmim | 2.5 | 2.6 | 2.1 | 2.4 | 1.9 | 2.1 | 2 | 2.6 |
| 111-eeim | 6.7 | 5.2 | 2.4 | 3.1 | 6.6 | 4.4 | 4.9 | 4.2 |
| 111-mmim | 13.8 | 8.4 | 2.1 | 3.1 | 22.4 | 8.6 | 10.9 | 4 |
| 111-e24mmim | 6.8 | 5.4 | 2.4 | 3 | 6.8 | 4.4 | 5 | 4.1 |
| 111-emmim | 5.3 | 5.3 | 1.7 | 2.2 | 6.6 | 4 | 4.6 | 2.7 |
| 111-eim | 44.6 | 8.9 | 6.7 | 10.4 | 24 | 13.8 | 15.3 | 21.7 |
| 111-emim | 10 | 6.4 | 2.5 | 3.3 | 11.1 | 6.1 | 7 | 4.7 |
| 111-epim | 5.5 | 4.4 | 2.5 | 3.1 | 4.7 | 3.7 | 3.9 | 4.1 |
| 111-etO-emim | 5.2 | 4.3 | 2.3 | 2.9 | 4.6 | 3.6 | 3.8 | 3.7 |
| 111-etO-mmim | 11 | 5.9 | 3.4 | 4.6 | 8.9 | 6 | 6.5 | 6.8 |
| 111-hexadmim | 1.5 | 2 | 1.6 | 1.7 | 1.2 | 1.4 | 1.4 | 1.7 |
| 111-hpmim | 3.7 | 3.3 | 2.5 | 3 | 2.8 | 2.7 | 2.7 | 3.5 |
| 111-hxeim | 3.4 | 3.2 | 2.4 | 2.7 | 2.6 | 2.6 | 2.6 | 3.2 |
| 111-hxmim | 4.4 | 3.6 | 2.6 | 3.2 | 3.3 | 3.1 | 3.1 | 3.9 |
| 111-hxmmim | 3.1 | 3.2 | 2 | 2.3 | 2.6 | 2.4 | 2.4 | 2.8 |
| 111-meO-emim | 6 | 5 | 2.2 | 2.7 | 6.1 | 4.1 | 4.6 | 3.6 |
| 111-meO-prmim | 4.9 | 4.3 | 2.2 | 2.7 | 4.6 | 3.5 | 3.7 | 3.5 |
| 111-mim | 134.1 | 12 | 7 | 12.4 | 56.5 | 26.5 | 30.3 | 29 |
| 111-mmim | 13.8 | 8.4 | 2.1 | 3.1 | 22.4 | 8.6 | 10.9 | 4 |
| 111-mnim | 2.8 | 2.8 | 2.3 | 2.6 | 2.1 | 2.2 | 2.2 | 2.9 |
| 111-mpim | 10.6 | 5.9 | 2.8 | 3.7 | 9.7 | 5.9 | 6.5 | 5.5 |
| 111-octadmim | 1.4 | 1.9 | 1.5 | 1.5 | 1.1 | 1.3 | 1.2 | 1.5 |
| 111-OH-emim | 24.4 | 9.8 | 3.9 | 5.7 | 26.7 | 11.8 | 14.1 | 8.9 |
| 111-OH-omim | 4.6 | 4.1 | 2.9 | 3.4 | 3.6 | 3.3 | 3.4 | 4.2 |
| 111-OH-prmim | 15.5 | 8.5 | 3.5 | 4.9 | 16.5 | 8.7 | 10.1 | 7.2 |
| 111-omim | 3.2 | 3 | 2.4 | 2.8 | 2.4 | 2.5 | 2.4 | 3.2 |
| 111-ommim | 2.5 | 2.7 | 1.9 | 2.1 | 2 | 2 | 2 | 2.4 |
| 111-ph-emim | 8.5 | 4.7 | 3.5 | 4.4 | 6.1 | 4.8 | 4.9 | 6.4 |
| 111-ph-mim | 8.7 | 4.7 | 3.1 | 3.9 | 6.5 | 4.8 | 5 | 5.9 |
| 111-ph-mmim | 8.7 | 4.7 | 3.2 | 4.2 | 6.3 | 4.8 | 5 | 6.1 |
| 111-pnmim | 5.2 | 4 | 2.7 | 3.3 | 4 | 3.5 | 3.6 | 4.3 |
| 111-prmim | 7.8 | 5.3 | 2.6 | 3.4 | 7.2 | 4.8 | 5.3 | 4.7 |

| | Anion | | | | | | | |
|---|---|---|---|---|---|---|---|---|
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 112-1b2mpy | 4.3 | 3.9 | 2.1 | 2.5 | 3.8 | 3.1 | 3.2 | 3.2 |
| 112-1b3mpy | 4.2 | 3.8 | 2.3 | 2.7 | 3.6 | 3 | 3.1 | 3.4 |
| 112-1b4DMApy | 2.8 | 3.1 | 1.8 | 2 | 2.4 | 2.2 | 2.2 | 2.4 |
| 112-1b4mpy | 4.2 | 3.8 | 2.3 | 2.7 | 3.6 | 3.1 | 3.2 | 3.4 |
| 112-1e2mpy | 6 | 5.3 | 1.9 | 2.4 | 7 | 4.2 | 4.8 | 3.1 |
| 112-1e3mpy | 6.1 | 5.1 | 2.2 | 2.7 | 6.5 | 4.2 | 4.7 | 3.6 |
| 112-1e4DMApy | 3.7 | 3.8 | 1.8 | 2.1 | 3.6 | 2.8 | 3 | 2.6 |
| 112-1e4mpy | 6.2 | 5.1 | 2.2 | 2.7 | 6.5 | 4.3 | 4.7 | 3.6 |
| 112-1hx4DMApy | 2.2 | 2.6 | 1.7 | 1.9 | 1.9 | 1.9 | 1.8 | 2.1 |
| 112-1hx4mpy | 3.2 | 3.1 | 2.2 | 2.5 | 2.6 | 2.5 | 2.4 | 3 |
| 112-1o3mpy | 2.5 | 2.7 | 2 | 2.2 | 2 | 2.1 | 2 | 2.5 |
| 112-1o4mpy | 2.5 | 2.7 | 2 | 2.3 | 2 | 2.1 | 2 | 2.5 |
| 112-1pr3mpy | 4.9 | 4.3 | 2.2 | 2.7 | 4.6 | 3.5 | 3.7 | 3.5 |
| 112-1pr4mpy | 5.1 | 4.3 | 2.3 | 2.8 | 4.7 | 3.6 | 3.8 | 3.6 |
| 112-bpy | 7 | 4.6 | 2.9 | 3.7 | 5.5 | 4.3 | 4.5 | 5.1 |
| 112-epy | 11.7 | 6.7 | 2.6 | 3.6 | 12.9 | 6.7 | 7.9 | 5.2 |
| 112-hppy | 3.9 | 3.3 | 2.6 | 3.1 | 2.9 | 2.8 | 2.8 | 3.8 |
| 112-hxpy | 4.6 | 3.7 | 2.8 | 3.4 | 3.4 | 3.2 | 3.2 | 4.2 |
| 112-OH-prpy | 13.5 | 7.2 | 3.4 | 4.7 | 12.8 | 7.3 | 8.3 | 7 |
| 112-opy | 3.4 | 3.1 | 2.5 | 2.9 | 2.5 | 2.5 | 2.5 | 3.4 |
| 112-pnpy | 5.6 | 4.1 | 2.9 | 3.6 | 4.3 | 3.7 | 3.8 | 4.7 |
| 112-prpy | 8.7 | 5.4 | 2.8 | 3.8 | 7.7 | 5.2 | 5.7 | 5.4 |
| 113-bmpyr | 4.3 | 4.4 | 1.8 | 2.2 | 4.6 | 3.2 | 3.5 | 2.7 |
| 113-bpyr | 14.8 | 5.7 | 5.7 | 7.8 | 8.1 | 6.8 | 6.9 | 12.1 |
| 113-hxmpyr | 3.4 | 3.5 | 2 | 2.3 | 3.1 | 2.6 | 2.7 | 2.7 |
| 113-hxpyr | 7.7 | 4.4 | 4.5 | 5.7 | 4.6 | 4.5 | 4.5 | 7.5 |
| 113-ompyr | 2.7 | 3 | 1.9 | 2.2 | 2.3 | 2.2 | 2.2 | 2.5 |
| 113-opyr | 4.9 | 3.6 | 3.7 | 4.4 | 3.2 | 3.3 | 3.3 | 5.2 |
| 113-prmpyr | 4.6 | 5 | 1.6 | 2 | 5.8 | 3.6 | 4.1 | 2.5 |
| 115-b-N | 74.4 | 9.5 | 29.9 | 44.4 | 11.2 | 21.5 | 19.8 | 104.9 |
| 115-bbb-N | 3.1 | 3.1 | 2.3 | 2.5 | 2.5 | 2.4 | 2.4 | 2.9 |
| 115-bbbb-N | 1.6 | 2.2 | 1.4 | 1.4 | 1.4 | 1.4 | 1.4 | 1.5 |
| 115-bemm-N | 5 | 4.6 | 2 | 2.4 | 5.2 | 3.6 | 3.9 | 3.1 |
| 115-bmmm-N | 7.9 | 5.7 | 2.3 | 3.1 | 8.3 | 5.1 | 5.7 | 4.1 |
| 115-choline | 32.4 | 14.7 | 2.6 | 4.3 | 88.9 | 21.5 | 29.1 | 4.7 |
| 115-e-N | 482.1 | 14.2 | 93.5 | 175.2 | 4.1 | 67.7 | 56.9 | 1824.3 |

|  | Anion | | | | | | | |
|---|---|---|---|---|---|---|---|---|
|  | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 115-ee-N | 61.6 | 10.2 | 7.5 | 11.3 | 34.9 | 17.5 | 19.3 | 23.1 |
| 115-eeee-N | 3.4 | 4.6 | 1.4 | 1.6 | 4.5 | 2.9 | 3.4 | 1.9 |
| 115-hphphphp-N | 0.9 | 1.6 | 1 | 1 | 0.9 | 0.9 | 0.9 | 1 |
| 115-hxhxhxhx-N | 1.1 | 1.7 | 1.1 | 1.1 | 1 | 1 | 1 | 1.1 |
| 115-m-N | 0.1 | 15.5 | 433.2 | 1092.4 | 0.3 | 107.5 | 75.6 | 104723.7 |
| 115-mm-N | 6477 | 17.2 | 24.1 | 50.4 | 13.1 | 105.3 | 96.3 | 208.5 |
| 115-mmmm-N | 9.5 | 12.4 | 1 | 1.7 | 60.2 | 12.1 | 19.1 | 1.3 |
| 115-N | n/a | 8.9 | 3673.4 | 2116.3 | n/a | 41.8 | 8 | n/a |
| 115-OHe-bmm-N | 8.5 | 5.5 | 2.9 | 3.8 | 7.5 | 5.1 | 5.5 | 5.2 |
| 115-OHe-mm-N | 238.4 | 17.1 | 7.8 | 13.8 | 126.8 | 50.1 | 56 | 25.4 |
| 115-OHe-N | 9.3 | 16.3 | 336.4 | 699.6 | 1.4 | 92.9 | 66.5 | 7489.6 |
| 115-OHee-mm-N | 12.2 | 8.1 | 2.3 | 3.3 | 17.7 | 7.8 | 9.6 | 4.3 |
| 115-pnpnpnpn-N | 1.3 | 1.9 | 1.2 | 1.2 | 1.1 | 1.2 | 1.1 | 1.3 |
| 115-prprprpr-N | 2.2 | 2.8 | 1.5 | 1.6 | 2.1 | 1.9 | 1.9 | 1.9 |
| 116-bbbb-P | 1.6 | 2.2 | 1.5 | 1.5 | 1.4 | 1.5 | 1.4 | 1.6 |
| 116-bbbo-P | 1.3 | 1.9 | 1.3 | 1.3 | 1.1 | 1.2 | 1.1 | 1.3 |

As can be seen, the units for the Henry's constant of propylene and propane in Tables 5 and 6 above are in MPa. Even though Equations (1)-(20) disclosed above use Henry's constant in units of mol/L-Bar, the units of MPa for the values in Tables 5 and 6 need not be converted since they are used for calculation of physical selectivity, $S_p$, which is unitless.

The physical selectivity, $S_p$, of propylene to propane was calculated by taking the ratio of the Henry's constant of propane in Table 5 to the Henry's constant of propylene in Table 6 for each of the cation/anion ionic liquid combinations. The physical selectivity values are shown in Table 7 below:

## Table 7 – Physical Selectivity, $S_p$

|  |  | Anion | | | | | | | |
|---|---|---|---|---|---|---|---|---|---|
|  |  | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| Cation | 111-beim | 3.22 | 1.31 | 2.12 | 2.37 | 3.57 | 2.72 | 2.88 | 2.66 |
|  | 111-bmim | 3.50 | 1.42 | 2.26 | 2.43 | 3.96 | 2.88 | 3.12 | 2.79 |
|  | 111-bmmim | 3.23 | 1.34 | 2.15 | 2.33 | 3.57 | 2.73 | 2.94 | 2.60 |
|  | 111-dceim | 2.62 | 1.13 | 2.00 | 2.14 | 2.59 | 2.22 | 2.28 | 2.26 |
|  | 111-dcmim | 2.76 | 1.15 | 2.10 | 2.25 | 2.79 | 2.29 | 2.45 | 2.46 |

| | **Anion** | | | | | | | |
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
|---|---|---|---|---|---|---|---|---|
| 111-eeim | 3.54 | 1.46 | 2.17 | 2.35 | 4.21 | 3.00 | 3.24 | 2.62 |
| 111-mmim | 4.09 | 1.80 | 2.29 | 2.42 | 6.29 | 3.81 | 4.23 | 2.63 |
| 111-e24mmim | 3.54 | 1.44 | 2.17 | 2.37 | 4.22 | 3.00 | 3.20 | 2.68 |
| 111-emmim | 3.38 | 1.51 | 2.12 | 2.23 | 4.30 | 3.03 | 3.33 | 2.48 |
| 111-eim | 5.52 | 1.72 | 2.64 | 2.84 | 6.63 | 3.93 | 4.21 | 3.54 |
| 111-emim | 3.87 | 1.63 | 2.20 | 2.45 | 5.06 | 3.33 | 3.69 | 2.70 |
| 111-epim | 3.35 | 1.36 | 2.16 | 2.35 | 3.85 | 2.81 | 3.03 | 2.63 |
| 111-etO-emim | 3.38 | 1.42 | 2.22 | 2.38 | 3.89 | 2.86 | 3.08 | 2.76 |
| 111-etO-mmim | 4.05 | 1.56 | 2.41 | 2.61 | 4.76 | 3.32 | 3.57 | 3.07 |
| 111-hexadmim | 2.33 | 1.00 | 1.88 | 2.00 | 2.33 | 2.07 | 2.00 | 2.12 |
| 111-hpmim | 3.08 | 1.24 | 2.16 | 2.33 | 3.21 | 2.56 | 2.70 | 2.66 |
| 111-hxeim | 2.94 | 1.22 | 2.04 | 2.30 | 3.15 | 2.46 | 2.58 | 2.53 |
| 111-hxmim | 3.18 | 1.31 | 2.19 | 2.38 | 3.42 | 2.61 | 2.81 | 2.72 |
| 111-hxmmim | 3.00 | 1.22 | 2.15 | 2.35 | 3.15 | 2.58 | 2.71 | 2.54 |
| 111-meO-emim | 3.48 | 1.48 | 2.18 | 2.44 | 4.23 | 3.07 | 3.26 | 2.69 |
| 111-meO-prmim | 3.31 | 1.42 | 2.18 | 2.33 | 3.80 | 2.83 | 3.08 | 2.63 |
| 111-mim | 7.04 | 1.93 | 2.86 | 2.97 | 9.00 | 4.91 | 5.17 | 3.67 |
| 111-mmim | 4.09 | 1.80 | 2.29 | 2.42 | 6.29 | 3.81 | 4.23 | 2.63 |
| 111-mnim | 2.86 | 1.18 | 2.04 | 2.27 | 2.95 | 2.41 | 2.50 | 2.48 |
| 111-mpim | 4.08 | 1.59 | 2.36 | 2.59 | 5.03 | 3.41 | 3.71 | 2.95 |
| 111-octadmim | 2.14 | 0.95 | 1.80 | 2.00 | 2.27 | 1.92 | 2.08 | 2.07 |
| 111-OH-emim | 4.38 | 1.78 | 2.44 | 2.58 | 6.06 | 3.77 | 4.13 | 2.94 |
| 111-OH-omim | 3.02 | 1.27 | 2.14 | 2.38 | 3.22 | 2.61 | 2.71 | 2.60 |
| 111-OH-prmim | 3.99 | 1.68 | 2.40 | 2.53 | 5.15 | 3.44 | 3.77 | 2.89 |
| 111-omim | 2.97 | 1.23 | 2.08 | 2.29 | 3.08 | 2.44 | 2.63 | 2.56 |
| 111-ommim | 2.76 | 1.19 | 2.11 | 2.33 | 2.90 | 2.45 | 2.50 | 2.50 |
| 111-ph-emim | 4.01 | 1.53 | 2.51 | 2.77 | 4.43 | 3.25 | 3.45 | 3.19 |
| 111-ph-mim | 4.06 | 1.55 | 2.42 | 2.69 | 4.63 | 3.31 | 3.54 | 3.08 |
| 111-ph-mmim | 4.05 | 1.55 | 2.53 | 2.69 | 4.59 | 3.33 | 3.50 | 3.18 |
| 111-pnmim | 3.37 | 1.35 | 2.22 | 2.45 | 3.70 | 2.74 | 2.94 | 2.77 |
| 111-prmim | 3.69 | 1.51 | 2.27 | 2.44 | 4.42 | 3.10 | 3.36 | 2.83 |
| 112-1b2mpy | 3.28 | 1.36 | 2.19 | 2.40 | 3.68 | 2.77 | 3.00 | 2.69 |
| 112-1b3mpy | 3.21 | 1.32 | 2.09 | 2.33 | 3.56 | 2.77 | 2.94 | 2.62 |
| 112-1b4DMApy | 2.93 | 1.23 | 2.11 | 2.35 | 3.21 | 2.59 | 2.73 | 2.54 |
| 112-1b4mpy | 3.24 | 1.34 | 2.13 | 2.33 | 3.58 | 2.68 | 2.88 | 2.62 |
| 112-1e2mpy | 3.57 | 1.55 | 2.16 | 2.38 | 4.51 | 3.19 | 3.48 | 2.65 |

| | **Anion** | | | | | | | |
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
|---|---|---|---|---|---|---|---|---|
| 112-1e3mpy | 3.52 | 1.51 | 2.14 | 2.37 | 4.32 | 3.07 | 3.34 | 2.61 |
| 112-1e4DMApy | 3.22 | 1.37 | 2.11 | 2.33 | 3.69 | 2.82 | 2.97 | 2.58 |
| 112-1e4mpy | 3.53 | 1.51 | 2.14 | 2.41 | 4.37 | 3.02 | 3.36 | 2.67 |
| 112-1hx4DMApy | 2.82 | 1.15 | 2.12 | 2.26 | 2.84 | 2.37 | 2.56 | 2.48 |
| 112-1hx4mpy | 2.97 | 1.26 | 2.09 | 2.32 | 3.12 | 2.48 | 2.71 | 2.53 |
| 112-1o3mpy | 2.76 | 1.15 | 2.05 | 2.32 | 2.80 | 2.29 | 2.50 | 2.48 |
| 112-1o4mpy | 2.76 | 1.15 | 2.10 | 2.22 | 2.80 | 2.33 | 2.50 | 2.48 |
| 112-1pr3mpy | 3.37 | 1.40 | 2.18 | 2.37 | 3.83 | 2.83 | 3.08 | 2.66 |
| 112-1pr4mpy | 3.35 | 1.42 | 2.13 | 2.32 | 3.87 | 2.83 | 3.08 | 2.67 |
| 112-bpy | 3.66 | 1.46 | 2.28 | 2.51 | 4.18 | 3.00 | 3.27 | 2.90 |
| 112-epy | 4.11 | 1.69 | 2.31 | 2.53 | 5.45 | 3.55 | 3.85 | 2.83 |
| 112-hppy | 3.15 | 1.27 | 2.19 | 2.42 | 3.28 | 2.64 | 2.75 | 2.68 |
| 112-hxpy | 3.35 | 1.30 | 2.18 | 2.41 | 3.56 | 2.72 | 2.91 | 2.79 |
| 112-OH-prpy | 4.01 | 1.63 | 2.38 | 2.53 | 5.08 | 3.41 | 3.72 | 2.91 |
| 112-opy | 2.97 | 1.23 | 2.12 | 2.38 | 3.08 | 2.56 | 2.64 | 2.62 |
| 112-pnpy | 3.50 | 1.37 | 2.21 | 2.44 | 3.77 | 2.84 | 3.03 | 2.83 |
| 112-prpy | 3.89 | 1.56 | 2.32 | 2.47 | 4.65 | 3.19 | 3.46 | 2.85 |
| 113-bmpyr | 3.00 | 1.30 | 2.06 | 2.23 | 3.43 | 2.72 | 2.86 | 2.44 |
| 113-bpyr | 4.02 | 1.42 | 2.33 | 2.59 | 4.40 | 3.00 | 3.25 | 3.12 |
| 113-hxmpyr | 2.88 | 1.20 | 2.00 | 2.22 | 3.06 | 2.54 | 2.63 | 2.48 |
| 113-hxpyr | 3.44 | 1.30 | 2.22 | 2.47 | 3.63 | 2.67 | 2.82 | 2.84 |
| 113-ompyr | 2.74 | 1.13 | 2.05 | 2.18 | 2.83 | 2.32 | 2.41 | 2.36 |
| 113-opyr | 3.04 | 1.22 | 2.08 | 2.34 | 3.13 | 2.45 | 2.55 | 2.60 |
| 113-prmpyr | 3.04 | 1.40 | 2.06 | 2.20 | 3.71 | 2.78 | 3.00 | 2.32 |
| 115-b-N | 5.40 | 1.43 | 2.47 | 2.93 | 4.54 | 3.03 | 3.19 | 3.99 |
| 115-bbb-N | 2.61 | 1.10 | 1.91 | 2.20 | 2.72 | 2.25 | 2.33 | 2.31 |
| 115-bbbb-N | 2.25 | 1.00 | 1.86 | 2.07 | 2.29 | 2.07 | 2.07 | 2.13 |
| 115-bemm-N | 3.14 | 1.37 | 2.05 | 2.29 | 3.65 | 2.78 | 3.00 | 2.45 |
| 115-bmmm-N | 3.41 | 1.46 | 2.13 | 2.26 | 4.17 | 2.98 | 3.23 | 2.56 |
| 115-choline | 3.86 | 1.88 | 2.23 | 2.33 | 7.34 | 4.07 | 4.58 | 2.38 |
| 115-e-N | 10.34 | 1.63 | 3.13 | 3.62 | 3.95 | 4.16 | 4.20 | 6.95 |
| 115-ee-N | 4.95 | 1.62 | 2.33 | 2.58 | 6.24 | 3.57 | 3.89 | 3.12 |
| 115-eeee-N | 2.91 | 1.35 | 1.93 | 2.13 | 3.56 | 2.69 | 2.85 | 2.26 |
| 115-hphphphp-N | 1.89 | 0.81 | 1.70 | 1.70 | 1.67 | 1.78 | 1.67 | 1.70 |
| 115-hxhxhxhx-N | 1.91 | 0.88 | 1.73 | 1.82 | 1.80 | 1.90 | 1.80 | 1.91 |
| 115-m-N | 2.00 | 1.65 | 4.48 | 4.93 | 2.67 | 4.58 | 4.26 | 23.37 |

| Anion | | | | | | | | |
|---|---|---|---|---|---|---|---|---|
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 115-mm-N | 15.79 | 1.88 | 2.99 | 3.13 | 5.47 | 5.71 | 5.67 | 4.01 |
| 115-mmmm-N | 3.12 | 1.89 | 2.00 | 2.06 | 6.83 | 3.74 | 4.40 | 1.92 |
| 115-N | n/a | 1.22 | 4.03 | 7.13 | n/a | 2.29 | 2.05 | n/a |
| 115-OHe-bmm-N | 3.31 | 1.38 | 2.14 | 2.32 | 3.84 | 2.80 | 3.04 | 2.63 |
| 115-OHe-mm-N | 5.93 | 1.90 | 2.59 | 2.70 | 8.77 | 4.84 | 5.16 | 3.02 |
| 115-OHe-N | 3.87 | 1.60 | 4.17 | 4.58 | 2.64 | 4.17 | 3.96 | 10.68 |
| 115-OHee-mm-N | 3.45 | 1.59 | 2.13 | 2.21 | 4.87 | 3.19 | 3.52 | 2.42 |
| 115-pnpnpnpn-N | 2.00 | 0.89 | 1.83 | 2.00 | 2.09 | 1.92 | 2.00 | 1.92 |
| 115-prprprpr-N | 2.55 | 1.11 | 1.93 | 2.13 | 2.67 | 2.21 | 2.37 | 2.16 |
| 116-bbbb-P | 2.31 | 0.95 | 1.80 | 2.00 | 2.29 | 2.00 | 2.07 | 2.13 |
| 116-bbbo-P | 2.08 | 0.89 | 1.77 | 1.92 | 2.09 | 1.92 | 2.00 | 2.00 |

With all variables in Equations (14) and (20) assumed or calculated, the total solubility of propylene and the total selectivity of propylene over propane were calculated. The total solubility of propylene values are shown in Table 8 below, and the total selectivity values are shown in Table 9 below:

### Table 8 – Total Solubility of Propylene, $[C_{3=}]_t$ (mol/L)

| | | Anion | | | | | | | |
|---|---|---|---|---|---|---|---|---|---|
| | | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| Cation | 111-beim | 1.028 | 1.061 | 1.163 | 1.117 | 1.071 | 1.103 | 1.096 | 1.066 |
| | 111-bmim | 0.967 | 1.032 | 1.143 | 1.083 | 1.005 | 1.051 | 1.041 | 1.024 |
| | 111-bmmim | 1.056 | 1.066 | 1.227 | 1.173 | 1.071 | 1.117 | 1.110 | 1.117 |
| | 111-dceim | 1.212 | 1.173 | 1.243 | 1.212 | 1.282 | 1.261 | 1.261 | 1.185 |
| | 111-dcmim | 1.163 | 1.152 | 1.212 | 1.173 | 1.243 | 1.212 | 1.227 | 1.152 |
| | 111-eeim | 0.959 | 1.005 | 1.173 | 1.110 | 0.961 | 1.037 | 1.016 | 1.046 |
| | 111-mmim | 0.821 | 0.917 | 1.212 | 1.110 | 0.713 | 0.913 | 0.868 | 1.056 |
| | 111-e24mmim | 0.956 | 0.998 | 1.173 | 1.117 | 0.956 | 1.037 | 1.012 | 1.051 |
| | 111-emmim | 1.002 | 1.002 | 1.282 | 1.198 | 0.961 | 1.056 | 1.028 | 1.143 |
| | 111-eim | 0.539 | 0.907 | 0.959 | 0.877 | 0.697 | 0.821 | 0.799 | 0.721 |
| | 111-emim | 0.885 | 0.967 | 1.163 | 1.096 | 0.865 | 0.976 | 0.951 | 1.024 |
| | 111-epim | 0.995 | 1.037 | 1.163 | 1.110 | 1.024 | 1.071 | 1.061 | 1.051 |
| | 111-etO-emim | 1.005 | 1.041 | 1.185 | 1.125 | 1.028 | 1.077 | 1.066 | 1.071 |
| | 111-etO-mmim | 0.866 | 0.982 | 1.089 | 1.028 | 0.907 | 0.979 | 0.964 | 0.956 |
| | 111-hexadmim | 1.330 | 1.227 | 1.305 | 1.282 | 1.433 | 1.360 | 1.360 | 1.282 |
| | 111-hpmim | 1.071 | 1.096 | 1.163 | 1.117 | 1.134 | 1.143 | 1.143 | 1.083 |
| | 111-hxeim | 1.089 | 1.103 | 1.173 | 1.143 | 1.152 | 1.152 | 1.152 | 1.103 |
| | 111-hxmim | 1.037 | 1.077 | 1.152 | 1.103 | 1.096 | 1.110 | 1.110 | 1.061 |
| | 111-hxmmim | 1.110 | 1.103 | 1.227 | 1.185 | 1.152 | 1.173 | 1.173 | 1.134 |
| | 111-meO-emim | 0.979 | 1.012 | 1.198 | 1.143 | 0.976 | 1.051 | 1.028 | 1.077 |
| | 111-meO-prmim | 1.016 | 1.041 | 1.198 | 1.143 | 1.028 | 1.083 | 1.071 | 1.083 |
| | 111-mim | 0.275 | 0.849 | 0.951 | 0.843 | 0.478 | 0.672 | 0.639 | 0.650 |
| | 111-mmim | 0.821 | 0.917 | 1.212 | 1.110 | 0.713 | 0.913 | 0.868 | 1.056 |
| | 111-mnim | 1.134 | 1.134 | 1.185 | 1.152 | 1.212 | 1.198 | 1.198 | 1.125 |
| | 111-mpim | 0.873 | 0.982 | 1.134 | 1.071 | 0.890 | 0.982 | 0.964 | 0.995 |
| | 111-octadmim | 1.360 | 1.243 | 1.330 | 1.330 | 1.481 | 1.394 | 1.433 | 1.330 |
| | 111-OH-emim | 0.693 | 0.888 | 1.061 | 0.988 | 0.671 | 0.852 | 0.816 | 0.907 |
| | 111-OH-omim | 1.028 | 1.051 | 1.125 | 1.089 | 1.077 | 1.096 | 1.089 | 1.046 |
| | 111-OH-prmim | 0.796 | 0.915 | 1.083 | 1.016 | 0.783 | 0.911 | 0.883 | 0.946 |
| | 111-omim | 1.103 | 1.117 | 1.173 | 1.134 | 1.173 | 1.163 | 1.173 | 1.103 |
| | 111-ommim | 1.163 | 1.143 | 1.243 | 1.212 | 1.227 | 1.227 | 1.227 | 1.173 |
| | 111-ph-emim | 0.915 | 1.024 | 1.083 | 1.037 | 0.976 | 1.020 | 1.016 | 0.967 |
| | 111-ph-mim | 0.911 | 1.024 | 1.110 | 1.061 | 0.964 | 1.020 | 1.012 | 0.982 |
| | 111-ph-mmim | 0.911 | 1.024 | 1.103 | 1.046 | 0.970 | 1.020 | 1.012 | 0.976 |

| | Anion | | | | | | | |
|---|---|---|---|---|---|---|---|---|
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 111-pnmim | 1.005 | 1.056 | 1.143 | 1.096 | 1.056 | 1.083 | 1.077 | 1.041 |
| 111-prmim | 0.931 | 1.002 | 1.152 | 1.089 | 0.946 | 1.020 | 1.002 | 1.024 |
| 112-1b2mpy | 1.041 | 1.061 | 1.212 | 1.163 | 1.066 | 1.110 | 1.103 | 1.103 |
| 112-1b3mpy | 1.046 | 1.066 | 1.185 | 1.143 | 1.077 | 1.117 | 1.110 | 1.089 |
| 112-1b4DMApy | 1.134 | 1.110 | 1.261 | 1.227 | 1.173 | 1.198 | 1.198 | 1.173 |
| 112-1b4mpy | 1.046 | 1.066 | 1.185 | 1.143 | 1.077 | 1.110 | 1.103 | 1.089 |
| 112-1e2mpy | 0.979 | 1.002 | 1.243 | 1.173 | 0.951 | 1.046 | 1.020 | 1.110 |
| 112-1e3mpy | 0.976 | 1.009 | 1.198 | 1.143 | 0.964 | 1.046 | 1.024 | 1.077 |
| 112-1e4DMApy | 1.071 | 1.066 | 1.261 | 1.212 | 1.077 | 1.134 | 1.117 | 1.152 |
| 112-1e4mpy | 0.973 | 1.009 | 1.198 | 1.143 | 0.964 | 1.041 | 1.024 | 1.077 |
| 112-1hx4DMApy | 1.198 | 1.152 | 1.282 | 1.243 | 1.243 | 1.243 | 1.261 | 1.212 |
| 112-1hx4mpy | 1.103 | 1.110 | 1.198 | 1.163 | 1.152 | 1.163 | 1.173 | 1.117 |
| 112-1o3mpy | 1.163 | 1.143 | 1.227 | 1.198 | 1.227 | 1.212 | 1.227 | 1.163 |
| 112-1o4mpy | 1.163 | 1.143 | 1.227 | 1.185 | 1.227 | 1.212 | 1.227 | 1.163 |
| 112-1pr3mpy | 1.016 | 1.041 | 1.198 | 1.143 | 1.028 | 1.083 | 1.071 | 1.083 |
| 112-1pr4mpy | 1.009 | 1.041 | 1.185 | 1.134 | 1.024 | 1.077 | 1.066 | 1.077 |
| 112-bpy | 0.951 | 1.028 | 1.125 | 1.071 | 0.995 | 1.041 | 1.032 | 1.009 |
| 112-epy | 0.854 | 0.959 | 1.152 | 1.077 | 0.835 | 0.959 | 0.929 | 1.005 |
| 112-hppy | 1.061 | 1.096 | 1.152 | 1.110 | 1.125 | 1.134 | 1.134 | 1.066 |
| 112-hxpy | 1.028 | 1.071 | 1.134 | 1.089 | 1.089 | 1.103 | 1.103 | 1.046 |
| 112-OH-prpy | 0.825 | 0.946 | 1.089 | 1.024 | 0.836 | 0.943 | 0.920 | 0.951 |
| 112-opy | 1.089 | 1.110 | 1.163 | 1.125 | 1.163 | 1.163 | 1.163 | 1.089 |
| 112-pnpy | 0.991 | 1.051 | 1.125 | 1.077 | 1.041 | 1.071 | 1.066 | 1.024 |
| 112-prpy | 0.911 | 0.998 | 1.134 | 1.066 | 0.933 | 1.005 | 0.988 | 0.998 |
| 113-bmpyr | 1.041 | 1.037 | 1.261 | 1.198 | 1.028 | 1.103 | 1.083 | 1.143 |
| 113-bpyr | 0.806 | 0.988 | 0.988 | 0.931 | 0.924 | 0.956 | 0.953 | 0.847 |
| 113-hxmpyr | 1.089 | 1.083 | 1.227 | 1.185 | 1.110 | 1.152 | 1.143 | 1.143 |
| 113-hxpyr | 0.933 | 1.037 | 1.032 | 0.988 | 1.028 | 1.032 | 1.032 | 0.938 |
| 113-ompyr | 1.143 | 1.117 | 1.243 | 1.198 | 1.185 | 1.198 | 1.198 | 1.163 |
| 113-opyr | 1.016 | 1.077 | 1.071 | 1.037 | 1.103 | 1.096 | 1.096 | 1.005 |
| 113-prmpyr | 1.028 | 1.012 | 1.305 | 1.227 | 0.985 | 1.077 | 1.051 | 1.163 |
| 115-b-N | 0.408 | 0.894 | 0.642 | 0.540 | 0.863 | 0.723 | 0.742 | 0.327 |
| 115-bbb-N | 1.110 | 1.110 | 1.185 | 1.163 | 1.163 | 1.173 | 1.173 | 1.125 |
| 115-bbbb-N | 1.305 | 1.198 | 1.360 | 1.360 | 1.360 | 1.360 | 1.360 | 1.330 |
| 115-bemm-N | 1.012 | 1.028 | 1.227 | 1.173 | 1.005 | 1.077 | 1.061 | 1.110 |
| 115-bmmm-N | 0.929 | 0.988 | 1.185 | 1.110 | 0.920 | 1.009 | 0.988 | 1.051 |

| Anion | | | | | | | | |
|-------|------|------|---------|---------|------|---------|---------|------|
| | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| 115-choline | 0.622 | 0.808 | 1.152 | 1.041 | 0.365 | 0.723 | 0.649 | 1.024 |
| 115-e-N | 0.095 | 0.815 | 0.353 | 0.224 | 1.051 | 0.431 | 0.476 | 0.027 |
| 115-ee-N | 0.455 | 0.881 | 0.938 | 0.861 | 0.603 | 0.770 | 0.748 | 0.706 |
| 115-eeee-N | 1.089 | 1.028 | 1.360 | 1.305 | 1.032 | 1.125 | 1.089 | 1.243 |
| 115-hphphphp-N | 1.608 | 1.305 | 1.538 | 1.538 | 1.608 | 1.608 | 1.608 | 1.538 |
| 115-hxhxhxhx-N | 1.481 | 1.282 | 1.481 | 1.481 | 1.538 | 1.538 | 1.538 | 1.481 |
| 115-m-N | 11.742 | 0.796 | 0.104 | 0.044 | 3.295 | 0.321 | 0.404 | 0.000 |
| 115-mm-N | 0.008 | 0.774 | 0.696 | 0.507 | 0.831 | 0.326 | 0.346 | 0.195 |
| 115-mmmm-N | 0.894 | 0.843 | 1.538 | 1.282 | 0.461 | 0.847 | 0.750 | 1.394 |
| 115-N | n/a | 0.907 | 0.014 | 0.023 | n/a | 0.556 | 0.926 | n/a |
| 115-OHe-bmm-N | 0.915 | 0.995 | 1.125 | 1.066 | 0.938 | 1.009 | 0.995 | 1.005 |
| 115-OHe-mm-N | 0.175 | 0.775 | 0.931 | 0.821 | 0.286 | 0.509 | 0.480 | 0.683 |
| 115-OHe-N | 0.898 | 0.785 | 0.130 | 0.067 | 1.360 | 0.355 | 0.436 | 0.007 |
| 115-OHee-mm-N | 0.846 | 0.924 | 1.185 | 1.096 | 0.767 | 0.931 | 0.892 | 1.041 |
| 115-pnpnpnpn-N | 1.394 | 1.243 | 1.433 | 1.433 | 1.481 | 1.433 | 1.481 | 1.394 |
| 115-prprprpr-N | 1.198 | 1.134 | 1.330 | 1.305 | 1.212 | 1.243 | 1.243 | 1.243 |
| 116-bbbb-P | 1.305 | 1.198 | 1.330 | 1.330 | 1.360 | 1.330 | 1.360 | 1.305 |
| 116-bbbo-P | 1.394 | 1.243 | 1.394 | 1.394 | 1.481 | 1.433 | 1.481 | 1.394 |

**Table 9 – Total Selectivity of Propylene to Propane, S$_t$**

| | Anion | | | | | | | | |
|-----|-------|------|------|---------|---------|------|---------|---------|------|
| | | BF$_4^-$ | Tf$_2$N$^-$ | CH$_3$CO$_2^-$ | CH$_3$SO$_3^-$ | PF$_6^-$ | CF$_3$CO$_2^-$ | CF$_3$SO$_3^-$ | NO$_3^-$ |
| **Cation** | 111-beim | 29.8 | 10.6 | 11.8 | 15.3 | 27.6 | 18.6 | 20.2 | 21.0 |
| | 111-bmim | 42.7 | 12.9 | 13.4 | 17.9 | 40.7 | 24.2 | 27.3 | 26.3 |
| | 111-bmmim | 26.6 | 10.6 | 10.0 | 12.6 | 27.6 | 17.7 | 19.6 | 16.9 |
| | 111-dceim | 12.7 | 6.1 | 8.9 | 10.4 | 10.6 | 9.5 | 9.8 | 11.8 |
| | 111-dcmim | 15.4 | 6.6 | 10.2 | 12.1 | 12.5 | 11.1 | 11.4 | 14.2 |
| | 111-eeim | 44.9 | 15.0 | 11.7 | 15.7 | 52.8 | 26.8 | 31.7 | 22.5 |
| | 111-mmim | 92.4 | 27.5 | 11.1 | 16.1 | 201.0 | 59.4 | 79.6 | 21.6 |
| | 111-e24mmim | 45.5 | 15.3 | 11.7 | 15.3 | 54.2 | 26.8 | 31.8 | 22.6 |
| | 111-emmim | 35.3 | 15.8 | 8.7 | 11.2 | 53.9 | 24.9 | 30.8 | 14.8 |
| | 111-eim | 265.9 | 27.5 | 33.5 | 51.4 | 221.6 | 88.6 | 102.6 | 110.6 |
| | 111-emim | 68.0 | 19.8 | 12.3 | 17.2 | 96.6 | 39.1 | 48.5 | 25.5 |
| | 111-epim | 36.0 | 12.2 | 12.1 | 15.7 | 36.3 | 21.7 | 24.4 | 22.2 |
| | 111-etO-emim | 34.8 | 12.4 | 11.6 | 15.0 | 36.1 | 21.6 | 24.3 | 21.3 |

| | Anion | | | | | | | |
|---|---|---|---|---|---|---|---|---|
| | BF₄⁻ | Tf₂N⁻ | CH₃CO₂⁻ | CH₃SO₃⁻ | PF₆⁻ | CF₃CO₂⁻ | CF₃SO₃⁻ | NO₃⁻ |
| 111-etO-mmim | 76.6 | 17.8 | 17.4 | 24.2 | 76.2 | 38.4 | 44.2 | 39.5 |
| 111-hexadmim | 8.7 | 4.7 | 7.3 | 8.2 | 7.4 | 7.3 | 7.1 | 8.7 |
| 111-hpmim | 23.8 | 8.7 | 12.1 | 15.1 | 19.7 | 15.2 | 16.1 | 19.6 |
| 111-hxeim | 21.2 | 8.3 | 11.0 | 13.6 | 18.2 | 14.2 | 14.9 | 17.3 |
| 111-hxmim | 28.4 | 9.9 | 12.6 | 16.2 | 24.0 | 17.4 | 18.7 | 21.9 |
| 111-hxmmim | 20.0 | 8.3 | 10.0 | 12.2 | 18.2 | 13.9 | 14.6 | 15.5 |
| 111-meO-emim | 40.3 | 14.7 | 11.0 | 14.5 | 49.6 | 25.9 | 30.2 | 20.3 |
| 111-meO-prmim | 32.3 | 12.4 | 11.0 | 13.9 | 35.3 | 20.9 | 23.8 | 19.4 |
| 111-mim | 520.4 | 39.0 | 37.6 | 61.7 | 487.0 | 174.9 | 200.5 | 138.4 |
| 111-mmim | 92.4 | 27.5 | 11.1 | 16.1 | 201.0 | 59.4 | 79.6 | 21.6 |
| 111-mnim | 17.5 | 7.2 | 10.7 | 13.1 | 14.3 | 12.1 | 12.6 | 15.7 |
| 111-mpim | 75.2 | 18.2 | 14.4 | 20.0 | 86.3 | 38.9 | 45.9 | 31.7 |
| 111-octadmim | 7.6 | 4.2 | 6.7 | 7.4 | 6.7 | 6.4 | 6.6 | 7.7 |
| 111-OH-emim | 147.9 | 30.7 | 19.7 | 28.6 | 217.2 | 75.5 | 94.7 | 47.1 |
| 111-OH-omim | 28.0 | 10.7 | 13.5 | 17.1 | 24.3 | 18.3 | 19.5 | 22.3 |
| 111-OH-prmim | 98.3 | 25.9 | 17.7 | 24.7 | 132.7 | 54.0 | 66.8 | 38.9 |
| 111-omim | 20.3 | 8.0 | 11.2 | 14.0 | 16.6 | 13.6 | 14.2 | 17.5 |
| 111-ommim | 15.4 | 7.0 | 9.4 | 11.3 | 13.5 | 11.4 | 11.6 | 13.5 |
| 111-ph-emim | 61.9 | 14.5 | 18.5 | 24.8 | 51.9 | 31.2 | 33.7 | 38.9 |
| 111-ph-mim | 63.8 | 14.7 | 16.1 | 21.7 | 57.3 | 31.8 | 35.2 | 35.2 |
| 111-ph-mmim | 63.6 | 14.7 | 17.3 | 23.1 | 55.3 | 32.0 | 34.8 | 37.3 |
| 111-pnmim | 34.6 | 11.1 | 13.2 | 17.2 | 30.5 | 20.2 | 22.2 | 24.2 |
| 111-prmim | 53.1 | 15.8 | 13.1 | 17.6 | 59.5 | 29.8 | 35.1 | 26.7 |
| 112-1b2mpy | 28.7 | 11.0 | 10.6 | 13.4 | 29.1 | 18.5 | 20.5 | 18.4 |
| 112-1b3mpy | 27.6 | 10.4 | 10.9 | 13.9 | 26.8 | 17.9 | 19.6 | 18.8 |
| 112-1b4DMApy | 17.9 | 8.2 | 9.0 | 10.9 | 17.3 | 13.0 | 13.7 | 13.7 |
| 112-1b4mpy | 27.8 | 10.6 | 11.1 | 13.9 | 27.0 | 17.8 | 19.7 | 18.8 |
| 112-1e2mpy | 41.3 | 16.1 | 9.7 | 12.8 | 59.4 | 27.4 | 33.4 | 17.6 |
| 112-1e3mpy | 41.4 | 15.3 | 10.7 | 14.1 | 53.5 | 26.4 | 31.5 | 19.7 |
| 112-1e4DMApy | 24.8 | 10.8 | 9.0 | 11.3 | 27.9 | 17.3 | 19.2 | 14.9 |
| 112-1e4mpy | 42.0 | 15.3 | 10.7 | 14.3 | 54.1 | 26.5 | 31.7 | 20.1 |
| 112-1hx4DMApy | 14.2 | 6.6 | 8.7 | 10.1 | 12.7 | 10.6 | 11.0 | 12.0 |
| 112-1hx4mpy | 20.3 | 8.4 | 10.5 | 12.9 | 18.0 | 13.8 | 14.6 | 16.4 |
| 112-1o3mpy | 15.4 | 6.8 | 9.6 | 11.7 | 13.0 | 11.1 | 11.6 | 13.8 |
| 112-1o4mpy | 15.4 | 6.8 | 9.8 | 11.6 | 13.0 | 11.3 | 11.6 | 13.8 |
| 112-1pr3mpy | 32.9 | 12.2 | 11.0 | 14.1 | 35.5 | 20.9 | 23.8 | 19.6 |

| | Anion | | | | | | | |
|---|---|---|---|---|---|---|---|---|
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 112-1pr4mpy | 33.9 | 12.4 | 11.1 | 14.2 | 36.5 | 21.4 | 24.3 | 20.1 |
| 112-bpy | 48.1 | 13.5 | 14.4 | 19.4 | 45.0 | 26.3 | 29.7 | 29.3 |
| 112-epy | 81.7 | 21.4 | 13.3 | 19.1 | 116.8 | 45.1 | 55.9 | 29.0 |
| 112-hppy | 25.5 | 8.9 | 12.6 | 16.1 | 20.7 | 16.2 | 16.8 | 21.2 |
| 112-hxpy | 31.0 | 10.0 | 13.3 | 17.4 | 25.6 | 18.6 | 19.9 | 23.9 |
| 112-OH-prpy | 89.1 | 21.9 | 17.1 | 23.9 | 108.2 | 46.4 | 56.3 | 38.3 |
| 112-opy | 21.4 | 8.2 | 11.8 | 15.0 | 17.2 | 14.3 | 14.7 | 18.8 |
| 112-pnpy | 38.3 | 11.5 | 13.9 | 18.5 | 33.0 | 21.9 | 23.9 | 26.7 |
| 112-prpy | 61.0 | 16.5 | 14.2 | 19.5 | 66.1 | 32.8 | 38.3 | 30.2 |
| 113-bmpyr | 26.3 | 11.6 | 8.8 | 11.2 | 31.8 | 18.6 | 21.1 | 14.5 |
| 113-bpyr | 95.6 | 15.8 | 25.9 | 37.2 | 65.2 | 38.5 | 42.2 | 63.6 |
| 113-hxmpyr | 20.7 | 8.8 | 9.3 | 11.6 | 20.4 | 14.6 | 15.6 | 14.8 |
| 113-hxpyr | 49.0 | 11.6 | 20.2 | 27.4 | 33.7 | 24.3 | 25.7 | 39.5 |
| 113-ompyr | 16.3 | 7.3 | 9.2 | 11.0 | 14.7 | 11.7 | 12.1 | 13.2 |
| 113-opyr | 29.7 | 9.2 | 16.1 | 20.9 | 21.4 | 17.2 | 17.9 | 26.7 |
| 113-prmpyr | 28.2 | 13.9 | 8.1 | 10.3 | 41.7 | 21.0 | 25.3 | 12.9 |
| 115-b-N | 328.5 | 24.1 | 94.9 | 141.1 | 87.3 | 94.0 | 93.5 | 274.4 |
| 115-bbb-N | 17.4 | 7.3 | 10.0 | 12.3 | 15.2 | 12.1 | 12.6 | 14.6 |
| 115-bbbb-N | 8.8 | 5.0 | 6.6 | 7.3 | 8.1 | 7.3 | 7.3 | 7.9 |
| 115-bemm-N | 31.2 | 12.7 | 9.6 | 12.4 | 37.5 | 21.0 | 24.2 | 16.3 |
| 115-bmmm-N | 49.5 | 16.2 | 11.1 | 15.0 | 63.0 | 30.1 | 35.8 | 21.6 |
| 115-choline | 155.8 | 44.6 | 12.9 | 20.4 | 477.6 | 126.4 | 173.0 | 22.5 |
| 115-e-N | 947.7 | 37.5 | 207.4 | 285.4 | 33.3 | 243.4 | 228.0 | 683.9 |
| 115-ee-N | 278.8 | 28.9 | 32.5 | 49.8 | 263.1 | 96.0 | 112.0 | 101.6 |
| 115-eeee-N | 21.0 | 12.5 | 6.8 | 8.3 | 32.4 | 17.0 | 20.5 | 10.1 |
| 115-hphphphp-N | 4.9 | 3.2 | 4.7 | 4.7 | 4.3 | 4.6 | 4.3 | 4.7 |
| 115-hxhxhxhx-N | 5.7 | 3.6 | 5.1 | 5.4 | 5.0 | 5.3 | 5.0 | 5.7 |
| 115-m-N | 2.2 | 40.6 | 406.5 | 476.3 | 3.8 | 317.5 | 261.1 | 2359.0 |
| 115-mm-N | 1582.6 | 49.9 | 100.1 | 160.7 | 118.6 | 393.0 | 379.1 | 327.4 |
| 115-mmmm-N | 52.5 | 39.2 | 5.5 | 8.4 | 380.4 | 76.4 | 126.0 | 6.4 |
| 115-N | n/a | 19.8 | 399.5 | 700.7 | n/a | 106.4 | 30.4 | n/a |
| 115-OHe-bmm-N | 51.4 | 15.1 | 14.0 | 18.8 | 54.0 | 28.9 | 33.2 | 27.5 |
| 115-OHe-mm-N | 494.1 | 50.4 | 37.6 | 61.1 | 635.9 | 246.6 | 277.1 | 104.9 |
| 115-OHe-N | 64.7 | 41.0 | 365.8 | 430.1 | 10.1 | 274.5 | 229.8 | 1066.4 |
| 115-OHee-mm-N | 71.2 | 23.8 | 11.6 | 16.0 | 132.3 | 46.4 | 60.3 | 21.7 |
| 115-pnpnpnpn-N | 7.2 | 4.2 | 6.3 | 6.9 | 6.8 | 6.6 | 6.5 | 7.0 |

| | Anion | | | | | | | |
| --- | --- | --- | --- | --- | --- | --- | --- | --- |
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 115-prprprpr-N | 13.4 | 7.0 | 7.7 | 8.9 | 13.6 | 10.4 | 11.2 | 10.2 |
| 116-bbbb-P | 9.7 | 5.0 | 7.2 | 8.0 | 8.7 | 8.0 | 7.9 | 8.9 |
| 116-bbbo-P | 7.5 | 4.2 | 6.4 | 7.0 | 6.8 | 6.6 | 6.5 | 7.2 |

Taking the total solubility and total selectivity for [emim][$Tf_2N$]-Ag as baseline values, Table 10 shows the anion/cation combinations, indicated with "W," which have a total propylene solubility and total selectivity equal to or greater than the respective values for [emim] [$Tf_2N$]-Ag:

## Table 10

| | | Anion | | | | | | | |
| --- | --- | --- | --- | --- | --- | --- | --- | --- | --- |
| | | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| Cation | 111-beim | W | | | | W | | W | W |
| | 111-bmim | W | | | | W | W | W | W |
| | 111-bmmim | W | | | | W | | | |
| | 111-dceim | | | | | | | | |
| | 111-dcmim | | | | | | | | |
| | 111-eeim | | | | | | W | W | W |
| | 111-mmim | | | | | | | | W |
| | 111-e24mmim | | | | | | W | W | W |
| | 111-emmim | W | | | | | W | W | |
| | 111-eim | | | | | | | | |
| | 111-emim | | W | | | | W | | W |
| | 111-epim | W | | | | W | W | W | W |
| | 111-etO-emim | W | | | | W | W | W | W |
| | 111-etO-mmim | | | | W | | W | | |
| | 111-hexadmim | | | | | | | | |
| | 111-hpmim | W | | | | | | | |
| | 111-hxeim | W | | | | | | | |
| | 111-hxmim | W | | | | W | | | W |
| | 111-hxmmim | W | | | | | | | |
| | 111-meO-emim | W | | | | W | W | W | W |
| | 111-meO-prmim | W | | | | W | W | W | |
| | 111-mim | | | | | | | | |
| | 111-mmim | | | | | | | | W |
| | 111-mnim | | | | | | | | |

| | Anion | | | | | | | |
|---|---|---|---|---|---|---|---|---|
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 111-mpim | | | | W | | W | | W |
| 111-octadmim | | | | | | | | |
| 111-OH-emim | | | | W | | | | |
| 111-OH-omim | W | | | | W | | | W |
| 111-OH-prmim | | | | W | | | | |
| 111-omim | W | | | | | | | |
| 111-ommim | | | | | | | | |
| 111-ph-emim | | | | W | W | W | W | W |
| 111-ph-mim | | | | W | | W | W | W |
| 111-ph-mmim | | | | W | W | W | W | W |
| 111-pnmim | W | | | | W | W | W | W |
| 111-prmim | | | | | | W | W | W |
| 112-1b2mpy | W | | | | W | | W | |
| 112-1b3mpy | W | | | | W | | | |
| 112-1b4DMApy | | | | | | | | |
| 112-1b4mpy | W | | | | W | | | |
| 112-1e2mpy | W | | | | | W | W | |
| 112-1e3mpy | W | | | | | W | W | |
| 112-1e4DMApy | W | | | | W | | | |
| 112-1e4mpy | W | | | | | W | W | W |
| 112-1hx4DMApy | | | | | | | | |
| 112-1hx4mpy | W | | | | | | | |
| 112-1o3mpy | | | | | | | | |
| 112-1o4mpy | | | | | | | | |
| 112-1pr3mpy | W | | | | W | W | W | |
| 112-1pr4mpy | W | | | | W | W | W | W |
| 112-bpy | | | | | W | W | W | W |
| 112-epy | | | | | | | | W |
| 112-hppy | W | | | | W | | | W |
| 112-hxpy | W | | | | W | | W | W |
| 112-OH-prpy | | | | W | | | | |
| 112-opy | W | | | | | | | |
| 112-pnpy | W | | | | W | W | W | W |
| 112-prpy | | | | | | W | W | W |
| 113-bmpyr | W | | | | W | | W | |
| 113-bpyr | | | W | | | | | |

| | Anion | | | | | | | |
| --- | --- | --- | --- | --- | --- | --- | --- | --- |
| | $BF_4^-$ | $Tf_2N^-$ | $CH_3CO_2^-$ | $CH_3SO_3^-$ | $PF_6^-$ | $CF_3CO_2^-$ | $CF_3SO_3^-$ | $NO_3^-$ |
| 113-hxmpyr | W | | | | W | | | |
| 113-hxpyr | | | W | W | W | W | W | |
| 113-ompyr | | | | | | | | |
| 113-opyr | W | | | W | W | | | W |
| 113-prmpyr | W | | | | W | W | W | |
| 115-b-N | | | | | | | | |
| 115-bbb-N | | | | | | | | |
| 115-bbbb-N | | | | | | | | |
| 115-bemm-N | W | | | | W | W | W | |
| 115-bmmm-N | | | | | | W | W | W |
| 115-choline | | | | W | | | | W |
| 115-e-N | | | | | W | | | |
| 115-ee-N | | | | | | | | |
| 115-eeee-N | W | | | | W | | W | |
| 115-hphphphp-N | | | | | | | | |
| 115-hxhxhxhx-N | | | | | | | | |
| 115-m-N | | | | | | | | |
| 115-mm-N | | | | | | | | |
| 115-mmmm-N | | | | | | | | |
| 115-N | | | | | | | | |
| 115-OHe-bmm-N | | | | | | W | W | W |
| 115-OHe-mm-N | | | | | | | | |
| 115-OHe-N | | | | | | | | |
| 115-OHee-mm-N | | | | | | | | W |
| 115-pnpnpnpn-N | | | | | | | | |
| 115-prprprpr-N | | | | | | | | |
| 116-bbbb-P | | | | | | | | |
| 116-bbbo-P | | | | | | | | |

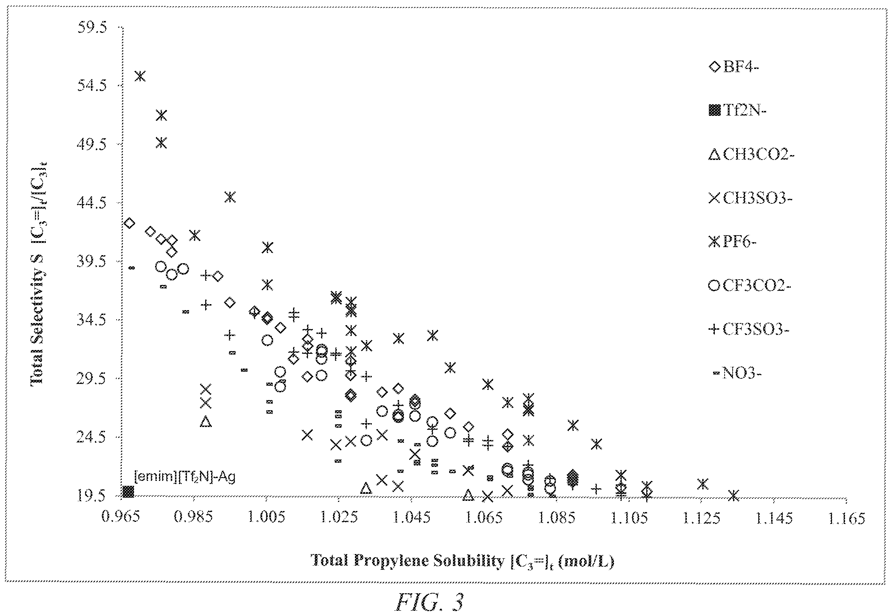

Figure 3 graphically illustrates these ionic liquid solvent anion/cation combinations which have total solubility and total selectivity values greater than those values of [emim][$Tf_2N$]-Ag. As can be seen in Figure 3, there are various cation/anion combinations which have total solubility and total selectivity greater than those values of [emim] [$Tf_2N$]-Ag.

Reference PROPHETIC EXAMPLE 1

Reference Prophetic Example 1 utilizes the system 100 of Figure 1. Process stream 111 of Figure 1 comprising natural gas, $CO_2$ and $H_2S$ is fed to the bottom of the separator 110, and solvent stream 122 comprising the ionic liquid solvent is fed to the top of the separator 110. The mass flow ratio of liquid to gas can be about 10 to about 100. The pressure of the separator 110 is about 100 psia (689 kPa) to about 250 psia (1.7 MPa), and the temperature is about 5 °C to about 50 °C. The ionic liquid solvent is [emim][$Tf_2N$]-Ag, and the concentration of Ag(I) in the ionic liquid solvent can be 0 N to about 1.8 N.

In the separator 110, gaseous natural gas, $CO_2$, and $H_2S$ rise through the ionic liquid solvent, and $CO_2$ and $H_2S$ are captured (e.g., physisorb) into the [emim][$Tf_2N$]-Ag. The $CO_2$ and $H_2S$ which are captured (e.g., physically dissolved) in the [emim] [Tf$_2$N]-Ag exits from the separator 110 and flows to a regenerator 120 via captured stream 113. $CO_2$ and $H_2S$ liberate (e.g., become insoluble) from the [emim][Tf$_2$N]-Ag in the regenerator 120 so as to regenerate the [emim][Tf$_2$N]-Ag. The regenerator 120 operates at a temperature from about 60 °C to about 450 °C, and a pressure greater than or equal to about 14.7 psia (101 kPa) where the pressure is less than about 20 psia (138 kPa) less than the pressure of the separator 110.

The regenerated [emim] [Tf$_2$N]-Ag is recycled back to the separator 110 via solvent stream 122. The $CO_2$ and $H_2S$ can be recovered in recovered stream 121. The $CO_2$ recovery can be greater than 50% by weight of $CO_2$ in the process stream 111 or by mole of $CO_2$ in the process stream 111, and the $H_2S$ recovery can be greater than 50% by weight of $H_2S$ in the process stream 111 or by mole $H_2S$ in the process stream 111. Purity of $CO_2$ in the recovered stream 121 can be greater than about 90% by mole of $CO_2$ in the recovered stream 121. Purity of $H_2S$ in the recovered stream 121 can be greater than about 90% by mole of $H_2S$ in the recovered stream 121.

Reference Prophetic Example 1 demonstrates $CO_2$ and $H_2S$ may be removed from natural gas to provide a natural gas stream having reduced amounts of $CO_2$ and $H_2S$.

Reference PROPHETIC EXAMPLE 2

Reference Prophetic Example 2 utilizes the system 100 of Figure 1. Process stream 111 of Figure 1 comprising syngas and $CO_2$ is fed to the bottom of the separator 110, and solvent stream 122 comprising the ionic liquid solvent is fed to the top of the separator 110. The mass flow ratio of liquid to gas can be about 10 to about 100. The pressure of the separator 110 is about 100 psia (689 kPa) to about 250 psia (1.7 MPa), and the temperature is about 5 °C to about 50 °C. The ionic liquid solvent is [emim][Tf$_2$N]-Ag, and the concentration of Ag(I) in the ionic liquid solvent can be 0 N to about 1.8 N.

In the separator 110, gaseous syngas and $CO_2$ rise through the ionic liquid solvent, and $CO_2$ is captured into the [emim][Tf$_2$N]-Ag. The $CO_2$ which is captured (e.g., physically dissolves) in the [emim][Tf$_2$N]-Ag exits from the separator 110 and flows to a regenerator 120 via captured stream 113. $CO_2$ liberates (e.g., becomes insoluble) from the [emim][Tf$_2$N]-Ag in the regenerator 120 so as to regenerate the [emim][Tf$_2$N]-Ag. The regenerator 120 operates at a temperature from about 60 °C to about 450 °C, and a pressure greater than about 14.7 psia (101 kPa) and wherein the pressure is less than about 20 psia (138 kPa) less than the pressure of the separator 110.

The regenerated [emim] [Tf$_2$N]-Ag is recycled back to the separator 110 via solvent stream 122. The $CO_2$ can be recovered in recovered stream 121. The $CO_2$ recovery can be greater than 50% by weight of $CO_2$ in the process stream 111 or by mole of $CO_2$ in the process stream 111. Purity of $CO_2$ in the recovered stream 121 can be greater than about 90% by mole of $CO_2$ in the recovered stream 121.

Reference Prophetic Example 2 demonstrates $CO_2$ may be removed from syngas to provide a syngas stream having reduced amounts of $CO_2$.

At least one embodiment is disclosed and variations, combinations, and/or modifications of the embodiment(s) and/or features of the embodiment(s) may be made by a person having ordinary skill in the art within the scope of the appended claims. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, $R_l$, and an upper limit, $R_u$, is disclosed, any number falling within the range is specifically disclosed. In particular, the following numbers within the range are specifically disclosed: $R = R_l + k^* (R_u - R_l)$, wherein k is a variable ranging from 1 percent to 100 percent with a 1 percent increment, i.e., k is 1 percent, 2 percent, 3 percent, 4 percent, 5 percent, ..... 50 percent, 51 percent, 52 percent... 95 percent, 96 percent, 97 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow

**Claims**

1. A method comprising:

    providing a polymerization process stream comprising an olefin and an alkane, wherein the olefin is propylene and the alkane is propane;
    capturing at least a portion of the olefin from the process stream by an ionic liquid solvent; and

recovering at least a portion of a captured olefin from the ionic liquid solvent,

wherein the ionic liquid solvent has a total solubility of the olefin greater than the total solubility of the olefin in [emim][Tf$_2$N]-Ag,

wherein the ionic liquid solvent has a total selectivity to the olefin over the alkane greater than the total selectivity of [emim] [Tf$_2$N]-Ag to the olefin over the alkane,

wherein the ionic liquid comprises butylethylimidazolium tetrafluoroborate ([beim][BF$_4$]), butylethylimidazolium hexafluorophosphate ([beim][[PF$_6$]), butylethylimidazolium trifluoromethanesulfonate ([beim][TfO]), butylethylimidazolium nitrate ([beim][NO$_3$]), butylmethylimidazolium trifluoroacetate ([bmim][TFA]), diethylimidazolium trifluoroacetate ([eeim][TFA]), diethylimidazolium trifluoromethanesulfonate ([eeim][TfO]), diethylimidazolium nitrate ([eeim][NO$_3$]), dimethylimidazolium nitrate ([mmim][NO$_3$]), ethyl-2,4-dimethylimidazolium trifluoroacetate [e-2,4-mmim][TFA]), ethyl-2,4-dimethylimidazolium trifluoromethanesulfonate ([e-2,4-mmim][TfO]), ethyl-2,4-dimethylimidazolium nitrate ([e-2,4-mmim] [NO$_3$]), ethyldimethylimidazolium tetrafluoroborate ([emmim] [BF$_4$]), ethyldimethylimidazolium trifluoroacetate ([emmim][TFA]), ethyldimethylimidazolium trifluoromethanesulfonate ([emmim][TfO]), ethylmethylimidazolium trifluoroacetate ([emim][TFA]), ethylmethylimidazolium nitrate ([emim][NO$_3$]), ethylpropylimidazolium tetrafluoroborate ([eprim][BF$_4$]), ethylpropylimidazolium hexafluorophosphate ([eprim][PF$_6$]), ethylpropylimidazolium trifluoroacetate ([eprim] [TFA]), ethylpropylimidazolium trifluoromethanesulfonate ([eprim][TfO]), ethylpropylimidazolium nitrate ([eprim][NO$_3$]), ethoxyethylmethylimidazolium tetrafluoroborate ([etO-emim][BF$_4$]), ethoxyethylmethylimidazolium hexafluorophosphate ([etO-emim][PF$_6$]), ethoxyethylmethylimidazolium trifluoroacetate ([etO-emim] [TFA]), ethoxyethylmethylimidazolium trifluoromethanesulfonate ([etO-emim] [TfO]), ethoxyethylmethylimidazolium nitrate ([etO-emim][NO$_3$]), ethoxydimethylimidazolium methanesulfonate ([etO-mmim][CH$_3$SO$_3$]), ethoxydimethylimidazolium trifluoroacetate ([etO-mmim][TFA]), heptylmethylimidazolium tetrafluoroborate ([hpmim][BF$_4$]), hexylethylimidazolium tetrafluoroborate ([hxeim][BF$_4$]), hexylmethylimidazolium tetrafluoroborate ([hxmim][BF$_4$]), hexylmethylimidazolium hexafluorophosphate ([hxmim][PF$_6$]), hexylmethylimidazolium nitrate ([hxmim][NO$_3$]), hexyldimethylimidazolium tetrafluoroborate ([hxmmim][BF$_4$]), methoxyethylmethylimidazolium tetrafluoroborate ([meO-emim][BF$_4$]), methoxyethylmethylimidazolium hexafluorophosphate ([meO-emim][PF$_6$]), methoxyethylmethylimidazolium trifluoroacetate ([meO-emim] [TFA]), methoxyethylmethylimidazolium trifluoromethanesulfonate ([meO-emim] [TfO]), methoxyethylmethylimidazolium nitrate ([meO-emim][NO$_3$]), methoxypropylmethylimidazolium tetrafluoroborate ([meO-prmim][BF$_4$]), methoxypropylmethylimidazolium hexafluorophosphate ([meO-prmim][PF$_6$]), methoxypropylmethylimidazolium trifluoroacetate ([meO-prmim][TFA]), methoxypropylmethylimidazolium trifluoromethanesulfonate ([meO-prmim] [TfO]), methylpropylimidazolium methanesulfonate ([mprim][CH$_3$SO$_3$]), methylpropylimidazolium trifluoroacetate ([mprim][TFA]), methylpropylimidazolium nitrate ([mprim][NO$_3$]), hydroxylethylmethylimidazolium methanesulfonate ([OH-emim][CH$_3$SO$_3$]), hydroxyloctylmethylimidazolium tetrafluoroborate ([OH-omim][BF$_4$]), hydroxyloctylmethylimidazolium hexafluorophosphate ([OH-omim][PF$_6$]), hydroxyloctylmethylimidazolium nitrate ([OH-omim][NO$_3$]), hydroxylpropylmethylimidazolium methanesulfonate ([OH-prmim][CH$_3$SO$_3$]), octylmethylimidazolium tetrafluoroborate ([omim][BF$_4$]), phenylethylmethylimidazolium methanesulfonate ([ph-emim][CH$_3$SO$_3$]), phenylethylmethylimidazolium hexafluorophosphate ([ph-emim][PF$_6$]), phenylethylmethylimidazolium trifluoroacetate ([ph-emim] [TFA]), phenylethylmethylimidazolium trifluoromethanesulfonate ([ph-emim] [TfO]), phenylethylmethylimidazolium nitrate ([ph-emim][NO$_3$]), phenylmethylimidazolium methanesulfonate ([ph-mim][CH$_3$SO$_3$]), phenylmethylimidazolium trifluoroacetate ([ph-mim][TFA]), phenylmethylimidazolium trifluoromethanesulfonate ([ph-mim][TfO]), phenylmethylimidazolium nitrate ([ph-mim][NO$_3$]), phenyldimethylimidazolium methanesulfonate ([ph-mmim][CH$_3$SO$_3$]), phenyldimethylimidazolium hexafluorophosphate ([ph-mmim][PF$_6$]), phenyldimethylimidazolium trifluoroacetate ([ph-mmim][TFA]), phenyldimethylimidazolium trifluoromethanesulfonate ([ph-mmim][TfO]), phenyldimethylimidazolium nitrate ([ph-mmim][NO$_3$]), pentylmethylimidazolium tetrafluoroborate ([pnmim][BF$_4$]), pentylmethylimidazolium hexafluorophosphate ([pnmim][PF$_6$]), pentylmethylimidazolium trifluoroacetate ([pnmim][TFA]), pentylmethylimidazolium trifluoromethanesulfonate ([pnmim][TfO]), pentylmethylimidazolium nitrate ([pnmim][NO$_3$]), propylmethylimidazolium trifluoroacetate ([prmim][TFA]), propylmethylimidazolium trifluoromethansulfonate ([prmim][TfO]), propylmethylimidazolium nitrate ([prmim][NO$_3$]), 1-butyl-2-methylpyridinium tetrafluoroborate ([1-b-2-mpy][BF$_4$]), 1-butyl-2-methylpyridinium hexafluorophosphate ([1-b-2-mpy][PF$_6$]), 1-butyl-2-methylpyridinium trifluoromethanesulfonate ([1-b-2-mpy][TfO]), 1-butyl-3-methylpyridinium tetrafluoroborate ([1-b-3-mpy][BF$_4$]), 1-butyl-3-methylpyridinium hexafluorophosphate ([1-b-3-mpy][PF$_6$]), 1-butyl-4-methylpyridinium tetrafluoroborate ([1-b-4-mpy][BF$_4$]), 1-butyl-4-methylpyridinium hexafluorophosphate ([1-b-4-mpy][PF$_6$]), 1-ethyl-2-methylpyridinium tetrafluoroborate ([1-e-2-mpy][BF$_4$]), 1-ethyl-2-methylpyridinium trifluoroacetate ([1-e-2-mpy][TFA]), 1-ethyl-2-methylpyridinium trifluoromethanesulfonate ([1-e-2-mpy][TfO]), 1-ethyl-3-methylpyridinium tetrafluoroborate ([1-e-3-mpy][BF$_4$]), 1-ethyl-3-methylpyridinium trifluoroacetate ([1-e-3-mpy][TFA]), 1-ethyl-3-methylpyridinium trifluoromethanesulfonate ([1-e-3-mpy][TfO]), 1-ethyl-4-dimethylacetylpyridinium tetrafluoroborate ([1-e-4-DMApy][BF$_4$]), 1-ethyl-4-dimethylacetylpyridinium hexafluorophosphate ([1-e-4-DMApy][PF$_6$]), 1-ethyl-4-methylpyridinium tetrafluoroborate ([1-e-4-mpy] [BF$_4$]), 1-ethyl-4-methylpyridinium trifluoroacetate ([1-e-4-mpy][TFA]), 1-ethyl-4-methylpyridinium trifluoromethanesulfonate ([1-e-4-mpy][TfO]), 1-etbyl-4-methylpyridinium nitrate ([1-e-4-mpy][NO$_3$]), 1-hexyl-4-methylpyridinium tetrafluoroborate ([1-hx-4-mpy][BF$_4$]), 1-propyl-3-methylpyridinium tetrafluoroborate ([1-pr-3-mpy][BF$_4$]), 1-propyl-3-methylpyridinium hexafluorophosphate ([1-pr-3-mpy][PF$_6$]), 1-propyl-3-methylpyridinium trifluoroacetate ([1-pr-3-mpy][TFA]), 1-propyl-3-methylpyridinium trifluoromethanesulfonate ([1-pr-3-mpy][TfO]), 1-propyl-4-methylpyridinium tetrafluoroborate ([1-pr-4-mpy][BF$_4$]), 1-propyl-4-methylpyridinium hexafluorophosphate ([1-pr-3-mpy][PF$_6$]), 1-propyl-4-methylpyridinium trifluoroacetate ([1-pr-4-mpy][TFA]), 1-propyl-4-methylpyridinium trifluoromethanesulfonate ([1-pr-4-mpy][TfO]), 1-propyl-4-methylpyridinium nitrate ([1-pr-4-mpy][NO$_3$]), butylpyridinium hexafluorophosphate ([bpy][PF$_6$]), butylpyridinium trifluoroacetate ([bpy][TFA]), butylpyridinium trifluoromethanesulfonate ([bpy][TfO]), butylpyridinium nitrate ([bpy][NO$_3$]), ethylpyridinium nitrate ([epy][NO$_3$]), heptylpyridinium tetrafluoroborate ([hppy][BF$_4$]), heptylpyridinium hexafluorophosphate ([hppy][PF$_6$]), heptylpyridinium nitrate ([hppy][NO$_3$]), hexylpyridinium tetrafluoroborate ([hxpy][BF$_4$]), hexylpyridinium hexalfuorophosphate ([hxpy][PF$_6$]), hexylpyridinium trifluoromethansulfonate ([hxpy][TfO]), hexylpyridinium nitrate ([hxpy][NO$_3$]), hydroxypropylpyridinium methanesulfonate ([OH-prpy][CH$_3$SO$_3$]), octylpyridinium tetrafluoroborate ([opy][BF$_4$]), pentylpyridinium tetrafluoroborate ([pnpy][BF$_4$]), pentylpyridinium hexafluorophosphate ([pnpy][PF$_6$]), pentylpyridinium trifluoroacetate ([pnpy][TFA]). pentylpyridinium trifluoromethanesulfonate ([pnpy][TfO]), pentylpyridinium nitrate ([pnpy][NO$_3$]), propylpyridinium trifluoroacetate ([prpy][TFA]), propylpyridinium trifluoromethanesulfonate ([prpy][TfO]), propylpyridinium nitrate ([prpy][NO$_3$]), butylmethylpyrrolidinium tetrafluoroborate ([bmpyr][BF$_4$]), butylmethylpyrrolidinium hexafluorophosphate ([bmpyr][PF$_6$]), butylmethylpyrrolidinium trifluoromethanesulfonate ([bmpyr][TfO]), butylpyrrolidinium acetate ([bpyr][CH$_3$CO$_2$]), hexylmethylpyrrolidinium tetrafluoroborate ([hxmpyr][BF$_4$]), hexylmethylpyrrolidinium hexafluorophosphate ([hxmpyr][PF$_6$]), hexylpyrrolidinium acetate ([hxpyr][CH$_3$CO$_2$]), hexylpyrrolidinium trifluoroacetate ([hxpyr][TFA]), octylpyrrolidinium tetrafluoroborate ([opyr][BF$_4$]), octylpyrrolidinium methanesulfonate ([opyr][CH$_3$SO$_3$]), octylpyrrolidinium hexafluorophosphate ([opyr][PF$_6$]), octylpyrrolidinium nitrate ([opyr][NO$_3$]), propylmethylpyrrolidinium tetrafluoroborate ([prmpyr][BF$_4$]), propylmethylpyrrolidinium hexafluorophosphate ([prmpyr][PF$_6$]), propylmethylpyrrolidinium trifluoroacetate ([prmpyr] [TFA]), propylmethylpyrrolidinium trifluoromethanesulfonate ([prmpyr] [TfO]), butylethyldimethylammonium tetrafluoroborate ([bemm-N][BF$_4$]), butylethyldimethylammonium hexafluorophosphate ([bemm-N][PF$_6$]), butylethyldimethylammonium trifluoroacetate ([bemm-N][TFA]), butylethyldimethylammonium trifluoromethanesulfonate ([bemm-N][TfO]), butyltrimethylammonium trifluoroacetate ([bmmm-N][TFA]), butyltrimethylammonium trifluoromethanesulfonate ([bmmm-N][TfO]), butyltrimethylammonium nitrate ([bmmm-N][NO$_3$]), N,N,N-trimethylethanolammonium methanesulfonate ([choline][CH$_3$SO$_3$]), N,N,N-trimethylethanolammonium nitrate ([choline][NO$_3$]), ethylammonium hexafluorophosphate ([eN][PF$_6$]), tetraethylammonium tetrafluoroborate ([eeee-N][BF$_4$]), tetraethylammonium hexafluorophosphate ([eeee-N][PF$_6$]), tetraethylammonium trifluoromethanesulfonate ([eeee-N][TfO]), butyldimethylethanolammonium trifluoroacetate ([OHe-bmm-N][TFA]), butyldimethylethanolammonium trifluoromethanesulfonate ([OHe-bmm-N] [TfO]), butyldimethylethanolammonium nitrate ([OHe-bmm-N][NO$_3$]), ethyldimethylethanolammonium nitrate ([OHe-emm-N][NO$_3$]), or combinations thereof.

2. The method of claim 1, wherein a total solubility of the olefin in the ionic liquid solvent is about 0.01 to about 100 mol/L; or
wherein a total solubility of the alkane in the ionic liquid solvent is about 0.01 to about 10 mol/L.

3. The method claim 1, wherein a total selectivity of the ionic liquid solvent to the olefin over propane is from about 8 to greater than about 300.

4. The method of claim 1, wherein the ionic liquid solvent comprises a Ag(I) salt, a Cu(I) salt, or combinations thereof, and optionally wherein a concentration of silver, copper, or both, in the ionic liquid solvent is from about 0.1 N to about 5 N, or from about 0.45 N to about 1.8 N.

5. The method of claim 1, wherein said capturing is performed at a liquid-to-gas mass flow ratio from about 1 to about 350; or
wherein the method further comprises: flowing the ionic liquid solvent at a mass flow rate from about 1,000 pounds per hour to about 300,000 pounds per hour.

6. The method of claim 1, wherein said capturing is performed at a liquid-to-gas mass flow ratio such that at least a portion of the alkane is captured by the ionic liquid solvent in addition to the capture of at least a portion of the olefin.

7. The method of claim 6, wherein the liquid-to-gas mass flow ratio is greater than about 15.

8. The method of claim 6, wherein at least a portion of the alkane is captured by absorption, dissolution, adsorption, complexation, or combinations thereof.

9. The method of claim 6, further comprising recovering at least a portion of a captured alkane from the ionic liquid solvent, and optionally wherein recovering at least a portion of a captured alkane is performed at a temperature greater than the temperature at which the alkane is captured and at a pressure less than the pressure at which the alkane is captured.

10. The method of claim 1, wherein said capturing is performed at a liquid-to-gas mass flow ratio such that at least a portion of the alkane from the process stream is not captured by the ionic liquid solvent.

11. The method of claim 10, wherein a liquid-to-gas mass flow ratio is less than about 200.

12. The method of claim 10 , further comprising:

flowing an uncaptured portion of the alkane to a membrane unit; and
recovering at least a portion of the uncaptured portion of the alkane from the membrane unit.

13. The method of claim 1, wherein the olefin is captured by the ionic liquid solvent at a temperature from about 20 °C to about 40 °C; or wherein the olefin is captured by the ionic liquid solvent at a pressure from about 100 psia to about 250 psia.

14. The method of claim 1, wherein the ionic liquid solvent comprises a cation, an anion, and a Ag(I) salt, wherein the Ag(I) salt comprises an anion, wherein the anion of the Ag(I) salt matches the anion of the ionic liquid solvent, or wherein the ionic liquid solvent comprises a cation, an anion, and a Cu(I) salt, wherein the Cu(I) salt comprises an anion, wherein the anion of the Cu(I) salt matches the anion of the ionic liquid solvent.


**Patentansprüche**

1. Verfahren, umfassend:

Bereitstellen eines Polymerisationsprozesssstroms, umfassend ein Olefin und ein Alkan, wobei das Olefin Propylen und das Alkan Propan ist;
Abfangen mindestens eines Teils des Olefins aus dem Prozessstrom durch ein ionisches flüssiges Lösungsmittel; und
Gewinnen mindestens eines Teils eines abgefangenen Olefins aus dem ionischen flüssigen Lösungsmittel,
wobei das ionische flüssige Lösungsmittel eine Gesamtlöslichkeit des Olefins aufweist, die größer als die Gesamtlöslichkeit des Olefins in [emim] [Tf$_2$N]-Ag ist,
wobei das ionische flüssige Lösungsmittel eine Gesamtselektivität für das Olefin gegenüber dem Alkan aufweist, die größer als die Gesamtselektivität von [emim] [Tf$_2$N]-Ag für das Olefin gegenüber dem Alkan ist, wobei die Ionenflüssigkeit Butylethylimidazoliumtetrafluoroborat ([beim][BF$_4$]), Butylethylimidazoliumhexafluorophosphat ([beim][[PF$_6$]), Butylethylimidazoliumtrifluormethansulfonat ([beim][TfO]), Butylethylimidazoliumnitrat ([beim][NO$_3$]), Butylmethylimidazoliumtrifluoracetat ([bmim][TFA]), Diethylimidazoliumtrifluoracetat ([eeim][TFA]), Diethylimidazoliumtrifluormethansulfonat ([eeim][TfO]), Diethylimidazoliumnitrat ([eeim][NO$_3$]), Dimethylimidazoliumnitrat ([mmim][NO$_3$]), Ethyl-2,4-dimethylimidazoliumtrifluoracetat [e-2,4-mmim][TFA]), Ethyl-2,4-dimethylimidazoliumtrifluormethansulfonat ([e-2,4-mmim][TfO]), Ethyl-2,4-dimethylimidazoliumnitrat ([e-2,4-mmim][NO$_3$]), Ethyldimethylimidazoliumtetrafluoroborat ([emmim][BF$_4$]), Ethyldimethylimidazoliumtrifluoracetat ([emmim][TFA]), Ethyldimethylimidazoliumtrifluormethansulfonat ([emmim][TfO]), Ethylmethylimidazoliumtrifluoracetat ([emim] [TFA]), Ethylmethylimidazoliumnitrat ([emim][NO$_3$]), Ethylpropylimidazoliumtetrafluoroborat ([eprim][BF$_4$]), Ethylpropylimidazoliumhexafluorophosphat ([eprim][PF$_6$]), Ethylpropylimidazoliumtrifluoracetat ([eprim][TFA]), Ethylpropylimidazoliumtrifluormethansulfonat ([eprim][TfO]), Ethylpropylimidazoliumnitrat ([eprim][NO$_3$]), Ethoxyethylmethylimidazoliumtetrafluoroborat ([etO-emim][BF$_4$]), Ethoxyethylmethylimidazoliumhexafluorophosphat ([etOemim][PF$_6$]), Ethoxyethylmethylimidazoliumtrifluoracetat ([etOemim][TFA]), Ethoxyethylmethylimidazoliumtrifluormethansulfonat ([etO-emim][TfO]), Ethoxyethylmethylimidazoliumnitrat ([etOemim][NO$_3$]), Ethoxydimethylimidazoliummethansulfonat ([etOmmim][CH$_3$SO$_3$]), Ethoxydi-

methylimidazoliumtrifluoracetat ([etOmmim][TFA]), Heptylmethylimidazoliumtetrafluoroborat ([hpmim][BF$_4$]), Hexylethylimidazoliumtetrafluoroborat ([hxeim] [BF$_4$]), Hexylmethylimidazoliumtetrafluoroborat ([hxmim] [BF$_4$]), Hexylmethylimidazoliumhexafluorophosphat ([hxmim] [PF$_6$]), Hexylmethylimidazoliumnitrat ([hxmim][NO$_3$]), Hexyldimethylimidazoliumtetrafluoroborat ([hxmmim][BF$_4$]), Methoxyethylmethylimidazoliumtetrafluoroborat ([meO-emim][BF$_4$]), Methoxyethylmethylimidazoliumhexafluorophosphat ([meOemim][PF$_6$]), Methoxyethylmethylimidazoliumtrifluoracetat ([meOemim][TFA]), Methoxyethylmethylimidazoliumtrifluormethansulfonat ([meOemim][TfO]), Methoxyethylmethylimidazoliumnitrat ([meOemim][NO$_3$]), Methoxypropylmethylimidazoliumtetrafluoroborat ([meO-prmim][BF$_4$]), Methoxypropylmethylimidazoliumhexafluorophosphat ([meOprmim][PF$_6$]), Methoxypropylmethylimidazoliumtrifluoracetat ([meO-prmim][TFA]), Methoxypropylmethylimidazoliumtrifluormethansulfonat ([meO-prmim][TfO]), Methylpropylimidazoliummethansulfonat ([mprim] [CH$_3$SO$_3$]), Methylpropylimidazoliumtrifluoracetat ([mprim][TFA]), Methylpropylimidazoliumnitrat ([mprim][NO$_3$]), Hydroxylethylmethylimidazoliummethansulfonat ([OHemim][CH$_3$SO$_3$]), Hydroxyloctylmethylimidazoliumtetrafluoroborat ([OH-omim] [BF$_4$]), Hydroxyloctylmethylimidazoliumhexafluorophosphat ([OH-omim][PF$_6$]), Hydroxyloctylmethylimidazoliumnitrat ([OH-omim][NO$_3$]), Hydroxylpropylmethylimidazoliummethansulfonat ([OH-prmim][CH$_3$SO$_3$]), Octylmethylimidazoliumtetrafluorborat ([omim][BF$_4$]), Phenylethylmethylimidazoliummethansulfonat ([ph-emim][CH$_3$SO$_3$]), Phenylethylmethylimidazoliumhexafluorophosphat ([ph-emim] [PF$_6$]), Phenylethylmethylimidazoliumtrifluoracetat ([ph-emim] [TFA]), Phenylethylmethylimidazoliumtrifluormethansulfonat ([ph-emim][TfO]), Phenylethylmethylimidazoliumnitrat ([ph-emim][NO$_3$]), Phenylmethylimidazoliummethansulfonat ([phmim][CH$_3$SO$_3$]), Phenylmethylimidazoliumtrifluoracetat ([ph-mim][TFA]), Phenylmethylimidazoliumtrifluormethansulfonat ([ph-mim][TfO]), Phenylmethylimidazoliumnitrat ([ph-mim][NO$_3$]), Phenyldimethylimidazoliummethansulfonat ([ph-mmim][CH$_3$SO$_3$]), Phenyldimethylimidazoliumhexafluorphosphat ([ph-mmim][PF$_6$]), Phenyldimethylimidazoliumtrifluoracetat ([ph-mmim][TFA]), Phenyldimethylimidazoliumtrifluormethansulfonat ([phmmim][TfO]), Phenyldimethylimidazoliumnitrat ([ph-mmim][NO$_3$]), Pentylmethylimidazoliumtetrafluoroborat ([pnmim][BF$_4$]), Pentylmethylimidazoliumhexafluorophosphat ([pnmim][PF$_6$]), Pentylmethylimidazoliumtrifluoracetat ([pnmim][TFA]), Pentylmethylimidazoliumtrifluormethansulfonat ([pnmim][TfO]), Pentylmethylimidazoliumnitrat ([pnmim][NO$_3$]), Propylmethylimidazoliumtrifluoracetat ([prmim][TFA]), Propylmethylimidazoliumtrifluormethansulfonat ([prmim][TfO]), Propylmethylimidazoliumnitrat ([prmim][NO$_3$]), 1-Butyl-2-methylpyridiniumtetrafluoroborat ([1-b-2-mpy][BF$_4$]), 1-Butyl-2-methylpyridiniumhexafluorophosphat ([1-b-2-mpy][PF$_6$]), 1-Butyl-2-methylpyridiniumtrifluormethansulfonat ([1-b-2-mpy][TfO]), 1-Butyl-3-methylpyridiniumtetrafluoroborat ([1-b-3-mpy][BF$_4$]), 1-Butyl-3-methylpyridiniumhexafluorophosphat ([1-b-3-mpy][PF$_6$]), 1-Butyl-4-methylpyridiniumtetrafluoroborat ([1-b-4-mpy][BF$_4$]), 1-Butyl-4-methylpyridiniumhexafluorophosphat ([1-b-4-mpy][PF$_6$]), 1-Ethyl-2-methylpyridiniumtetrafluorborat ([1-e-2-mpy][BF$_4$]), 1-Ethyl-2-methylpyridiniumtrifluoracetat ([1-e-2-mpy][TFA]), 1-Ethyl-2-methylpyridiniumtrifluormethansulfonat ([1-e-2-mpy][TfO]), 1-Ethyl-3-methylpyridiniumtetrafluoroborat ([1-e-3-mpy] [BF$_4$]), 1-Ethyl-3-methylpyridiniumtrifluoracetat ([1-e-3-mpy][TFA]), 1-Ethyl-3-methylpyridiniumtrifluormethansulfonat ([1-e-3-mpy][TfO]), 1-Ethyl-4-dimethylacetylpyridiniumtetrafluoroborat ([1-e-4-DMApy][BF$_4$]), 1-Ethyl-4-dimethylacetylpyridiniumhexafluorophosphat ([1-e-4-DMApy][PF$_6$]), 1-Ethyl-4-methylpyridiniumtetrafluoroborat ([1-e-4-mpy][BF$_4$]), 1-Ethyl-4-methylpyridiniumtrifluoracetat ([1-e-4-mpy][TFA]), 1-Ethyl-4-methylpyridiniumtrifluormethansulfonat ([1-e-4-mpy][TfO]), 1-Ethyl-4-methylpyridiniumnitrat ([1-e-4-mpy] [NO$_3$]), 1-Hexyl-4-methylpyridiniumtetrafluorborat ([1-hx-4-mpy] [BF$_4$]), 1-Propyl-3-methylpyridiniumtetrafluoroborat ([1-pr-3-mpy][BF$_4$]), 1-Propyl-3-methylpyridiniumhexafluorophosphat ([1-pr-3-mpy][PF$_6$]), 1-Propyl-3-methylpyridiniumtrifluoracetat ([1-pr-3-mpy][TFA]), 1-Propyl-3-methylpyridiniumtrifluormethansulfonat ([1-pr-3-mpy][TfO]), 1-Propyl-4-methylpyridiniumtetrafluoroborat ([1-pr-4-mpy][BF$_4$]), 1-Propyl-4-methylpyridiniumhexafluorophosphat ([1-pr-3-mpy][PF$_6$]), 1-Propyl-4-methylpyridiniumtrifluoracetat ([1-pr-4-mpy][TFA]), 1-Propyl-4-methylpyridiniumtrifluormethansulfonat ([1-pr-4-mpy][TfO]), 1-Propyl-4-methylpyridiniumnitrat ([1-pr-4-mpy][NO$_3$]), Butylpyridiniumhexafluorophosphat ([bpy [PF$_6$]), Butylpyridiniumtrifluoracetat ([bpy][TFA]), Butylpyridiniumtrifluormethansulfonat ([bpy][TfO]), Butylpyridiniumnitrat ([bpy [NO$_3$]), Ethylpyridiniumnitrat ([epy [NO$_3$]), Heptylpyridiniumtetrafluoroborat ([hppy] [BF$_4$]), Heptylpyridiniumhexafluorophosphat ([hppy][PF$_6$]), Heptylpyridiniumnitrat ([hppy][NO$_3$]), Hexylpyridiniumtetrafluoroborat ([hxpy] [BF$_4$]), Hexylpyridiniumhexalfluorphosphat ([hxpy][PF$_6$]), Hexylpyridiniumtrifluormethansulfonat ([hxpy][TfO]), Hexylpyridiniumnitrat ([hxpy][NO$_3$]), Hydroxypropylpyridiniummethansulfonat ([OH-prpy][CH$_3$SO$_3$]), Octylpyridiniumtetrafluoroborat ([opy][BF$_4$]), Pentylpyridiniumtetrafluoroborat ([pnpy][BF$_4$]), Pentylpyridiniumhexafluorophosphat ([pnpy][PF$_6$]), Pentylpyridiniumtrifluoracetat ([pnpy][TFA]), Pentylpyridiniumtrifluormethansulfonat ([pnpy][TfO]), Pentylpyridiniumnitrat ([pnpy][NO$_3$]), Propylpyridiniumtrifluoracetat ([prpy][TFA]), Propylpyridiniumtrifluormethansulfonat ([prpy][TfO]), Propylpyridiniumnitrat ([prpy][NO$_3$]), Butylmethylpyrrolidiniumtetrafluoroborat ([bmpyr][BF$_4$]), Butylmethylpyrrolidiniumhexafluorophosphat ([bmpyr][PF$_6$]), Butylmethylpyrrolidiniumtrifluormethansulfonat ([bmpyr][TfO]), Butylpyrrolidiniumacetat ([bpyr] [CH$_3$CO$_2$]), Hexylmethylpyrrolidiniumtetrafluoroborat ([hxmpyr][BF$_4$]), Hexylmethylpyrrolidiniumhexafluorophosphat ([hxmpyr][PF$_6$]), Hexylpyrrolidiniumacetat ([hxpyr][CH$_3$CO$_2$]), Hexylpyrrolidiniumtrifluoracetat ([hxpyr][TFA]), Octylpyrrolidiniumtetrafluoroborat

([opyr][BF$_4$]), Octylpyrrolidiniummethansulfonat ([opyr][CH$_3$SO$_3$]), Octylpyrrolidiniumhexafluorophosphat ([opyr][PF$_6$]), Octylpyrrolidiniumnitrat ([opyr][NO$_3$]), Propylmethylpyrrolidiniumtetrafluoroborat ([prmpyr][BF$_4$]), Propylmethylpyrrolidiniumhexafluorophosphat ([prmpyr][PF$_6$]), Propylmethylpyrrolidiniumtrifluoracetat ([prmpyr][TFA]), Propylmethylpyrrolidiniumtrifluormethansulfonat ([prmpyr][TfO]), Butylethyldimethylammoniumtetrafluoroborat ([bemm-N][BF$_4$]), Butylethyldimethylammoniumhexafluorophosphat ([bemm-N][PF$_6$]), Butylethyldimethylammoniumtrifluoracetat ([bemm-N][TFA]), Butylethyldimethylammoniumtrifluormethansulfonat ([bemm-N][TfO]), Butyl trimethylammoniumtrifluoracetat ([bmmm-N][TFA]), Butyltrimethylammoniumtrifluormethansulfonat ([bmmm-N][TfO]), Butyltrimethylammoniumnitrat ([bmmm-N]NO$_3$]), N,N,N-Trimethylethanolammoniummethansulfonat ([Cholin][CH$_3$SO$_3$]), N,N,N-Trimethylethanolammoniumnitrat ([Cholin][NO$_3$]), Ethylammoniumhexafluorophosphat ([e-N] [PF$_6$]),Tetraethylammoniumtetrafluoroborat ([eeee-N] [BF$_4$]),Tetraethylammoniumhexafluorophosphat ([eeee-N] [PF$_6$]),Tetraethylammoniumtrifluormethansulfonat ([eeee-N][TfO]), Butyldimethylethanolammoniumtrifluoracetat ([OHe-bmm-N][TFA]), Butyldimethylethanolammoniumtrifluormethansulfonat ([OHe-bmm-N][TfO]), Butyldimethylethanolammoniumnitrat ([OHebmm-N][NO$_3$]), Ethyldimethylethanolammoniumnitrat ([OHe-emm-N] [NO$_3$]) oder Kombinationen davon umfasst.

2. Verfahren nach Anspruch 1, wobei eine Gesamtlöslichkeit des Olefins in dem ionischen flüssigen Lösungsmittel etwa 0,01 bis etwa 100 mol/l beträgt; oder
wobei eine Gesamtlöslichkeit des Alkans in dem ionischen flüssigen Lösungsmittel etwa 0,01 bis etwa 10 mol/l beträgt.

3. Verfahren nach Anspruch 1, wobei eine Gesamtselektivität des ionischen flüssigen Lösungsmittels für das Olefin gegenüber Propan etwa 8 bis mehr als etwa 300 beträgt.

4. Verfahren nach Anspruch 1, wobei das ionische flüssige Lösungsmittel ein Ag(I)-Salz, ein Cu(I)-Salz oder Kombinationen davon umfasst, und wobei wahlweise eine Konzentration von Silber, Kupfer oder beiden in dem ionischen flüssigen Lösungsmittel von etwa 0,1 N bis etwa 5 N oder von etwa 0,45 N bis etwa 1,8 N beträgt.

5. Verfahren nach Anspruch 1, wobei das Abfangen bei einem Flüssigkeit-zu-Gas-Massenstromverhältnis von etwa 1 bis etwa 350 durchgeführt wird; oder
wobei das Verfahren ferner Folgendes umfasst: Strömenlassen des ionischen flüssigen Lösungsmittels mit einer Massenstromrate von etwa 1.000 Pfund pro Stunde bis etwa 300.000 Pfund pro Stunde.

6. Verfahren nach Anspruch 1, wobei das Abfangen bei einem Flüssigkeits-zu-Gas-Massenstromverhältnis durchgeführt wird, sodass zusätzlich zu dem Abfangen mindestens eines Teils des Olefins mindestens ein Teil des Alkans durch das ionische flüssige Lösungsmittel abgefangen wird.

7. Verfahren nach Anspruch 6, wobei das Flüssigkeit-zu-Gas-Massenstromverhältnis größer als etwa 15 ist.

8. Verfahren nach Anspruch 6, wobei mindestens ein Teil des Alkans durch Absorption, Auflösung, Adsorption, Komplexbildung oder Kombinationen davon abgefangen wird.

9. Verfahren nach Anspruch 6, ferner umfassend ein Gewinnen mindestens eines Teils eines abgefangenen Olefins aus dem ionischen flüssigen Lösungsmittel und wahlweise wobei das Gewinnen mindestens eines Teils eines abgefangenen Alkans bei einer Temperatur durchgeführt wird, die höher als die Temperatur ist, bei der das Alkan abgefangen wird, und bei einem Druck, der geringer als der Druck ist, bei dem das Alkan abgefangen wird.

10. Verfahren nach Anspruch 1, wobei das Abfangen bei einem Flüssigkeit-zu-Gas-Massenstromverhältnis durchgeführt wird, sodass mindestens ein Teil des Alkans aus dem Prozessstrom nicht durch das ionische flüssige Lösungsmittel abgefangen wird.

11. Verfahren nach Anspruch 10, wobei ein Flüssigkeit-zu-Gas-Massenstromverhältnis kleiner als etwa 200 ist.

12. Verfahren nach Anspruch 10, ferner umfassend:

Strömenlassen eines nicht abgefangenen Teils des Alkans zu einer Membraneinheit; und
Gewinnen mindestens eines Teils des nicht abgefangenen Teils des Alkans aus der Membraneinheit.

13. Verfahren nach Anspruch 1, wobei das Olefin durch das ionische flüssige Lösungsmittel bei einer Temperatur von etwa 20 °C bis etwa 40 °C abgefangen wird; oder wobei das Olefin durch das ionische flüssige Lösungsmittel bei einem Druck von etwa 100 psia bis etwa 250 psia abgefangen wird.

14. Verfahren nach Anspruch 1, wobei das ionische flüssige Lösungsmittel ein Kation, ein Anion und ein Ag(I)-Salz umfasst, wobei das Ag(I)-Salz ein Anion umfasst, wobei das Anion des Ag(I)-Salzes das gleiche Anion wie das des ionischen flüssigen Lösungsmittels ist oder

wobei das ionische flüssige Lösungsmittel ein Kation, ein Anion und ein Cu(I)-Salz umfasst, wobei das Cu(I)-Salz ein Anion umfasst, wobei das Anion des Cu(I)-Salzes das gleiche Anion wie das des ionischen flüssigen Lösungsmittels ist.

**Revendications**

1. Procédé comprenant :

la fourniture d'un flux de traitement de polymérisation comprenant une oléfine et un alcane, dans lequel l'oléfine est le propylène et l'alcane est le propane ;
la capture d'au moins une partie de l'oléfine du flux de traitement par un solvant liquide ionique ; et
la récupération d'au moins une partie d'une oléfine capturée à partir du solvant liquide ionique,
dans lequel le solvant liquide ionique a une solubilité totale de l'oléfine supérieure à la solubilité totale de l'oléfine dans [emim][Tf$_2$N]-Ag,
dans lequel le solvant liquide ionique a une sélectivité totale vis-à-vis de l'oléfine sur l'alcane supérieure à la sélectivité totale de [emim] [Tf$_2$N]-Ag vis-à-vis de l'oléfine sur l'alcane, dans lequel le liquide ionique comprend du tétrafluoroborate de butyléthylimidazolium ([beim][BF$_4$]), hexafluorophosphate de butyléthylimidazolium ([beim][[PF$_6$]), trifluorométhanesulfonate de butyléthylimidazolium ([beim][TfO]), nitrate de butyléthylimidazolium ([beim][NO$_3$]), trifluoroacétate de butylméthylimidazolium ([bmim][TFA]), trifluoroacétate de diéthylimidazolium ([eeim][TFA]), trifluorométhanesulfonate de diéthylimidazolium ([eeim][TfO]), nitrate de diéthylimidazolium ([eeim][NO$_3$]), nitrate de diméthylimidazolium ([mmim][NO$_3$]), trifluoroacétate d'éthyl-2,4-diméthylimidazolium [e-2,4-mmim][TFA]), trifluorométhanesulfonate d'éthyl-2,4-diméthylimidazolium [e-2,4-mmim][TfO]), nitrate d'éthyl-2,4-diméthylimidazolium ([e-2,4-mmim][NO$_3$]), tétrafluoroborate d'éthyldiméthylimidazolium ([emmim][BF$_4$]), trifluoroacétate d'éthyldiméthylimidazolium ([emmim][TFA]), trifluorométhanesulfonate d'éthyldiméthylimidazolium ([emmim][TfO]),trifluoroacétate d'éthylméthylimidazolium ([emim][TFA]), nitrate d'éthylméthylimidazolium ([emim][NO$_3$]) , tétrafluoroborate d'éthylpropylimidazolium ([eprim] [BF$_4$]), hexafluorophosphate d'éthylpropylimidazolium ([eprim][PF$_6$]), trifluoroacétate d'éthylpropylimidazolium ([eprim][TFA]), trifluorométhanesulfonate d'éthylpropylimidazolium ([eprim][TfO]), nitrate d'éthylpropylimidazolium ([eprim][NO$_3$]), tétrafluoroborate d'éthoxyéthylméthylimidazolium ([etOemim] [BF$_4$]), hexafluorophosphate d'éthoxyéthylméthylimidazolium ([etO-emim][PF$_6$]), trifluoroacétate d'éthoxyéthylméthylimidazolium ([etO-emim][TFA]), trifluorométhanesulfonate d'éthoxyéthylméthylimidazolium ([etO-emim][TfO]), nitrate d'éthoxyéthylméthylimidazolium ([etOemim] [NO$_3$]), méthanesulfonate d'éthoxydiméthylimidazolium ([etO-mmim][CH$_3$SO$_3$]), trifluoroacétate d'éthoxydiméthylimidazolium ([etO-mmim][TFA]), tétrafluoroborate d'heptylméthylimidazolium ([hpmim][BF$_4$]), tétrafluoroborate d'hexyléthylimidazolium ([hxeim][BF$_4$]), tétrafluoroborate d'hexylméthylimidazolium ([hxmim [BF$_4$]), hexafluorophosphate d'hexylméthylimidazolium ([hxmim [PF$_6$]), nitrate d'hexylméthylimidazolium ([hxmim] [NO$_3$]), tétrafluoroborate d'hexyldiméthylimidazolium ([hxmmim][BF$_4$]), tétrafluoroborate de méthoxyéthylméthylimidazolium ([meOemim] [BF$_4$]), hexafluorophosphate de méthoxyéthylméthylimidazolium ([meO-emim][PF$_6$]), trifluoroacétate de méthoxyéthylméthylimidazolium ([meOemim][TFA]), trifluorométhanesulfonate de méthoxyéthylméthylimidazolium ([meO-emim][TfO]), nitrate de méthoxyéthylméthylimidazolium ([meO-emim][NO$_3$]), tétrafluoroborate de méthoxypropylméthylimidazolium ([meOprmim][BF$_4$]), hexafluorophosphate de méthoxypropylméthylimidazolium ([meO-prmim][PF$_6$]), trifluoroacétate de méthoxypropylméthylimidazolium ([meOprmim][TFA]), trifluorométhanesulfonate de méthoxypropylméthylimidazolium ([meO-prmim][TfO]), méthanesulfonate de méthylpropylimidazolium ([mprim][CH$_3$SO$_3$]), trifluoroacétate de méthylpropylimidazolium ([mprim][TFA]), nitrate de méthylpropylimidazolium ([mprim][NO$_3$]), méthanesulfonate d'hydroxyléthylméthylimidazolium ([OHemim] [CH$_3$SO$_3$]), tétrafluoroborate d'hydroxyloctylméthylimidazolium ([OH-omim][BF$_4$]), hexafluorophosphate d'hydroxyloctylméthylimidazolium ([OH-omim][PF$_6$]), nitrate d'hydroxyloctylméthylimidazolium ([OH-omim] [NO$_3$]), méthanesulfonate d'hydroxypropylméthylimidazolium ([OH-prmim][CH$_3$SO$_3$]), tétrafluoroborate d'octylméthylimidazolium ([omim] [BF$_4$]), méthanesulfonate de phényléthylméthylimidazolium ([ph-emim] [CH$_3$SO$_3$]), hexafluorophosphate de phényléthylméthylimidazolium ([ph-emim] [PF$_6$]), trifluoroacétate de phényléthylméthylimidazolium ([ph-emim][TFA]), trifluorométhanesulfonate de phényléthylméthylimidazolium ([ph-emim][TfO]), nitrate de phényléthylméthylimidazolium ([ph-emim] [NO$_3$]), méthanesulfonate de phé-

nylméthylimidazolium ([ph-mim][CH$_3$SO$_3$]), trifluoroacétate de phénylméthylimidazolium ([ph-mim][TFA]), trifluorométhanesulfonate de phénylméthylimidazolium ([phmim][TfO]), nitrate de phénylméthylimidazolium ([ph-mim][NO$_3$]), méthanesulfonate de phényldiméthylimidazolium ([phmmim][CH$_3$SO$_3$]), hexafluorophosphate de phényldiméthylimidazolium ([ph-mmim][PF$_6$]), trifluoroacétate de phényldiméthylimidazolium ([ph-mmim][TFA]), trifluorométhanesulfonate de phényldiméthylimidazolium ([ph-mmim][TfO]), nitrate de phényldiméthylimidazolium ([ph-mmim][NO$_3$]), tétrafluoroborate de pentylméthylimidazolium ([pnmim] [BF$_4$]), hexafluorophosphate de pentylméthylimidazolium ([pnmim] [PF$_6$]), trifluoroacétate de pentylméthylimidazolium ([pnmim][TFA]), trifluorométhanesulfonate de pentylméthylimidazolium ([pnmim][TfO]), nitrate de pentylméthylimidazolium ([pnmim][NO$_3$]), trifluoroacétate de propylméthylimidazolium ([prmim][TFA]), trifluorométhanesulfonate de propylméthylimidazolium ([prmim][TfO]), nitrate de propylméthylimidazolium ([prmim][NO$_3$]), tétrafluoroborate de 1-butyl-2-méthylpyridinium ([1-b-2-mpy][BF$_4$]), hexafluorophosphate de 1-butyl-2-méthylpyridinium ([1-b-2-mpy][PF$_6$]), trifluorométhanesulfonate de 1-butyl-2-méthylpyridinium ([1-b-2-mpy][TfO]), tétrafluoroborate de 1-butyl-3-méthylpyridinium ([1-b-3-mpy][BF$_4$]), hexafluorophosphate de 1-butyl-3-méthylpyridinium ([1-b-3-mpy][PF$_6$]), tétrafluoroborate de 1-butyl-4-méthylpyridinium ([1-b-4-mpy] [BF$_4$]), hexafluorophosphate de 1-butyl-4-méthylpyridinium ([1-b-4-mpy][PF$_6$]), tétrafluoroborate de 1-éthyl-2-méthylpyridinium ([1-e-2-mpy][BF$_4$]), trifluoroacétate de 1-éthyl-2-méthylpyridinium ([1-e-2-mpy][TFA]), trifluorométhanesulfonate de 1-éthyl-2-méthylpyridinium ([1-e-2-mpy][TfO]), tétrafluoroborate de 1-éthyl-3-méthylpyridinium ([1-e-3-mpy][BF$_4$]), trifluoroacétate de 1-éthyl-3-méthylpyridinium ([1-e-3-mpy][TFA]), trifluorométhanesulfonate de 1-éthyl-3-méthylpyridinium ([1-e-3-mpy][TfO]), tétrafluoroborate de 1-éthyl-4-diméthylacétylpyridinium ([1-e-4-DMApy] [BF$_4$]), hexafluorophosphate de 1-éthyl-4-diméthylacétylpyridinium ([1-e-4-DMApy][PF6]) , tétrafluoroborate de 1-éthyl-4-méthylpyridinium ([1-e-4-mpy] [BF$_4$]), trifluoroacétate de 1-éthyl-4-méthylpyridinium ([1-e-4-mpy][TFA]), trifluorométhanesulfonate de 1-éthyl-4-méthylpyridinium ([1-e-4-mpy][TfO]), nitrate de 1-éthyl-4-méthylpyridinium ([1-e-4-mpy][NO$_3$]), tétrafluoroborate de 1-hexyl-4-méthylpyridinium ([1-hx-4-mpy][BF$_4$]), tétrafluoroborate de 1-propyl-3-méthylpyridinium ([1-pr-3-mpy][BF$_4$]), hexafluorophosphate de 1-propyl-3-méthylpyridinium ([1-pr-3-mpy][PF$_6$]), trifluoroacétate de 1-propyl-3-méthylpyridinium ([1-pr-3-mpy][TFA]), trifluorométhanesulfonate de 1-propyl-3-méthylpyridinium ([1-pr-3-mpy][TfO]), tétrafluoroborate de 1-propyl-4-méthylpyridinium ([1-pr-4-mpy][BF$_4$]), hexafluorophosphate de 1-propyl-4-méthylpyridinium ([1-pr-3-mpy][PF$_6$]), trifluoroacétate de 1-propyl-4-méthylpyridinium ([1-pr-4-mpy][TFA]), trifluorométhanesulfonate de 1-propyl-4-méthylpyridinium ([1-pr-4-mpy][TfO]), nitrate de 1-propyl-4-méthylpyridinium ([1-pr-4-mpy][NO$_3$]), hexafluorophosphate de butylpyridinium ([bpy] [PF$_6$]), trifluoroacétate de butylpyridinium([bpy][TFA]), trifluorométhanesulfonate de butylpyridinium ([bpy][TfO]), nitrate de butylpyridinium ([bpy] [NO$_3$]), nitrate d'éthylpyridinium ([epy] [NO$_3$]), tétrafluoroborate d'heptylpyridinium ([hppy][BF$_4$]), hexafluorophosphate d'heptylpyridinium ([hppy] [PF$_6$]), nitrate d'heptylpyridinium ([hppy] [NO$_3$]), tétrafluoroborate d'hexylpyridinium ([hxpy] [BF$_4$]), hexalfuorophosphate d'hexylpyridinium ([hxpy] [PF$_6$]), trifluorométhanesulfonate d'hexylpyridinium ([hxpy][TfO]), nitrate d'hexylpyridinium ([hxpy] [NO$_3$]), méthanesulfonate d'hydroxypropylpyridinium ([OHprpy] [CH$_3$SO$_3$]), tétrafluoroborate d'octylpyridinium ([opy] [BF$_4$]), tétrafluoroborate de pentylpyridinium ([pnpy] [BF$_4$]), hexafluorophosphate de pentylpyridinium ([pnpy][PF$_6$]), trifluoroacétate de pentylpyridinium ([pnpy][TFA]), trifluorométhanesulfonate de pentylpyridinium ([pnpy][TfO]), nitrate de pentylpyridinium ([pnpy] [NO$_3$]), trifluoroacétate de propylpyridinium ([prpy][TFA]), trifluorométhanesulfonate de propylpyridinium ([prpy][TfO]), nitrate de propylpyridinium ([prpy][NO$_3$]), tétrafluoroborate de butylméthylpyrrolidinium ([bmpyr] [BF$_4$]), hexafluorophosphate de butylméthylpyrrolidinium ([bmpyr] [PF$_6$]), trifluorométhanesulfonate de butylméthylpyrrolidinium ([bmpyr][TfO]), acétate de butylpyrrolidinium ([bpyr][CH$_3$CO$_2$]), tétrafluoroborate d'hexylméthylpyrrolidinium ([hxmpyr][BF$_4$]), hexafluorophosphate d'hexylméthylpyrrolidinium ([hxmpyr] [PF$_6$]), acétate d'hexylpyrrolidinium ([hxpyr] [CH$_3$CO$_2$], trifluoroacétate d'hexylpyrrolidinium ([hxpyr] [TFA]), tétrafluoroborate d'octylpyrrolidinium ([opyr][BF$_4$]), méthanesulfonate d'octylpyrrolidinium ([opyr][CH$_3$SO$_3$]), hexafluorophosphate d'octylpyrrolidinium ([opyr][PF$_6$]), nitrate d'octylpyrrolidinium ([opyr][NO$_3$]), tétrafluoroborate de propylméthylpyrrolidinium ([prmpyr] [BF$_4$]), hexafluorophosphate de propylméthylpyrrolidinium ([prmpyr] [PF$_6$]), trifluoroacétate de propylméthylpyrrolidinium ([prmpyr][TFA]), trifluorométhanesulfonate de propylméthylpyrrolidinium ([prmpyr][TfO]) , tétrafluoroborate de butyléthyldiméthylammonium ([bemm-N] [BF$_4$]), hexafluorophosphate de butyléthyldiméthylammonium ([bemm-N][PF$_6$]), trifluoroacétate de butyléthyldiméthylammonium ([bemm-N][TFA]), trifluorométhanesulfonate de butyléthyldiméthylammonium ([bemm-N][TfO]), trifluoroacétate de butyltriméthylammonium ([bmmm-N][TFA]), trifluorométhanesulfonate de butyltriméthylammonium ([bmmm-N][TfO]), nitrate de butyltriméthylammonium ([bmmm-N] [NO$_3$]), méthanesulfonate de N,N,N-triméthyléthanolammonium ([choline] [CH$_3$SO$_3$]), nitrate de N,N,N-triméthyléthanolammonium ([choline] [NO$_3$]), hexafluorophosphate d'éthylammonium ([eN][PF$_6$]), tétrafluoroborate de tétraéthylammonium ([eeee-N] [BF$_4$]), hexafluorophosphate de tétraéthylammonium ([eeee-N] [PF$_6$]), trifluorométhanesulfonate de tétraéthylammonium ([eeee-N][TfO]), trifluoroacétate de butyldiméthyléthanolammonium ([OHe-bmm-N][TFA]), trifluorométhanesulfonate de butyldiméthyléthanolammonium ([OHe-bmm-N][TfO]), nitrate de butyldiméthyléthanolammonium ([OHe-bmm-N][NO$_3$]), nitrate d'éthyldiméthyléthano-

lammonium ([OHe-emm-N][NO$_3$]) ou leurs combinaisons

2. Procédé selon la revendication 1, dans lequel une solubilité totale de l'oléfine dans le solvant liquide ionique est d'environ 0,01 à environ 100 mol/L ; ou
dans lequel une solubilité totale de l'alcane dans le solvant liquide ionique est d'environ 0,01 à environ 10 mol/L.

3. Procédé selon la revendication 1, dans lequel une sélectivité totale du solvant liquide ionique vis-à-vis de l'oléfine sur le propane est d'environ 8 à plus d'environ 300.

4. Procédé selon la revendication 1, dans lequel le solvant liquide ionique comprend un sel d'Ag(I), un sel de Cu(I) ou des combinaisons de ceux-ci, et éventuellement dans lequel une concentration d'argent, de cuivre, ou des deux, dans le solvant liquide ionique est d'environ 0,1 N à environ 5 N, ou d'environ 0,45 N à environ 1,8 N.

5. Procédé selon la revendication 1, dans lequel ladite capture est effectuée à un rapport de débit massique liquide sur gaz d'environ 1 à environ 350 ; ou
dans lequel le procédé comprend en outre : l'écoulement du solvant liquide ionique à un débit massique d'environ 1 000 livres par heure à environ 300 000 livres par heure.

6. Procédé selon la revendication 1, dans lequel ladite capture est effectuée à un rapport de débit massique liquide sur gaz de sorte qu'au moins une partie de l'alcane est capturée par le solvant liquide ionique en plus de la capture d'au moins une partie de l'oléfine.

7. Procédé selon la revendication 6, dans lequel le rapport de débit massique liquide sur gaz est supérieur à environ 15.

8. Procédé selon la revendication 6, dans lequel au moins une partie de l'alcane est capturée par absorption, dissolution, adsorption, complexation ou leurs combinaisons.

9. Procédé selon la revendication 6, comprenant en outre la récupération d'au moins une partie d'un alcane capturé à partir du solvant liquide ionique, et éventuellement dans lequel la récupération d'au moins une partie d'un alcane capturé est effectuée à une température supérieure à la température à laquelle l'alcane est capturé et à une pression inférieure à la pression à laquelle l'alcane est capturé.

10. Procédé selon la revendication 1, dans lequel ladite capture est effectuée à un rapport de débit massique liquide sur gaz de sorte qu'au moins une partie de l'alcane du flux de traitement de traitement n'est pas capturée par le solvant liquide ionique.

11. Procédé selon la revendication 10, dans lequel un rapport de débit massique liquide sur gaz est inférieur à environ 200.

12. Procédé de la revendication 10, comprenant en outre :

l'écoulement d'une partie non capturée de l'alcane vers une unité de membrane ; et
la récupération d'au moins une partie de la partie non capturée de l'alcane à partir de l'unité de membrane.

13. Procédé selon la revendication 1, dans lequel l'oléfine est capturée par le solvant liquide ionique à une température d'environ 20 °C à environ 40 °C ; ou dans lequel l'oléfine est capturée par le solvant liquide ionique à une pression d'environ 100 psia à environ 250 psia.

14. Procédé selon la revendication 1, dans lequel le solvant liquide ionique comprend un cation, un anion et un sel d'Ag(I), dans lequel le sel d'Ag(I) comprend un anion, dans lequel l'anion du sel d'Ag(I) correspond à l'anion du solvant liquide ionique, ou
dans lequel le solvant liquide ionique comprend un cation, un anion et un sel de Cu(I), dans lequel le sel de Cu(I) comprend un anion, dans lequel l'anion du sel de Cu(I) correspond à l'anion du solvant liquide ionique.

FIG. 1

*FIG. 2*

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020063240 A1
- US 20020189444 A1
- US 20080112866 A1
- EP 2016991 A1
- US 20120232232
- US 5556449 A
- US 5558698 A
- US 5407467 A
- US 5401300 A
- US 6572678 B
- US 6555316 B
- US 5980609 A
- US 7479227 B

### Non-patent literature cited in the description

- **MARCOS FALLANZA et al.** Screening of RTILs for propane/propylene separation using COSMO-RS methodology. *CHEM. ENG. J.,* 2013, vol. 284, 284-293